(19)

Europäisches Patentamt

European Patent Office

Office européen des brevets

(11) **EP 4 661 558 A1**

(12) **EUROPEAN PATENT APPLICATION**

published in accordance with Art. 153(4) EPC

(43) Date of publication:
**10.12.2025 Bulletin 2025/50**

(21) Application number: **24756071.7**

(22) Date of filing: **04.02.2024**

(51) International Patent Classification (IPC):
***H04W 72/232*** (2023.01)

(52) Cooperative Patent Classification (CPC):
**H04B 7/0456; H04B 7/06; H04W 72/044;
H04W 72/232**

(86) International application number:
**PCT/CN2024/075818**

(87) International publication number:
**WO 2024/169697 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310192891**

(71) Applicant: **Huawei Technologies Co., Ltd.
Shenzhen, Guangdong 518129 (CN)**

(72) Inventors:
• **XU, Jun
Shenzhen, Guangdong 518129 (CN)**
• **JIN, Huangping
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **DATA TRANSMISSION METHOD AND COMMUNICATION APPARATUS**

(57)    This application provides a data transmission method and a communication apparatus, and relates to the communication field. The method includes: generating and sending first information, where the first information is used by a terminal to send an uplink signal. The first information includes second indication information, and a number of bits occupied by the second indication information is the same as a number of bits occupied by first indication information. The first indication information indicates a first spatial layer number, a first precoding matrix corresponding to the first spatial layer number, a first antenna port set, and an association relationship between the first antenna port set and a second antenna port set, and the first spatial layer number belongs to {1, 2, 3, 4}. The second indication information indicates a second spatial layer number, a second precoding matrix corresponding to the second spatial layer number, a third antenna port set, and an association relationship between the third antenna port set and a fourth antenna port set, and the second spatial layer number belongs to {5, 6, 7, 8}. The method can enable uplink 8Tx and support uplink transmission of a maximum of eight layers of the terminal.

300

| Network device | | Terminal |

S310: Generate first information, where the first information includes first indication information or second indication information

S320: First information

S330: Send an uplink signal based on the first information

FIG. 3

**Description**

This application claims priority to Chinese Patent Application No. 202310192891.4, filed with the China National Intellectual Property Administration on February 17, 2023 and entitled "DATA TRANSMISSION METHOD AND COMMUNICATION APPARATUS", which is incorporated herein by reference in its entirety.

**TECHNICAL FIELD**

This application relates to the communication field, and in particular, to a data transmission method and a communication apparatus.

**BACKGROUND**

In 5th generation (5th generation, 5G) new radio (new radio, NR), a massive multipleinput multiple-output (massive multiple input multiple output, Massive MIMO) technology plays an important role in spectral efficiency of a system. To use a spatial degree of freedom brought by the MIMO technology, a terminal needs to precode data when sending the uplink data.

Currently, indication rules, defined in related standards and technologies, for precoding matrices and antenna port information, support the terminal to have 2 or 4 transmit antenna ports (transmit, Tx), and correspondingly, a maximum uplink spatial layer number supported by each terminal is 2 or 4. A number of transmit antenna ports of the terminal is expected to be increased to 8, and the maximum uplink spatial layer number supported by each terminal is also expected to reach 8, to further increase uplink transmission throughput. Therefore, a new uplink precoding matrix and antenna port information indication method needs to be designed to enable 8Tx and support uplink transmission of a maximum of eight layers of the terminal.

**SUMMARY**

This application provides a data transmission method and a communication apparatus, to enable 8Tx and support uplink transmission of a maximum of eight layers of a terminal.

According to a first aspect, a data transmission method is provided. The method may be performed by a network device (for example, a base station), may be performed by a component (for example, a processor, a chip, or a chip system) of a network device, or may be implemented by a logic module or software that can implement all or some of functions of a network device.

The method includes: generating first information, and sending the first information, where the first information is used by a terminal to send an uplink signal. The first information includes second indication information, and a number of bits occupied by the second indication information is the same as a number of bits occupied by first indication information. The first indication information indicates a first spatial layer number, a first precoding matrix corresponding to the first spatial layer number, a first antenna port set, and an association relationship between the first antenna port set and a second antenna port set, and the first spatial layer number belongs to {1, 2, 3, 4}. The second indication information indicates a second spatial layer number, a second precoding matrix corresponding to the second spatial layer number, a third antenna port set, and an association relationship between the third antenna port set and a fourth antenna port set, and the second spatial layer number belongs to {5, 6, 7, 8}.

According to a second aspect, a data transmission method is provided. The method may be performed by a terminal, may be performed by a component (for example, a processor, a chip, or a chip system) of a terminal, or may be implemented by a logic module or software that can implement all or some of functions of a terminal.

The method includes: receiving first information, and sending an uplink signal based on the first information. The first information includes second indication information, and a number of bits occupied by the second indication information is the same as a number of bits occupied by first indication information. The first indication information indicates a first spatial layer number, a first precoding matrix corresponding to the first spatial layer number, a first antenna port set, and an association relationship between the first antenna port set and a second antenna port set, and the first spatial layer number belongs to {1, 2, 3, 4}. The second indication information indicates a second spatial layer number, a second precoding matrix corresponding to the second spatial layer number, a third antenna port set, and an association relationship between the third antenna port set and a fourth antenna port set, and the second spatial layer number belongs to {5, 6, 7, 8}.

It should be understood that, in the first aspect and the second aspect, a number of antenna ports included in the first antenna port set is a first spatial layer number, a number of antenna ports included in the third antenna port set is a second spatial layer number, and the second antenna port set and the fourth antenna port set each include one or more antenna ports. Antenna ports included in the first antenna port set and the third antenna port set are used for data demodulation. For example, an antenna port used for data demodulation may be a demodulation reference signal (demodulation reference signal, DMRS) port, or may be an antenna port whose function is the same as or similar to that of a DMRS port. Antenna ports included in the second antenna port set and the fourth antenna port set are used for phase noise estimation. For example, an antenna port used for phase noise estimation may be a phase tracking reference signal (phase tracking, PTRS) port, or may be an antenna port whose function is the same as or similar to that of a PTRS port.

It should be further understood that the uplink signal sent by the terminal may include uplink data and a reference signal, where the reference signal may include, for example, a DMRS and a PTRS.

Optionally, the first information may be downlink control information (downlink control information, DCI), or may be information or signaling whose function is the same as or similar to that of DCI.

According to the data transmission method provided in this application, the network device may use a bit that indicates the first spatial layer number, the first precoding matrix corresponding to the first spatial layer number, the first antenna port set, and the association relationship between the first antenna port set and the second antenna port set, to indicate the second spatial layer number, the second precoding matrix corresponding to the second spatial layer number, the third antenna port set, and the association relationship between the third antenna port set and the fourth antenna port set, to enable uplink 8Tx and support uplink transmission of a maximum of eight layers of the terminal.

In addition, if a current indication scheme of enabling uplink 4Tx and supporting uplink transmission of a maximum of four layers of the terminal is simply extended to a scenario of enabling 8Tx and supporting uplink transmission of a maximum of eight layers of the terminal, due to an increase in the spatial layer number, bit overheads for indicating the association relationship between the third antenna port set and the fourth antenna port set are greater than bit overheads for indicating the association relationship between the first antenna port set and the second antenna port set. For example, for codebook (codebook, CB)-based uplink transmission, if the terminal supports a full-coherent precoding matrix, when a maximum uplink spatial layer number is 4, a DMRS port in four DMRS ports that is associated with one PTRS port needs to be indicated. Therefore, 2 bits are required for a PTRS-DMRS association field (a bit field indicating the first antenna port set and the second antenna port set in a current protocol). When a maximum uplink transmission layer number is 8, a DMRS port in eight DMRS ports that is associated with one PTRS port needs to be indicated. Therefore, 3 bits are required for a PTRS-DMRS association field. However, in the method provided in this application, a total number of bits for indicating the spatial layer number, the precoding matrix, and related antenna port information in the scenario in which the spatial layer number is one of 1 to 4 is the same as that in the different scenario in which the spatial layer number is one of 5 to 8. In other words, 8Tx can be enabled and uplink transmission of the maximum of eight layers of the terminal can be supported, without extending the PTRS-DMRS association field. Therefore, compared with simply extending the current indication scheme of enabling uplink 4Tx and supporting uplink transmission of the maximum of four layers of the terminal to the scheme of enabling uplink 8Tx and supporting uplink transmission of the maximum of eight layers of the terminal, the solution provided in this application can reduce bit overheads.

With reference to the first aspect or the second aspect, in a possible implementation, the first information further includes a modulation and coding scheme (modulation coding scheme, MCS) and a redundancy version (redundancy version, RV) that are associated with a first transport block, and a modulation and coding scheme and a redundancy version that are associated with a second transport block; and the MCS and the RV that are associated with the first transport block and the MCS and the RV that are associated with the second transport block indicate to enable the first transport block and the second transport block.

If the MCS and the RV that are associated with the first transport block and the MCS and the RV that are associated with the second transport block indicate to enable the first transport block and the second transport block, it indicates that the spatial layer number is the second spatial layer number. Correspondingly, the terminal may determine, based on whether the MCS and the RV that are associated with the first transport block and the MCS and the RV that are associated with the second transport block enable the first transport block and the second transport block, that the spatial layer number is the second spatial layer number.

With reference to the first aspect or the second aspect, in a possible implementation, the first indication information includes a first field, a second field, and a third field. The first field indicates the first spatial layer number and the first precoding matrix, the second field indicates the first antenna port set, and the third field indicates the association relationship between the first antenna port set and the second antenna port set. The second indication information includes the first field, the second field, and the third field. A first portion of the first field indicates the second spatial layer number and the second precoding matrix, the second field indicates the third antenna port set in a plurality of antenna port sets corresponding to the second spatial layer number, and a second portion of the first field and the third field indicate the association relationship between the third antenna port set and the fourth antenna port set. Alternatively, a first portion of the first field indicates the second precoding matrix, the second field indicates the third antenna port set in a plurality of antenna port sets, numbers of antenna ports included in the plurality of antenna port sets all belong to {5, 6, 7, 8}, a number of antenna ports included in the third antenna port set is the second spatial layer number, and a second portion of the first field and the third field indicate the association relationship between the third antenna port set and the fourth antenna port set.

In this solution, both the first indication information and the second indication information occupy the first field, the second field, and the third field. In other words, the first field, the second field, and the third field may indicate the first indication information, or may indicate the second indication information. However, it should be understood that the first field, the second field, and the third field cannot indicate both the first indication information and the second indication information, and can indicate only one of the first indication information and the second indication information. In two different scenarios in which the spatial layer number is one of 1 to 4 and the spatial layer number is one of 5 to 8, the first field, the second field, and the third field are interpreted in different manners.

Because a number of precoding matrices corresponding to spatial layer number ranging from 5 to 8 is less than a number of precoding matrices corresponding to spatial layer number ranging from 1 to 4, when the first field indicates the second spatial layer number and the second precoding matrix, some bits can be left. The third field and the remaining bits in the first field are used together to indicate the association relationship between the third antenna port set and the fourth antenna port set, and a bit field indicating the first antenna port set and the second antenna port set can still be used, and does not need to be extended. This can reduce bit overheads.

With reference to the first aspect or the second aspect, in a possible implementation, the first indication information includes a first field, a second field, a third field, and a new data indicator (new data indicator, NDI) associated with an un-enabled transport block in the first transport block and the second transport block. The NDI and the first field indicate the first spatial layer number and the first precoding matrix, the second field indicates the first antenna port set, and the third field indicates the association relationship between the first antenna port set and the second antenna port set. The second indication information includes the first field, the second field, and the third field. A first portion of the first field indicates the second spatial layer number and the second precoding matrix, the second field indicates the third antenna port set in a plurality of antenna port sets corresponding to the second spatial layer number, and a second portion of the first field and the third field indicate the association relationship between the third antenna port set and the fourth antenna port set. Alternatively, a first portion of the first field indicates the second precoding matrix, the second field indicates the third antenna port set in a plurality of antenna port sets, numbers of antenna ports included in the plurality of antenna port sets all belong to {5, 6, 7, 8}, a number of antenna ports included in the third antenna port set is the second spatial layer number, and a second portion of the first field and the third field indicate the association relationship between the third antenna port set and the fourth antenna port set.

In this solution, if the spatial layer number is one of 1 to 4, only one of the two transport blocks is correspondingly enabled. In this case, an NDI associated with the un-enabled transport block is considered as unused information. In this solution, the NDI is reused, so that 1-bit overheads of the first field can be reduced. In addition, because a number of precoding matrices corresponding to spatial layer number ranging from 5 to 8 is less than a number of precoding matrices corresponding to spatial layer number ranging from 1 to 4, when the first field indicates the second spatial layer number and the second precoding matrix, some bits can be left. The third field and the remaining bits in the first field are used together to indicate the association relationship between the third antenna port set and the fourth antenna port set, and a bit field indicating the first antenna port set and the second antenna port set can still be used, and does not need to be extended. This can reduce bit overheads.

It should be understood that, in this solution, the first field, the second field, and the third field cannot indicate both the first indication information and the second indication information, and can indicate only one of the first indication information and the second indication information. In two different scenarios in which the spatial layer number is one of 1 to 4 and the spatial layer number is one of 5 to 8, the first field, the second field, and the third field are interpreted in different manners.

With reference to the first aspect or the second aspect, in a possible implementation, the first indication information includes a first field, a second field, and a third field. The first field indicates the first spatial layer number and the first precoding matrix, the second field indicates the first antenna port set, and the third field indicates the association relationship between the first antenna port set and the second antenna port set. The second indication information includes the first field, the second field, and the third field. The first field indicates the second spatial layer number and the second precoding matrix. A first portion of the second field indicates the third antenna port set in a plurality of antenna port sets corresponding to the second spatial layer number, and a second portion of the second field and the third field indicate the association relationship between the third antenna port set and the fourth antenna port set. Alternatively, the first field indicates the second precoding matrix, a first portion of the second field indicates the third antenna port set in a plurality of antenna port sets, numbers of antenna ports included in the plurality of antenna port sets all belong to {5, 6, 7, 8}, a number of antenna ports included in the third antenna port set is the second spatial layer number, and a second portion of the second field and the third field indicate the association relationship between the third antenna port set and the fourth antenna port set.

When the spatial layer number is any one of 1 to 4, there are a relatively large number of corresponding antenna port (for example, DMRS port) combinations, and 4 bits are usually required for indication. When the spatial layer number is any one of 5 to 8, there are a relatively small number of corresponding antenna port (for example, DMRS port) combinations, and there are usually one or two antenna port combinations. In this case, only a maximum of 2 bits are required for indication. Therefore, when the second field indicates the third antenna port set, some bits can be left. The third field and the remaining bits in the second field are used together to indicate the association relationship between the third antenna port set and the fourth antenna port set, and a bit field indicating the first antenna port set and the second antenna port set can still be used, and does not need to be extended. This can reduce bit overheads.

It should be understood that, in this solution, the first field, the second field, and the third field cannot indicate both the first indication information and the second indication information, and can indicate only one of the first indication information and the second indication information. In two different scenarios in which the spatial layer number is one of 1 to 4 and the spatial layer number is one of 5 to 8, the first field, the second field, and the third field are interpreted in different manners.

With reference to the first aspect or the second aspect, in a possible implementation, the first indication information includes a first field, a second field, and a third field. The first indication information includes a first field, a second field, a third field, and a new data indicator NDI associated with an un-enabled transport block in the first transport block and the second transport block, where the NDI and the first field indicate the first spatial layer number and the first precoding matrix, the second field indicates the first antenna port set, and the third field indicates the association relationship between the first antenna port set and the second antenna port set. The second indication information includes the first field, the second field, and the third field. The first field indicates the second spatial layer number and the second precoding matrix. A first portion of the second field indicates the third antenna port set in a plurality of antenna port sets corresponding to the second spatial layer number, and a second portion of the second field and the third field indicate the association relationship between the third antenna port set and the fourth antenna port set. Alternatively, the first field indicates the second precoding matrix, a first portion of the second field indicates the third antenna port set in a plurality of antenna port sets, numbers of antenna ports included in the plurality of antenna port sets all belong to {5, 6, 7, 8}, a number of antenna ports included in the third antenna port set is the second spatial layer number, and a second portion of the second field and the third field indicate the association relationship between the third antenna port set and the fourth antenna port set.

In this solution, if the spatial layer number is one of 1 to 4, only one of the two transport blocks is correspondingly enabled. In this case, an NDI associated with the un-enabled transport block is considered as unused information. In this solution, the NDI is reused, so that 1-bit overheads of the first field can be reduced. In addition, when the spatial layer number is any one of 1 to 4, there are a relatively large number of corresponding antenna port (for example, DMRS port) combinations, and 4 bits are usually required for indication. When the spatial layer number is any one of 5 to 8, there are a relatively small number of corresponding antenna port (for example, DMRS port) combinations, and there are usually one or two antenna port combinations. In this case, only a maximum of 2 bits are required for indication. Therefore, when the second field indicates the third antenna port set, some bits can be left. The third field and the remaining bits in the second field are used together to indicate the association relationship between the third antenna port set and the fourth antenna port set, and a bit field indicating the first antenna port set and the second antenna port set can still be used, and does not need to be extended. This can reduce bit overheads.

It should be understood that, in this solution, the first field, the second field, and the third field cannot indicate both the first indication information and the second indication information, and can indicate only one of the first indication information and the second indication information. In two different scenarios in which the spatial layer number is one of 1 to 4 and the spatial layer number is one of 5 to 8, the first field, the second field, and the third field are interpreted in different manners.

With reference to the first aspect or the second aspect, in a possible implementation, the second field is an antenna port (antenna port) field, and/or the third field is a PTRS-DMRS association (association) field.

With reference to the first aspect or the second aspect, both the first precoding matrix and the second precoding matrix are full-coherent precoding matrices or partial-coherent precoding matrices.

With reference to the first aspect or the second aspect, in a possible implementation, that the first field indicates the first spatial layer number and the first precoding matrix includes: The first field indicates the first spatial layer number and a first transmitted precoding matrix indicator (transmitted precoding matrix indicator, TPMI), and the first TPMI indicates the first precoding matrix. In addition, that the first portion of the first field indicates the second spatial layer number and the second precoding matrix includes: A portion of the first field indicates the second spatial layer number and a second TPMI, and the second TPMI indicates the second precoding matrix. In this solution, the spatial layer number and the precoding matrix are separately indicated. The TPMI indicated by the first field may be one of a plurality of TPMIs corresponding to the spatial layer number.

With reference to the first aspect or the second aspect, in a possible implementation, that the first field indicates the first spatial layer number and the first precoding matrix includes: The first field indicates a first index, the first index indicates the first spatial layer number and a first TPMI, and the first TPMI indicates the first precoding matrix. In addition, that the first portion of the first field indicates the second spatial layer number and the second precoding matrix includes: The first portion of the first field indicates a second index, the second index indicates the second spatial layer number and a second TPMI, and the second TPMI indicates the second precoding matrix. In this solution, the spatial layer number and the precoding matrix are jointly indicated.

With reference to the first aspect or the second aspect, in a possible implementation, that the first field and the NDI indicate the first spatial layer number and the first precoding matrix includes: The first field and the NDI indicate the first spatial layer number and a first TPMI, and the first TPMI indicates the first precoding matrix. In addition, that the first portion of the first field indicates the second spatial layer number and the second precoding matrix includes: A portion of the first field indicates the second spatial layer number and a second TPMI, and the second TPMI indicates the second precoding matrix. In this solution, the spatial layer number and the precoding matrix are separately indicated. The TPMI indicated by the first field may be one of a plurality of TPMIs corresponding to the spatial layer number.

With reference to the first aspect or the second aspect, in a possible implementation, that the first field and the NDI indicate the first spatial layer number and the first precoding matrix includes: The first field and the NDI indicate a first index, the first index indicates the first spatial layer number and a first TPMI, and the first TPMI indicates the first precoding matrix. In addition, that the first portion of the first field indicates the second spatial layer number and the second precoding matrix includes: The first portion of the first field indicates a second index, the second index indicates the second spatial layer number and a second TPMI, and the second TPMI indicates the second precoding matrix. In this solution, the spatial layer number and the precoding matrix are jointly indicated.

With reference to the first aspect or the second aspect, in a possible implementation, the first TPMI is one TPMI in a first TPMI set corresponding to the first spatial layer number, and the second TPMI is one TPMI in a second TPMI set corresponding to the second spatial layer number, where a number of rows of a precoding matrix indicated by each TPMI in the first TPMI set and a number of rows of a precoding matrix indicated by each TPMI in the second TPMI set are both 8. When the first spatial layer number is 1, a precoding matrix $\mathbf{P}$ indicated by each TPMI in the first TPMI set satisfies Formula (1) or Formula (2) below, where a number of columns of $\mathbf{P_1}$ is 1. When the first spatial layer number is 2, 3, or 4, a precoding matrix $\mathbf{P}$ indicated by each TPMI in the first TPMI set satisfies Formula (1), Formula (2), or Formula (3), where $\mathbf{P_1}$ in each of Formula (1) and Formula (2) is a full-coherent precoding matrix whose spatial layer number is the first spatial layer number, a sum of numbers of columns of $\mathbf{P_1}$ and $\mathbf{P_2}$ in Formula (3) is the first spatial layer number, and a number of columns of each of $\mathbf{P_1}$ and $\mathbf{P_2}$ can only be 1, 2, 3, or 4. When the first spatial layer number is 5, 6, 7, or 8, a precoding matrix $\mathbf{P}$ indicated by each TPMI in the second TPMI set satisfies Formula (3) below, where a sum of numbers of columns of $\mathbf{P_1}$ and $\mathbf{P_2}$ in Formula (3) is the second spatial layer number, and a number of columns of each of $\mathbf{P_1}$ and $\mathbf{P_2}$ can only be 1, 2, 3, or 4. $\mathbf{P_1}$ is a full-coherent precoding matrix whose spatial layer number is equal to a number of columns of the full-coherent precoding matrix, and $\mathbf{P_2}$ is a full-coherent precoding matrix whose spatial layer number is equal to a number of columns of the full-coherent precoding matrix. Alternatively, $\mathbf{P_1}$ is a partial-coherent precoding matrix whose spatial layer number is equal to a number of columns of the partial-coherent precoding matrix, and $\mathbf{P_2}$ is a partial-coherent precoding matrix whose spatial layer number is equal to a number of columns of the partial-coherent precoding matrix. Formula (1): $\mathbf{P} = \begin{bmatrix} \mathbf{P_1} \\ \mathbf{0} \end{bmatrix}$, Formula (2): $\mathbf{P} = \begin{bmatrix} \mathbf{0} \\ \mathbf{P_1} \end{bmatrix}$, and Formula (3): $\mathbf{P} = \begin{bmatrix} \mathbf{P_1} & \mathbf{0} \\ \mathbf{0} & \mathbf{P_2} \end{bmatrix}$, where $\mathbf{0}$ is a zero matrix.

With reference to the first aspect or the second aspect, in a first possible implementation, that the first field indicates the first spatial layer number and the first precoding matrix includes: The first field indicates a first sounding reference signal (sounding reference signal, SRS) resource indicator (SRS source indicator, SRI), the first SRI indicates a first SRS resource set, the first SRS resource set includes a first spatial layer number of SRS resources, and the first spatial layer number of SRS resources indicate the first precoding matrix. The first field indicates the second spatial layer number and the second precoding matrix, the first field indicates a second SRI, the second SRI indicates a second SRS resource set, the second SRS resource set includes a second spatial layer number of SRS resources, and the second spatial layer number of SRS resources indicate the second precoding matrix.

With reference to the first aspect or the second aspect, in a first possible implementation, that the first field indicates the first spatial layer number and the first precoding matrix includes: When the first spatial layer number is 1, the first field indicates the first spatial layer number, the first TPMI, and a structure of the first precoding matrix, and the structure of the first precoding matrix satisfies one of the following two structures: $\mathbf{P} = \begin{bmatrix} \mathbf{P_1} \\ \mathbf{0} \end{bmatrix}$, and $\mathbf{P} = \begin{bmatrix} \mathbf{0} \\ \mathbf{P_1} \end{bmatrix}$, where $\mathbf{P}$ is the first precoding matrix, a number of rows of $\mathbf{P}$ is 8, $\mathbf{P_1}$ is a precoding matrix that is indicated by the first TPMI and whose spatial layer number is 1, $\mathbf{P_1}$ is a 4* 1 matrix, and 0 is a zero matrix; or when the first spatial layer number is not 1, the first field indicates the first spatial layer number, the first TPMI, and the second TPMI, and the first precoding matrix satisfies:

$$P = \begin{bmatrix} P_1 & 0 \\ 0 & P_2 \end{bmatrix}$$ , where $P$ is the first precoding matrix, a number of rows of $P$ is 8, $P_1$ is a precoding matrix indicated by the first TPMI, $P_2$ is a precoding matrix indicated by the second TPMI, a sum of a spatial layer number corresponding to the precoding matrix indicated by the first TPMI and a spatial layer number corresponding to the precoding matrix indicated by the second TPMI is the first spatial layer number, a difference between the two spatial layer numbers is 0 or -1, and 0 is a zero matrix. That the first portion of the first field indicates the second spatial layer number and the second precoding matrix includes: The second field indicates the second spatial layer number, the first TPMI, and the second TPMI, and the second precoding matrix satisfies: $$P = \begin{bmatrix} P_1 & 0 \\ 0 & P_2 \end{bmatrix}$$ , where $P$ is the second precoding matrix, a number of rows of $P$ is 8, $P_1$ is a precoding matrix indicated by the first TPMI, $P_2$ is a precoding matrix indicated by the second TPMI, a sum of a spatial layer number corresponding to the precoding matrix indicated by the first TPMI and a spatial layer number corresponding to the precoding matrix indicated by the second TPMI is the second spatial layer number, a difference between the two spatial layer numbers is 0 or -1, and 0 is a zero matrix.

With reference to the first aspect or the second aspect, in a first possible implementation, that the first field indicates the first spatial layer number and the first precoding matrix includes: When the first spatial layer number is 1, the first field indicates the first spatial layer number, the first TPMI, and a structure of the first precoding matrix, and the structure of the first precoding matrix satisfies one of the following two structures: $$P = \begin{bmatrix} P_1 \\ 0 \end{bmatrix}$$ ; and $$P = \begin{bmatrix} 0 \\ P_1 \end{bmatrix}$$ , where $P$ is the first precoding matrix, a number of rows of $P$ is 8, $P_1$ is a precoding matrix that is indicated by the first TPMI and whose spatial layer number is 1, $P_1$ is a 4*1 matrix, and 0 is a zero matrix; or when the first spatial layer number is not 1, the first field indicates the first spatial layer number, the first TPMI, and the second TPMI, and the first precoding matrix satisfies: $$P = \begin{bmatrix} P_1 & 0 \\ 0 & P_2 \end{bmatrix}$$ , where $P$ is the first precoding matrix, a number of rows of $P$ is 8, $P_1$ is a precoding matrix indicated by the first TPMI, $P_2$ is a precoding matrix indicated by the second TPMI, a sum of a spatial layer number corresponding to the precoding matrix indicated by the first TPMI and a spatial layer number corresponding to the precoding matrix indicated by the second TPMI is the first spatial layer number, a difference between the two spatial layer numbers is 0, 1, or -1, and 0 is a zero matrix. When the first spatial layer number is 3, the first field is further used to determine the spatial layer number corresponding to the precoding matrix indicated by the first TPMI or the spatial layer number corresponding to the precoding matrix indicated by the second TPMI. That the first portion of the first field indicates the second spatial layer number and the second precoding matrix includes: The second field indicates the second spatial layer number, the first TPMI, and the second TPMI, and the second precoding matrix satisfies: $$P = \begin{bmatrix} P_1 & 0 \\ 0 & P_2 \end{bmatrix}$$ , where $P$ is the second precoding matrix, a number of rows of $P$ is 8, $P_1$ is a precoding matrix indicated by the first TPMI, $P_2$ is a precoding matrix indicated by the second TPMI, a sum of a spatial layer number corresponding to the precoding matrix indicated by the first TPMI and a spatial layer number corresponding to the precoding matrix indicated by the second TPMI is the second spatial layer number, a difference between the two spatial layer numbers is 0 or -1, and 0 is a zero matrix. When the second spatial layer number is an odd number, the first portion of the first field is further used to determine the spatial layer number corresponding to the precoding matrix indicated by the first TPMI or the spatial layer number corresponding to the precoding matrix indicated by the second TPMI.

According to a third aspect, a data transmission method is provided. The method may be performed by a network device (for example, a base station), may be performed by a component (for example, a processor, a chip, or a chip system) of a network device, or may be implemented by a logic module or software that can implement all or some of functions of a network device.

The method includes: sending first indication information, where the first indication information is used by a terminal to send uplink data. The first indication information includes a new data indicator NDI associated with an un-enabled transport block in a first transport block and a second transport block, the first indication information indicates a first spatial layer number, a first precoding matrix corresponding to the first spatial layer number, a first antenna port set, and an association relationship between the first antenna port set and a second antenna port set, and the first spatial layer number belongs to {1, 2, 3, 4}.

According to a fourth aspect, a data transmission method is provided. The method may be performed by a terminal, may be performed by a component (for example, a processor, a chip, or a chip system) of a terminal, or may be implemented by a logic module or software that can implement all or some of functions of a terminal.

The method includes: receiving first indication information, and sending an uplink signal based on the first indication information. The first indication information includes a new data indicator NDI associated with an un-enabled transport block in a first transport block and a second transport block, the first indication information indicates a first spatial layer number, a first precoding matrix corresponding to the first spatial layer number, a first antenna port set, and an association relationship between the first antenna port set and a second antenna port set, and the first spatial layer number belongs to {1, 2, 3, 4}.

It should be understood that, in the third aspect and the fourth aspect, a number of antenna ports included in the first antenna port set is the first spatial layer number, and the second antenna port set includes one or more antenna ports. The first antenna port set and an antenna port included in the first antenna port set are used for data demodulation. For example, an antenna port used for data demodulation may be a DMRS port, or may be an antenna port whose function is the same as or similar to that of a DMRS port. The antenna port included in the second antenna port set is used for phase noise estimation. For example, an antenna port used for phase noise estimation may be a PTRS port, or may be an antenna port whose function is the same as or similar to that of a PTRS port.

It should be further understood that the uplink signal sent by the terminal may include uplink data and a reference signal, where the reference signal may include, for example, a DMRS and a PTRS.

Optionally, the first indication information may be sent via DCI, or may be sent via information or signaling whose function is the same as or similar to that of DCI.

According to the data transmission method provided in this application, if the spatial layer number is one of 1 to 4, only one of the two transport blocks is correspondingly enabled. In this case, an NDI associated with the un-enabled transport block is considered as unused information. In this solution, the NDI is reused in comparison with a manner of setting a specific bit field to indicate the first spatial layer number and a second precoding matrix, so that 1-bit overheads can be reduced.

With reference to the third aspect, in a possible implementation, the method further includes: sending second indication information, where the second indication information is used by the terminal to send the uplink data. A bit occupied by the second indication information is a bit other than the NDI in bits occupied by the first control information. The second indication information indicates a second spatial layer number, a second precoding matrix corresponding to the second spatial layer number, a third antenna port set, and an association relationship between the third antenna port set and a fourth antenna port set, and the second spatial layer number belongs to {5, 6, 7, 8}.

With reference to the fourth aspect, in a possible implementation, the method further includes: receiving second indication information, and sending the uplink signal based on the second indication information. A bit occupied by the second indication information is a bit other than the NDI in bits occupied by the first control information. The second indication information indicates a second spatial layer number, a second precoding matrix corresponding to the second spatial layer number, a third antenna port set, and an association relationship between the third antenna port set and a fourth antenna port set, and the second spatial layer number belongs to {5, 6, 7, 8}.

It should be understood that a number of antenna ports included in the third antenna port set is the second spatial layer number, and the fourth antenna port set includes one or more antenna ports. An antenna port included in the third antenna port set is used for data demodulation. For example, an antenna port used for data demodulation may be a DMRS port, or may be an antenna port whose function is the same as or similar to that of a DMRS port. The antenna port included in the fourth antenna port set is used for phase noise estimation. For example, an antenna port used for phase noise estimation may be a PTRS port, or may be an antenna port whose function is the same as or similar to that of a PTRS port.

Optionally, the second indication information may be sent via DCI, or may be sent via information or signaling whose function is the same as or similar to that of DCI.

In the foregoing solution, the network device may use a bit that indicates the first spatial layer number, the first precoding matrix corresponding to the first spatial layer number, the first antenna port set, and the association relationship between the first antenna port set and the second antenna port set, to indicate the second spatial layer number, the second precoding matrix corresponding to the second spatial layer number, the third antenna port set, and the association relationship between the third antenna port set and the fourth antenna port set, to enable uplink 8Tx and support uplink transmission of a maximum of eight layers of the terminal.

In addition, if a current indication scheme of enabling uplink 4Tx and supporting uplink transmission of a maximum of four layers of the terminal is simply extended to a scenario of enabling 8Tx and supporting uplink transmission of a maximum of eight layers of the terminal, due to an increase in the spatial layer number, bit overheads for indicating the association relationship between the third antenna port set and the fourth antenna port set are greater than bit overheads for indicating the association relationship between the first antenna port set and the second antenna port set. For example, for codebook (codebook, CB)-based uplink transmission, if the terminal supports a full-coherent precoding matrix, when a maximum uplink spatial layer number is 4, a DMRS port in four DMRS ports that is associated with one PTRS port needs to be indicated. Therefore, 2 bits are required for a PTRS-DMRS association field (a bit field indicating the first antenna port set and the second antenna port set in a current protocol). When a maximum uplink transmission layer number is 8, a DMRS port in eight DMRS ports that is associated with one PTRS port needs to be indicated. Therefore, 3 bits are required for a PTRS-DMRS association field. However, in the method provided in this application, a total number of bits for indicating the spatial layer number, the precoding matrix, and related antenna port information in the scenario in which the spatial layer number is one of 1 to 4 is the same as that in the different scenario in which the spatial layer number is one of 5 to 8. In other words, 8Tx can be enabled and uplink transmission of the maximum of eight layers of the terminal can be supported, without extending the PTRS-DMRS association field. Therefore, compared with simply extending the current indication scheme of enabling uplink 4Tx and supporting uplink transmission of the maximum of four layers of the terminal to the scheme of enabling uplink 8Tx and supporting uplink transmission of the maximum of eight layers of the terminal, the solution provided in this application can reduce bit overheads.

In this solution, if the spatial layer number is one of 1 to 4, only one of the two transport blocks is correspondingly enabled. In this case, an NDI associated with the un-enabled transport block is considered as unused information. In this solution, the NDI is reused in comparison with a manner of setting a specific bit field to indicate the first spatial layer number and the second precoding matrix, so that 1-bit overheads can be reduced.

For how the NDI, a first field, a second field, and a third field specifically indicate corresponding content, refer to the corresponding descriptions in the first aspect and the second aspect. Details are not described herein again.

According to a fifth aspect, a communication apparatus is provided, including a module or a unit configured to perform the method in any one of the first aspect or the possible implementations of the first aspect.

According to a sixth aspect, a communication apparatus is provided, including a module or a unit configured to perform the method in any one of the second aspect or the possible implementations of the second aspect.

According to a seventh aspect, a communication apparatus is provided, including a module or a unit configured to perform the method in any one of the third aspect or the possible implementations of the third aspect.

According to an eighth aspect, a communication apparatus is provided, including a module or a unit configured to perform the method in any one of the fourth aspect or the possible implementations of the fourth aspect.

According to a ninth aspect, a communication apparatus is provided, including a processor, where the processor is coupled to a memory, the memory is configured to store a computer program or instructions, and the processor is configured to execute the computer program or the instructions stored in the memory, to implement the method in any one of the first aspect or the possible implementations of the first aspect or the method in any one of the third aspect or the possible implementations of the third aspect.

In a possible implementation, the apparatus further includes the memory coupled to the processor.

In a possible implementation, there are one or more processors and/or one or more memories.

In a possible implementation, the memory and the processor may be integrated together, or the memory and the processor are disposed separately.

In a possible implementation, the apparatus further includes a communication interface, and the processor is coupled to the communication interface.

In an implementation, the apparatus is a network device. For example, the communication interface may be a transceiver or an input/output interface.

In another implementation, the apparatus is a chip of a network device. For example, the communication interface may be an input/output interface.

According to a tenth aspect, a communication apparatus is provided, including a processor, where the processor is coupled to a memory, the memory is configured to store a computer program or instructions, and the processor is configured to execute the computer program or the instructions stored in the memory, to implement the method in any one of the second aspect or the possible implementations of the second aspect or the method in any one of the fourth aspect or the possible implementations of the fourth aspect.

In a possible implementation, the apparatus further includes the memory coupled to the processor.

In a possible implementation, there are one or more processors and/or one or more memories.

In a possible implementation, the memory and the processor may be integrated together, or the memory and the processor are disposed separately.

In a possible implementation, the apparatus further includes a communication interface, and the processor is coupled to the communication interface.

In an implementation, the apparatus is a terminal. For example, the communication interface may be a transceiver or an input/output interface.

In another implementation, the apparatus is a chip in a terminal. For example, the communication interface may be an input/output interface.

According to an eleventh aspect, a processor is provided, including an input circuit, an output circuit, and a processing circuit. The processing circuit is configured to: receive a signal via the input circuit, and transmit a signal via the output circuit, to enable the processor to perform the method in any one of the foregoing aspects or the possible implementations of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a twelfth aspect, a communication system is provided. The communication system includes at least one of the communication apparatus provided in the fifth aspect and the communication apparatus provided in the sixth aspect, or includes at least one of the communication apparatus provided in the seventh aspect and the communication apparatus provided in the eighth aspect, or includes at least one of the communication apparatus provided in the ninth aspect and the communication apparatus provided in the tenth aspect.

According to a thirteenth aspect, a computer program product is provided. The computer program product includes a computer program (which may also be referred to as code or instructions). When the computer program is run, a computer is enabled to perform the method in any one of the foregoing aspects or the possible implementations of the foregoing aspects.

According to a fourteenth aspect, a computer-readable storage medium is provided. The computer-readable storage medium stores a computer program (which may also be referred to as code or instructions). When the computer program is run on a computer, the computer is enabled to perform the method in any one of the foregoing aspects or the possible implementations of the foregoing aspects.

According to a fifteenth aspect, a chip is provided. The chip includes a processor, configured to invoke a computer program from a memory and run the computer program, to enable a communication apparatus on which the chip is installed to perform the method in any one of the foregoing aspects or the possible implementations of the foregoing aspects.

## BRIEF DESCRIPTION OF DRAWINGS

FIG. 1 is a diagram of a communication system according to an embodiment of this application;
FIG. 2 is a schematic flowchart of NCB-based uplink transmission according to an embodiment of this application;
FIG. 3 is a schematic flowchart of a data transmission method according to an embodiment of this application;
FIG. 4 to FIG. 14 are diagrams of formats of first information according to an embodiment of this application;
FIG. 15 is a block diagram of a communication apparatus according to an embodiment of this application;
FIG. 16 is a block diagram of another communication apparatus according to an embodiment of this application;
FIG. 17 is a diagram of a structure of a terminal according to an embodiment of this application;
FIG. 18 is a diagram of a structure of a network device according to an embodiment of this application; and
FIG. 19 is a diagram of a structure of another network device according to an embodiment of this application.

## DESCRIPTION OF EMBODIMENTS

The following describes the technical solutions in embodiments of this application with reference to accompanying drawings in embodiments of this application.

In the descriptions of this application, unless otherwise specified, "/" indicates that associated objects are in an "or" relationship. For example, A/B may represent A or B. The term "and/or" in this specification describes only an association relationship for describing associated objects and represents that three relationships may exist. For example, A and/or B may represent the following three cases: Only A exists, both A and B exist, and only B exists. A and B each may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a number or an execution sequence, and the terms such as "first" and "second" do not indicate a definite difference. In addition, it should be understood that in this application, descriptions similar to "in a case of...", "if...", "when...", "it is assumed that...", and the like may be used interchangeably.

The technical solutions in embodiments of this application may be applied to various communication systems, for example, a long term evolution (long term evolution, LTE) system, a 5th generation (5th Generation, 5G) mobile communication system, new radio (New Radio, NR), and another mobile communication system (for example, a 6G mobile communication system) that may appear in the future.

A terminal in embodiments of this application may be user equipment (user equipment, UE), a station (station), an access terminal, a subscriber unit, a subscriber station, a mobile station, a remote station, a remote terminal, a mobile device, a user terminal, a terminal, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a large screen, a vehicle-mounted device, a wearable device, a terminal in a 5G network, a terminal in a future evolved public land mobile network (public land mobile network, PLMN), or the like. This is not limited in embodiments of this application. In this application, the terminal and a chip or chip system that may be disposed in the terminal are collectively referred to as a terminal.

A network device in embodiments of this application may be a device configured to communicate with the terminal. For example, the network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, or an access point (access point, AP) in a Wi-Fi system. For another example, the network device may alternatively be a module or unit that completes some functions of a base station, for example, may be a central unit (central unit, CU) or a distributed unit (distributed unit, DU). For still another example, the network device may alternatively be a radio controller in a cloud radio access network (cloud radio access network, CRAN) scenario, a relay station, an access point, a vehicle-mounted device, a wearable device, or an access network device in another future evolved communication system. A specific technology and a specific device form that are used by the network device are not limited in this application. In this application, the network device and a chip or chip system that may be disposed in the network device are collectively referred to as a network device.

In embodiments of this application, the terminal or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal or the network device, or may be a functional module that is in the terminal or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

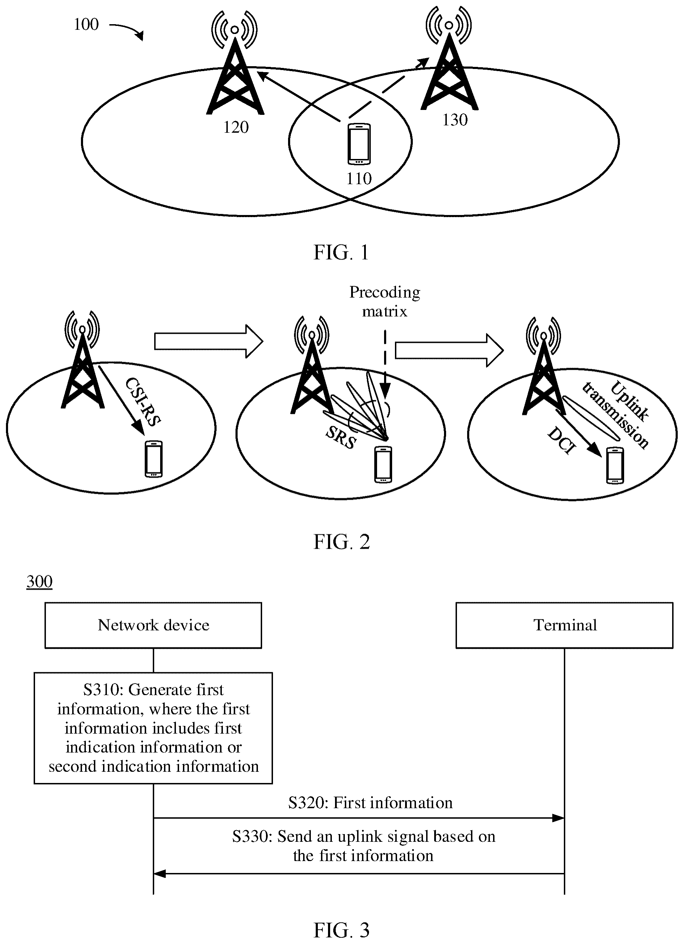

FIG. 1 is a diagram of a communication system to which this application is applicable. As shown in FIG. 1, the communication system 100 may include a terminal 110 and a network device 120. A plurality of antennas may be configured for the terminal 110, and a plurality of antennas may also be configured for the network device 120. Optionally, the communication system 100 may further include a network device 130. A plurality of antennas may also be configured for the network device 130. It should be understood that the communication system shown in FIG. 1 may further include more network nodes, for example, more terminals or network devices. The network nodes are not shown one by one in the figure in this embodiment of this application.

The terminal 110 may send an uplink signal to a same network device (for example, the network device 120) or different network devices (for example, the network device 120 and the network device 130) through a plurality of antennas. In addition, the network device (for example, the network device 120 and/or the network device 130) may send a downlink signal to the terminal 110.

For ease of understanding, the following first describes related technologies in embodiments of this application.

In a MIMO technology, interference between a plurality of users and interference between a plurality of signal streams (that is, symbols obtained through layer mapping) of a same user may be reduced through precoding. Precoding for uplink transmission supports two types of transmission schemes: a codebook (codebook, CB)-based uplink transmission scheme and a non-codebook (non-codebook, NCB)-based uplink transmission scheme.

1. Codebook-based uplink transmission scheme

For the CB-based uplink transmission scheme, after calculating an uplink precoding matrix and an uplink spatial layer number for each terminal based on uplink channel information of the terminal, a network device needs to indicate the precoding matrix and the spatial layer number to a terminal. Because all elements in the calculated uplink precoding matrix are consecutive, overheads of direct indication are excessively high. A precoding matrix set corresponding to each spatial layer number is defined in an existing protocol (because each spatial layer number usually corresponds to a plurality of precoding matrices, for ease of understanding, one spatial layer number corresponds to one precoding matrix set below), to reduce the indication overheads. One precoding matrix set includes a plurality of predefined precoding matrices. The network device selects a closest precoding matrix from a precoding matrix set based on the calculated uplink precoding matrix and uplink spatial layer number, and indicates the precoding matrix and the uplink spatial layer number to the terminal via a precoding information and number of layers (Precoding information and number of layers) field in downlink control information (downlink, DCI).

The 3GPP NR R16 protocol (3GPP TS 38.212 V16.7.0) defines a precoding matrix set for a terminal with 2 or 4 transmit antenna ports, to support uplink transmission of one to four layers. For example, Table 1 to Table 4 are examples of precoding matrix sets for a terminal that has 4 transmit antenna ports and whose uplink spatial layer numbers are 1 to 4. In the precoding matrix set, a coherence capability of the terminal that includes a non-coherent capability, a partial-coherent capability, and a full-coherent capability is considered, where antenna ports {1, 3} and {2, 4} form two coherent pairs. It should be understood that each column of a non-coherent precoding matrix has only one non-zero element, each column of a partial-coherent precoding matrix has a maximum of two non-zero elements and at least one column of the partial-coherent precoding matrix includes two non-zero elements, and all elements of a full-coherent precoding matrix are non-zero elements. For example, in Table 1, TPMIs 0 to 3 correspond to non-coherent codewords, TPMIs 4 to 11 correspond to partial-coherent codewords, and TPMIs 12 to 27 correspond to full-coherent codewords.

Table 1 Spatial layer number=1

| TPMI index | Precoding matrices W (sorted from left to right in ascending order of TPMI indexes) | | | | | | | |
|---|---|---|---|---|---|---|---|---|
| 0 to 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 to 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| 16 to 23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24 to 27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

Table 2 Spatial layer number=2

| TPMI index | Precoding matrices W (sorted from left to right in ascending order of TPMI indexes) | | | |
|---|---|---|---|---|
| 0 to 3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 4 to 7 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ |
| 8 to 11 | $\frac{1}{2}\begin{bmatrix}1&0\\0&1\\-j&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\-1&0\\0&-j\end{bmatrix}$ | $\frac{1}{2}\begin{bmatrix}1&0\\0&1\\-1&0\\0&j\end{bmatrix}$ |
| 12 to 15 | $\frac{1}{2}\begin{bmatrix}1&0\\0&1\\j&0\\0&1\end{bmatrix}$ | $\frac{1}{2}\begin{bmatrix}1&0\\0&1\\j&0\\0&-1\end{bmatrix}$ | $\frac{1}{2\sqrt{2}}\begin{bmatrix}1&1\\1&1\\1&-1\\1&-1\end{bmatrix}$ | $\frac{1}{2\sqrt{2}}\begin{bmatrix}1&1\\1&1\\j&-j\\j&-j\end{bmatrix}$ |
| 16 to 19 | $\frac{1}{2\sqrt{2}}\begin{bmatrix}1&1\\j&j\\1&-1\\j&-j\end{bmatrix}$ | $\frac{1}{2\sqrt{2}}\begin{bmatrix}1&1\\j&j\\j&-j\\-1&1\end{bmatrix}$ | $\frac{1}{2\sqrt{2}}\begin{bmatrix}1&1\\-1&-1\\1&-1\\-1&1\end{bmatrix}$ | $\frac{1}{2\sqrt{2}}\begin{bmatrix}1&1\\-1&-1\\j&-j\\-j&j\end{bmatrix}$ |
| 20 and 21 | $\frac{1}{2\sqrt{2}}\begin{bmatrix}1&1\\-j&-j\\1&-1\\-j&j\end{bmatrix}$ | $\frac{1}{2\sqrt{2}}\begin{bmatrix}1&1\\-j&-j\\j&-j\\1&-1\end{bmatrix}$ | - | - |

Table 3 Spatial layer number=3

| TPMI index | Precoding matrices W (sorted from left to right in ascending order of TPMI indexes) | | | |
|---|---|---|---|---|
| 0 to 3 | $\frac{1}{2}\begin{bmatrix}1&0&0\\0&1&0\\0&0&1\\0&0&0\end{bmatrix}$ | $\frac{1}{2}\begin{bmatrix}1&0&0\\0&1&0\\1&0&0\\0&0&1\end{bmatrix}$ | $\frac{1}{2}\begin{bmatrix}1&0&0\\0&1&0\\-1&0&0\\0&0&1\end{bmatrix}$ | $\frac{1}{2\sqrt{3}}\begin{bmatrix}1&1&1\\1&-1&1\\1&1&-1\\1&-1&-1\end{bmatrix}$ |
| 4 to 6 | $\frac{1}{2\sqrt{3}}\begin{bmatrix}1&1&1\\1&-1&1\\j&j&-j\\j&-j&-j\end{bmatrix}$ | $\frac{1}{2\sqrt{3}}\begin{bmatrix}1&1&1\\-1&1&-1\\1&1&-1\\-1&1&1\end{bmatrix}$ | $\frac{1}{2\sqrt{3}}\begin{bmatrix}1&1&1\\-1&1&-1\\j&j&-j\\-j&j&j\end{bmatrix}$ | - |

Table 4 Spatial layer number=4

| TPMI index | Precoding matrices W (sorted from left to right in ascending order of TPMI indexes) | | | |
|---|---|---|---|---|
| 0 to 3 | $\frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\frac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\frac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\frac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |
| 4 | $\frac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

The network device selects an appropriate uplink spatial layer number, selects an appropriate precoding matrix from a corresponding precoding matrix set as an uplink precoding matrix, and then indicates the uplink spatial layer number and the selected precoding matrix to the terminal via DCI. The terminal receives the DCI, and may determine an uplink transmission precoding matrix and the uplink spatial layer number via an SRS resource indicator (SRS resource indicator, SRI) field and a precoding information and number of layers field in the DCI, to perform uplink data transmission. An SRI indicates an SRS resource (SRS resource) index (index), and an SRS resource is a specific SRS resource selected by the network device from a plurality of SRS resources. A maximum of four SRS ports can be configured for each SRS resource, and a number of SRS ports may be configured by using RRC. The precoding information and number of layers field indicates a transmission rank indicator (Transmission rank indicator, TRI) and a transmitted precoding matrix indicator (Transmission precoding matrix indicator, TPMI). The TRI indicates a rank, that is, an uplink spatial layer number. The TPMI indicates a precoding matrix in an uplink precoding matrix set corresponding to a rank indicated by the TRI.

Specifically, first, the terminal may determine a table based on the number of SRS ports in the SRS resource indicated by the SRI, and a maximum uplink spatial layer number (maxRank) and a power mode (ul-FullPowerTransmission) that are indicated by the RRC, for example, may determine Table 5 shown below. The terminal may determine one row in the table via the precoding information and number of layers field in the DCI, where the row includes one TRI and one TPMI. For example, if the precoding information and number of layers field is 001001, that is, a value is 9, and a codebook subset (codebookSubset) is fullyAndPartialAndNonCoherent, it may be determined, by viewing a first column and a second column in Table 5, that the TRI is 2 (that is, the spatial layer number is 2) and the TPMI is 5. Then, a precoding matrix set may be determined based on the number of SRS ports and the TRI. For example, Table 2 above may be determined. Then, an uplink precoding matrix in the precoding matrix set, namely, a precoding matrix corresponding to TPMI=5, may be determined based on the TPMI, and the terminal performs uplink transmission based on the precoding matrix. It should be understood that the first column in Table 5 is an index to which the precoding information and number of layers field is mapped, that is, the first column is an index or a decimal number represented by a binary number in the precoding information and number of layers field.

Table 5

| Value | Codebook subset=fully coherent, partially coherent, and non-coherent | Value | Codebook subset=partially coherent and non-coherent | Value | Codebook subset=non-coherent |
|---|---|---|---|---|---|
| 0 | One layer: TPMI=0 | 0 | One layer: TPMI=0 | 0 | One layer: TPMI=0 |
| 1 | One layer: TPMI=1 | 1 | One layer: TPMI=1 | 1 | One layer: TPMI=1 |
| ... | ... | ... | ... | ... | ... |
| 3 | One layer: TPMI=3 | 3 | One layer: TPMI=3 | 3 | One layer: TPMI=3 |
| 4 | Two layers: TPMI=0 | 4 | Two layers: TPMI=0 | 4 | Two layers: TPMI=0 |
| ... | ... | ... | ... | ... | ... |
| 9 | Two layers: TPMI=5 | 9 | Two layers: TPMI=5 | 9 | Two layers: TPMI=5 |
| 10 | Three layers: TPMI=0 | 10 | Three layers: TPMI=0 | 10 | Three layers: TPMI=0 |

(continued)

| Value | Codebook subset=fully coherent, partially coherent, and non-coherent | Value | Codebook subset=partially coherent and non-coherent | Value | Codebook subset=non-coherent |
|---|---|---|---|---|---|
| 11 | Four layers: TPMI=0 | 11 | Four layers: TPMI=0 | 11 | Four layers: TPMI=0 |
| 12 | One layer: TPMI=4 | 12 | One layer: TPMI=4 | 12 to 15 | Reserved |
| ... | ... | ... | ... | | |
| 19 | One layer: TPMI=11 | 19 | One layer: TPMI=11 | | |
| 20 | Two layers: TPMI=6 | 20 | Two layers: TPMI=6 | | |
| ... | ... | ... | ... | | |
| 27 | Two layers: TPMI=13 | 27 | Two layers: TPMI=13 | | |
| 28 | Three layers: TPMI=1 | 28 | Three layers: TPMI=1 | | |
| 29 | Three layers: TPMI=2 | 29 | Three layers: TPMI=2 | | |
| 30 | Four layers: TPMI=1 | 30 | Four layers: TPMI=1 | | |
| 31 | Four layers: TPMI=2 | 31 | Four layers: TPMI=2 | | |
| 32 | One layer: TPMI=12 | | | | |
| ... | ... | | | | |
| 47 | One layer: TPMI=27 | | | | |
| 48 | Two layers: TPMI=14 | | | | |
| ... | ... | | | | |
| 55 | Two layers: TPMI=21 | | | | |
| 56 | Three layers: TPMI=3 | | | | |
| ... | ... | | | | |
| 59 | Three layers: TPMI=6 | | | | |
| 60 | Four layers: TPMI=3 | | | | |
| 61 | Four layers: TPMI=4 | | | | |
| 62 and 63 | Reserved | | | | |

Further, DCI signaling further includes an antenna port (antenna port) field, to indicate a corresponding demodulation reference signal (demodulation reference signal, DMRS) port index. Different ranks correspond to different DMRS port index tables. A dual-symbol type 1 (Type 1) DMRS is used as an example. When a transform precoder (transform precoder) is not enabled, corresponding DMRS port index tables corresponding to rank=1 to 4 are shown in Table 6 to Table 9. The terminal may select a corresponding DMRS port index table based on an indicated rank, to determine an indicated DMRS port index. In Table 6 to Table 9, *maxLength*=2 indicates a maximum number of symbols occupied by a DMRS, a value of a single-symbol DMRS is 1, and a value of a dual-symbol DMRS is 2. A first column indicates a value of the antenna port field. A second column indicates a number of DMRS CDM groups without data (Number of DMRS CDM group(s) without data), and indicates a number of code division multiplexing (Code Division Multiplexing, CDM) groups that cannot transmit data currently, and a value range of the field has the following meaning: When a value is 1, it indicates that a current resource element (resource element, RE) corresponding to a CDM group 0 cannot transmit data; when a value is 2, it indicates that current REs corresponding to a CDM group 0 and a CDM group 1 cannot transmit data; or when a value is 3, it indicates that current REs corresponding to a CDM group 0, a CDM group 1, and a CDM group 2 cannot transmit data. A third column indicates a DMRS port index indicated by the antenna port field. A fourth column indicates a number of orthogonal frequency division multiplexing (Orthogonal Frequency Division Multiplexing, OFDM) symbols occupied by a front-load DMRS (Number of front-load symbols), and a value is less than or equal to *maxLength*.

Table 6 Rank (namely, spatial layer number)=1

| Value | Number of DMRS CDM groups without data | DMRS port | Number of front-load (front-load) symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14 and 15 | Reserved (reserved) | Reserved | Reserved |

Table 7 Rank=2

| Value | Number of DMRS CDM groups without data | DMRS port | Number of front-load (front-load) symbols |
|---|---|---|---|
| 0 | 1 | 0 and 1 | 1 |
| 1 | 2 | 0 and 1 | 1 |
| 2 | 2 | 2 and 3 | 1 |
| 3 | 2 | 0 and 2 | 1 |
| 4 | 2 | 0 and 1 | 2 |
| 5 | 2 | 2 and 3 | 2 |
| 6 | 2 | 4 and 5 | 2 |
| 7 | 2 | 6 and 7 | 2 |
| 8 | 2 | 0 and 4 | 2 |
| 9 | 2 | 2 and 6 | 2 |
| 10 to 15 | Reserved | Reserved | Reserved |

Table 8 Rank=3

| Value | Number of DMRS CDM groups without data | DMRS port | Number of front-load (front-load) symbols |
|---|---|---|---|
| 0 | 2 | 0 to 2 | 1 |
| 1 | 2 | 0, 1, and 4 | 2 |
| 2 | 2 | 2, 3, and 6 | 2 |
| 3 to 15 | Reserved | Reserved | Reserved |

Table 9 Rank=4

| Value | Number of DMRS CDM groups without data | DMRS port | Number of front-load (front-load) symbols |
|---|---|---|---|
| 0 | 2 | 0 to 3 | 1 |

(continued)

| Value | Number of DMRS CDM groups without data | DMRS port | Number of front-load (front-load) symbols |
|---|---|---|---|
| 1 | 2 | 0, 1, 4, and 5 | 2 |
| 2 | 2 | 2, 3, 6, and 7 | 2 |
| 3 | 2 | 0, 2, 4 and 6 | 2 |
| 4 to 15 | Reserved | Reserved | Reserved |

If an uplink phase tracking reference signal (phase track reference signal, PTRS) is configured, the terminal needs to send a PTRS to estimate phase noise. If the terminal supports full-coherent uplink transmission, an existing protocol specifies that one PTRS port is configured for the terminal, and a DMRS port associated with the PTRS port is indicated by 2 bits (bits) in a PTRS-DMRS association (PTRS-DMRS association) field in the DCI, as shown in Table 10. If the terminal supports partial-coherent or non-coherent uplink transmission, an existing protocol specifies that two PTRS ports are configured for the terminal, two DMRS ports share one PTRS port, and which one of the two DMRS ports is associated with the PTRS port needs to be indicated by 1 bit, and is also indicated by 2 bits in a PTRS-DMRS association field in the DCI, as shown in Table 11.

Table 10

| Value | DMRS port |
|---|---|
| 0 | 1st scheduled DMRS port |
| 1 | 2nd scheduled DMRS port |
| 2 | 3rd scheduled DMRS port |
| 3 | 4th scheduled DMRS port |

Table 11

| Value of a most significant bit (most significant bit, MSB) | DMRS port | Value of a least significant bit (least significant bit, LSB) | DMRS port |
|---|---|---|---|
| 0 | 1st DMRS port sharing a PTRS port 0 | 0 | 1st DMRS port sharing a PTRS port 1 |
| 1 | 2nd DMRS port sharing the PTRS port 0 | 1 | 2nd DMRS port sharing the PTRS port 1 |

In Table 10, a first column indicates a value of the PTRS-DMRS association field, and a second column indicates the DMRS port associated with the PTRS port. Generally, if one PTRS port is configured, the PTRS port is the PTRS port 0. In Table 10, values 0 to 3 of the PTRS-DMRS association field respectively indicate that DMRS ports associated with the PTRS port 0 are the 1st DMRS port, the 2nd DMRS port, the 3rd DMRS port, and the 4th DMRS port in DMRS ports indicated by the antenna port field. For example, indexes of DMRS ports indicated by the antenna port field are 0 and 4 (for example, DMRS port indexes corresponding to the value 8 in a first column in Table 7). In this case, if the value of the PTRS-DMRS association field is 0, it indicates that the PTRS port 0 is associated with a DMRS port whose index is 0; or if the value of the PTRS-DMRS association field is 1, it indicates that the PTRS port 0 is associated with a DMRS port whose index is 4.

In Table 11, a first column and a third column indicate values of a most significant bit and a least significant bit in the PTRS-DMRS association field respectively. The PTRS port 0 and the PTRS port 1 are associated with two DMRS ports respectively. If the most significant bit in the PTRS-DMRS association field is 0, it indicates that the PTRS port 0 is associated with the 1st DMRS port in the DMRS ports indicated by the antenna port field; or if the most significant bit in the PTRS-DMRS association field is 1, it indicates that the PTRS port 0 is associated with the 2nd DMRS port in the DMRS ports indicated by the antenna port field. If the least significant bit in the PTRS-DMRS association field is 0, it indicates that the PTRS port 1 is associated with the 1st DMRS port in the DMRS ports indicated by the antenna port field; or if the least significant bit in the PTRS-DMRS association field is 1, it indicates that the PTRS port 1 is associated with the 2nd DMRS port in the DMRS ports indicated by the antenna port field.

In conclusion, for the CB-based uplink transmission scheme, the network device may indicate, to the terminal via the precoding information and number of layers field, the antenna port field, and the PTRS-DMRS association field, the spatial layer number and precoding matrix, the DMRS port, and the association relationship between the PTRS port and the DMRS port respectively.

2. Non-codebook-based uplink transmission scheme

For the NCB-based uplink transmission scheme, in a 3GPP NR R16 protocol, an SRS resource indicator (SRS resource indicator, SRI) is enabled for a terminal that has 2 or 4 transmit antennas and whose maximum uplink spatial layer number is 4, and a procedure shown in FIG. 2 is used. As shown in FIG. 2, a network device sends a channel state information reference signal (channel state information reference signal, CSI-RS) to the terminal; the terminal may estimate downlink channel information based on the CSI-RS sent by the network device, and obtain uplink channel information based on reciprocity between uplink and downlink channels; and the terminal obtains four 4* 1 candidate precoding matrices through calculation based on the estimated uplink channel information, loads the first $N_{SRS}$ candidate precoding matrices on $N_{SRS}$ sounding reference signal (sounding reference signal, SRS) resources, and sends the sounding reference signal resources to the network device. In a current protocol, a maximum number of SRS resources configured for the NCB-based uplink transmission scheme is 4, a value of $N_{SRS}$ may be 2, 3, or 4, and there is one antenna port for each SRS resource. The network device receives an SRS sent by the terminal, estimates candidate precoding matrices, then determines to-be-used precoding matrices, and indicates, to the terminal via an SRS resource indicator (SRS resource indicator, SRI) field in the DCI, indexes of SRS resources corresponding to the selected precoding matrices. After the terminal receives the DCI, a table and a corresponding column that are indicated by the SRI are located based on higher layer parameters $N_{SRS}$ and $L_{max}$ that are indicated by RRC. $N_{SRS}$ indicates a number of SRS resources for uploading the candidate precoding matrices that is specified by the network device, in NCB transmission, and $L_{max}$ indicates a maximum uplink spatial layer number that is specified by the network device, in NCB transmission. For example, when $L_{max} = 4$ and $N_{SRS} = 4$, a sixth column in Table 12 below is located. Finally, the terminal determines a corresponding row based on a value of the SRI field, and can further determine an antenna port corresponding to the row, thereby determining a spatial layer number and an uplink precoding matrix. Then, the terminal may perform uplink transmission. Indication overheads in this solution are $\left\lceil \log_2 \left( \sum_{k=1}^{\min\{L_{max}, N_{SRS}\}} \binom{N_{SRS}}{k} \right) \right\rceil$ bits. When $L_{max} = 4$ and $N_{SRS} = 4$, indication overheads are 4 bits.

Table 12

| Bit field mapped to index | SRI(s), $N_{SRS} = 2$ | Bit field mapped to index | SRI(s), $N_{SRS} = 3$ | Bit field mapped to index | SRI(s), $N_{SRS} = 4$ |
|---|---|---|---|---|---|
| 0 | 0 | 0 | 0 | 0 | 0 |
| 1 | 1 | 1 | 1 | 1 | 1 |
| 2 | 0 and 1 | 2 | 2 | 2 | 2 |
| 3 | Reserved | 3 | 0 and 1 | 3 | 3 |
| | | 4 | 0 and 2 | 4 | 0 and 1 |
| | | 5 | 1 and 2 | 5 | 0 and 2 |
| | | 6 | 0, 1, and 2 | 6 | 0 and 3 |
| | | 7 | Reserved | 7 | 1 and 2 |
| | | | | 8 | 1 and 3 |
| | | | | 9 | 2 and 3 |
| | | | | 10 | 0, 1, and 2 |
| | | | | 11 | 0, 1, and 3 |
| | | | | 12 | 0, 2, and 3 |
| | | | | 13 | 1, 2, and 3 |
| | | | | 14 | 0, 1, 2, and 3 |
| | | | | 15 | Reserved |

In Table 12, a first column, a third column, and a fifth column are all values of the SRI field, and a second column, a fourth column, and a sixth column respectively represent SRS resource combinations corresponding to $N_{SRS}$ = 2, $N_{SRS}$ = 3, and $N_{SRS}$ = 4.

Further, DCI signaling further includes an antenna port field, to indicate a corresponding DMRS port index, and an indication scheme is consistent with the indication manner in CB-based uplink transmission described above.

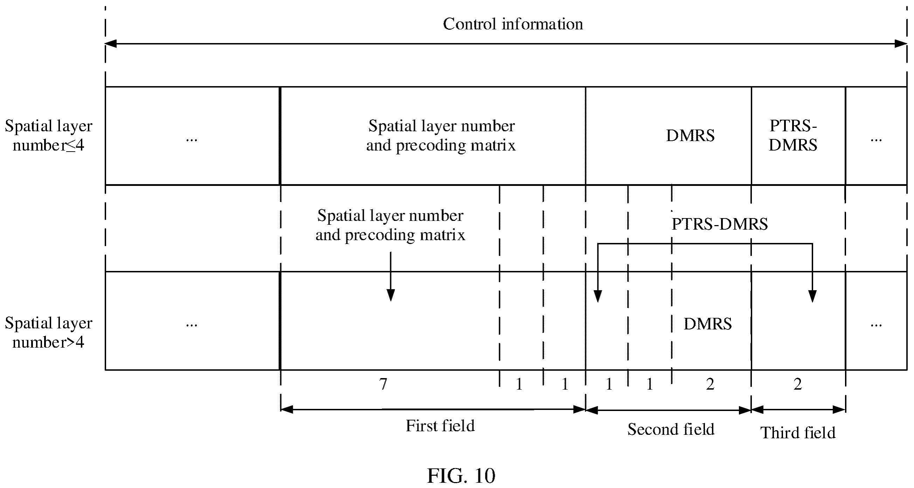

For NCB-based uplink transmission, similarly, if an uplink PTRS is configured, the terminal needs to send a PTRS to estimate phase noise. In a current protocol, a maximum of two PTRS ports are configured for the terminal. When one PTRS port is configured, a DMRS port associated with the PTRS port is indicated by 2 bits in a PTRS-DMRS association field in the DCI, as shown in FIG. 10. When two PTRS ports are configured, two DMRS ports share one PTRS port, and for each PTRS port, which one of the two DMRS ports is associated with the PTRS port needs to be indicated by 1 bit, and is also indicated by 2 bits in a PTRS-DMRS association field in the DCI, as shown in Table 11.

In conclusion, for the NCB-based uplink transmission scheme, the network device may indicate, to the terminal via the SRI field, the antenna port field, and the PTRS-DMRS association field, the spatial layer number and precoding matrix, the DMRS port, and the association relationship between the PTRS port and the DMRS port respectively.

According to the foregoing descriptions, related indication rules defined in a current protocol support CB-based uplink transmission and NCB-based uplink transmission in which the terminal has at most 4 transmit antenna ports, and correspondingly, a maximum uplink spatial layer number supported by each terminal is 4. A number of transmit antenna ports of the terminal is expected to be increased to 8, and the maximum uplink spatial layer number supported by each terminal is expected to reach 8, to further increase uplink system capacity. Therefore, a new indication method needs to be designed to indicate the precoding matrix, the spatial layer number, the DMRS port, and the association relationship between the DMRS port and the PTRS port, to enable 8Tx and support uplink transmission of a maximum of eight layers of the terminal.

In view of this, this application provides a data transmission method. In two different scenarios in which a spatial layer number is one of 1 to 4 and a spatial layer number is one of 5 to 8, a network device may separately indicate, to a terminal, the spatial layer number, a precoding matrix corresponding to the spatial layer number, and antenna port information (for example, a DMRS port and an association relationship between the DMRS port and a PTRS port), to enable uplink 8Tx and support uplink transmission of a maximum of eight layers of the terminal. In addition, in the method provided in this application, a total number of bits for indicating the spatial layer number, the precoding matrix corresponding to the spatial layer number, and the antenna port information in the scenario in which the spatial layer number is one of 1 to 4 is the same as that in the different scenario in which the spatial layer number is one of 5 to 8. Therefore, compared with simply extending a current indication scheme of enabling uplink 4Tx to a scheme of enabling uplink 8Tx, the solution provided in this application can reduce bit overheads.

The following describes in detail the solution provided in this application with reference to a corresponding flowchart. It may be understood that, in the schematic flowchart provided in this application, the method is mainly illustrated by using an example in which a network device and a terminal serve as execution bodies of the interaction illustration. However, the execution bodies of the interaction illustration are not limited in this application. For example, the network device in the schematic flowchart may alternatively be a chip, a chip system, or a processor that supports the network device in implementing the method, or may be a logic module or software that can implement all or some functions of the network device. The terminal in the schematic flowchart may alternatively be a chip, a chip system, or a processor that supports the terminal in implementing the method, or may be a logic module or software that can implement all or some functions of the terminal.

First, the following descriptions are provided:

(1) In the descriptions of this application, a spatial layer number and a rank (rank) represent a same meaning, and the two may be replaced with each other. In this field, the spatial layer number is sometimes referred to as a number of transmission layers or a number of streams.

(2) A "precoding matrix set" in this application may also be referred to as a "codebook".

(3) A "field" in this application is also referred to as a "field" in this field, and the two represent a same meaning. In addition, in the descriptions of this application, a value of a field is a decimal number represented by binary bits padding the field, and the decimal number may also be referred to as an index.

FIG. 3 is a schematic flowchart of a data transmission method according to this application. The method 300 may include S310 to S330. The following describes the steps in detail.

S310: A network device generates first information. The first information is used by a terminal to transmit an uplink signal.

Specifically, for uplink transmission, the network device first needs to indicate, to the terminal, a spatial layer number, a precoding matrix corresponding to the spatial layer number, a spatial layer number of first-type antenna ports, and an association relationship between the spatial layer number of first-type antenna ports and one or more second-type antenna ports. The terminal may perform uplink transmission based on the foregoing information. The foregoing information may be sent to the terminal via the first information. The first information has a specific format, and a plurality of specific bits in the format may indicate the foregoing information. In this application, the spatial layer number indicated by the first information is one of 1 to 4 or one of 5 to 8. In other words, a total number of bits for indicating the spatial layer number, the precoding matrix corresponding to the spatial layer number, the spatial layer number of first-type antenna ports, and the association relationship between the spatial layer number of first-type antenna ports and the one or more second-type antenna ports in a scenario in which the spatial layer number is one of 1 to 4 is the same as that in a scenario in which the spatial layer number is one of 5 to 8. The terminal may first determine whether the spatial layer number is one of 1 to 4 or one of 5 to 8, and then determine a specific spatial layer number, a spatial layer number of first-type antenna ports, and an association relationship between the spatial layer number of first-type antenna ports and one or more second-type antenna ports based on the first information. The first-type antenna port is used for data demodulation. For example, the first-type antenna port may be a DMRS port, or may be an antenna port whose function is the same as or similar to that of a DMRS port. The second-type antenna port is used for phase noise estimation. For example, the second-type antenna port may be a PTRS port, or may be an antenna port whose function is the same as or similar to that of a PTRS port.

In this application, for ease of understanding and description, information that may indicate the spatial layer number, the precoding matrix corresponding to the spatial layer number, the spatial layer number of first-type antenna ports, and the association relationship between the spatial layer number of first-type antenna ports and the one or more second-type antenna ports in the scenario in which the spatial layer number is one of 1 to 4 is referred to as first indication information; and information that may indicate the spatial layer number, the precoding matrix corresponding to the spatial layer number, the spatial layer number of first-type antenna ports, and the association relationship between the spatial layer number of first-type antenna ports and the one or more second-type antenna ports in the scenario in which the spatial layer number is one of 5 to 8 is referred to as second indication information. A number of bits occupied by the first indication information is the same as a number of bits occupied by second indication information.

In addition, for ease of distinguishing between the first indication information and the second indication information, the spatial layer number, the precoding matrix corresponding to the spatial layer number, the spatial layer number of first-type antenna ports, and the association relationship between the spatial layer number of first-type antenna ports and the one or more second-type antenna ports indicated by the first indication information are denoted as a first spatial layer number, a first precoding matrix corresponding to the first spatial layer number, a first antenna port set, and an association relationship between the first antenna port set and a second antenna port set respectively; and the spatial layer number, the precoding matrix corresponding to the spatial layer number, the spatial layer number of first-type antenna ports, and the association relationship between the spatial layer number of first-type antenna ports and the one or more second-type antenna ports indicated by the second indication information are denoted as a second spatial layer number, a second precoding matrix corresponding to the second spatial layer number, a third antenna port set, and an association relationship between the third antenna port set and a fourth antenna port set respectively. It may be understood that the first spatial layer number is one of 1 to 4, that is, the first spatial layer number is one in {1, 2, 3, 4}, and a number of antenna ports included in the first antenna port set is equal to the first spatial layer number. The second spatial layer number is one of 5 to 8, that is, the second spatial layer number is one in {5, 6, 7, 8}, and a number of antenna ports included in the third antenna port set is equal to the second spatial layer number.

It may be understood from the foregoing description that, in S310, the network device may first determine the spatial layer number, and then generate the first information based on the determined spatial layer number. Specifically, if the spatial layer number is one of 1 to 4, the network device may generate the first information including the first indication information; or if the spatial layer number is one of 5 to 8, the network device may generate the first information including the second indication information. The first information may be DCI, or may be information whose function is the same as or similar to that of DCI.

S320: The network device sends the first information. Correspondingly, the terminal receives the first information.

S330: The terminal sends the uplink signal based on the first information. The uplink signal may include an uplink reference signal (for example, a PTRS and a DMRS) and data. Correspondingly, the network device receives the uplink signal.

Specifically, after receiving the first information, the terminal may determine, based on the first information, the spatial layer number, the precoding matrix corresponding to the spatial layer number, the spatial layer number of first-type antenna ports, and the association relationship between the spatial layer number of first-type antenna ports and the one or more second-type antenna ports, and further send the uplink reference signal and the data based on the foregoing information.

According to the data transmission method provided in this application, in the two different scenarios in which the spatial layer number is one of 1 to 4 and the spatial layer number is one of 5 to 8, the network device may separately indicate, to the terminal, the spatial layer number, the precoding matrix corresponding to the spatial layer number, the spatial layer number of first-type antenna ports, and the association relationship between the spatial layer number of first-type antenna ports and the one or more second-type antenna ports, to enable uplink 8Tx and support uplink transmission of a maximum of eight layers of the terminal.

In addition, if a current indication scheme of enabling uplink 4Tx and supporting uplink transmission of a maximum of four layers of the terminal is simply extended to a scenario of enabling 8Tx and supporting uplink transmission of a maximum of eight layers of the terminal, due to an increase in the spatial layer number, more bits are required to indicate the association relationship between the first antenna port and the second antenna port, resulting in higher bit overheads for a PTRS-DMRS association field. For example, for CB-based uplink transmission, if the terminal supports a full-coherent precoding matrix, when a maximum uplink spatial layer number is 4, a DMRS port in four DMRS ports that is associated with one PTRS port needs to be indicated. Therefore, 2 bits are required for the PTRS-DMRS association field. When a maximum uplink transmission layer number is 8, a DMRS port in eight DMRS ports that is associated with one PTRS port needs to be indicated. Therefore, 3 bits are required for the PTRS-DMRS association field. However, in the method provided in this application, a total number of bits for indicating the spatial layer number, the precoding matrix, and the antenna port information (that is, the spatial layer number of first-type antenna ports and the association relationship between the spatial layer number of first-type antenna ports and the one or more second-type antenna ports) in the scenario in which the spatial layer number is one of 1 to 4 is the same as that in the different scenario in which the spatial layer number is one of 5 to 8. Alternatively, only an occupied portion in the indication scheme of enabling uplink 4Tx can indicate the spatial layer number, the precoding matrix, and the antenna port information in each of the two different scenarios in which the spatial layer number is one of 1 to 4 and the spatial layer number is one of 5 to 8. In other words, 8Tx can be enabled and uplink transmission of the maximum of eight layers of the terminal can be supported, without extending the PTRS-DMRS association field. Therefore, compared with simply extending the current indication scheme of enabling uplink 4Tx and supporting uplink transmission of the maximum of four layers of the terminal to the scheme of enabling uplink 8Tx and supporting uplink transmission of the maximum of eight layers of the terminal, the solution provided in this application can reduce bit overheads.

In some embodiments, in S330, the terminal needs to first determine whether the spatial layer number is one of 1 to 4 or one of 5 to 8, and then can determine whether the first information received by the terminal specifically includes the first indication information or the second indication information.

In a possible implementation, the first information further includes a fourth field and a fifth field. The fourth field indicates an MCS, an NDI, and an RV that are associated with a first transport block, and the fifth field indicates an MCS, an NDI, and an RV that are associated with a second transport block. The fourth field and the fifth field indicate whether the spatial layer number is one of 1 to 4 or one of 5 to 8. When the fourth field and the fifth field indicate not to enable one of the two transport blocks, the first information includes the first indication information, that is, indicates that the spatial layer number is one of 1 to 4. When the fourth field and the fifth field indicate to enable the two transport blocks, the first information includes the second indication information, that is, indicates that the spatial layer number is one of 5 to 8. In other words, the fourth field and the fifth field may indicate whether the first information includes the second indication information or the first indication information.

Specifically, for transmission of a maximum of eight streams of a single terminal, transmission of two transport blocks (or referred to as codewords) may be supported. Correspondingly, the first information may include scheduling information of the two transport blocks, and scheduling information of each of the two transport blocks may include a corresponding MCS, NDI, and RV. The MCS is an index value, and the index value represents a code rate and a modulation order in an MCS table. The NDI indicates whether scheduled uplink transmission is newly transmitted data or retransmitted data. The RV indicates coded redundancy version information corresponding to the scheduled data. If the spatial layer number is one of 1 to 4, the MCSs, the NDIs, and the RVs associated with the two transport blocks still exist, but an MCS and an RV associated with one of the two transport blocks may be set to specific values, to indicate not to enable the transport block. For example, $I_{MCS}$ represented by an MCS associated with one of the two transport blocks may be set to 26, and $r_{vid}$ represented by an RV may be set to 1. If the spatial layer number is one of 5 to 8, two transport blocks are enabled. In this case, at least one of an MCS and an RV that are associated with each transport block is not the specific value. For example, $I_{MCS}$ represented by each of MCSs associated with the two transport blocks is not set to 26, and/or $r_{vid}$ represented by an RV is not set to 1. Therefore, it may be understood that the network device may indicate, based on the MCSs and the RVs associated with the two transport blocks, whether to enable the two transport blocks. Correspondingly, the terminal may determine, based on the MCSs and the RVs associated with the two transport blocks, whether to enable the two transport blocks. If one of the two transport blocks is not enabled, the spatial layer number is one of 1 to 4, and correspondingly, it may indicate that the first information includes the first indication information instead of the second indication information. If the two transport blocks are enabled, the spatial layer number is one of 5 to 8, and correspondingly, it may indicate that the first information includes the second indication information instead of the first indication information.

Based on this solution, no additional bit needs to be added, and the fourth field and the fifth field can indicate, to the terminal, whether the first information includes the second indication information or the first indication information, or may indicate an interpretation manner of the first information.

It should be understood that the two transport blocks in this application may be a codeword 0 and a codeword 1.

It should be further understood that whether the spatial layer number is one of 1 to 4 or one of 5 to 8 may alternatively be indicated by another reserved bit in the first information or a new bit.

In another implementation, whether the spatial layer number is one of 1 to 4 or one of 5 to 8 may be indicated by indicating which one of 1 to 8 is an uplink spatial layer number.

The following describes in detail how the first indication information and the second indication information are specifically implemented.

For ease of description, the first spatial layer number is denoted as P below. Correspondingly, the first antenna port set includes P first-type antenna ports. In addition, a number of second-type antenna ports included in the second antenna port set is denoted as Q. The second spatial layer number is denoted as M. Correspondingly, the third antenna port set includes M first-type antenna ports. In addition, a number of second-type antenna ports included in the fourth antenna port set is denoted as N.

Manner 1

The first information includes a first field, a second field, and a third field.

First field: When the spatial layer number is one of 1 to 4, the first field indicates the spatial layer number and the precoding matrix, or the first field and an NDI associated with an un-enabled transport block indicate the spatial layer number and the precoding matrix; or when the spatial layer number is one of 5 to 8, a portion of the first field indicates the spatial layer number and the precoding matrix.

Second field: The second field indicates the first-type antenna port corresponding to the spatial layer number.

Third field: When the spatial layer number is one of 1 to 4, the third field indicates an association relationship between the first-type antenna port and a second-type antenna port; or when the spatial layer number is one of 5 to 8, the third field and the remaining portion of the first field indicate an association relationship between the first-type antenna port and a second-type antenna port.

In other words, when the first information includes the first indication information, the first field indicates the first spatial layer number and the first precoding matrix, or the first field indicates the first spatial layer number and the first precoding matrix together with the NDI associated with the un-enabled transport block; the second field indicates one of a plurality of first-type antenna port sets (namely, the first antenna port set) corresponding to the spatial layer number; and the third field indicates the association relationship between the first antenna port set and the second antenna port set. When the first information includes the second indication information, a portion of the first field (namely, a first portion of the first field) indicates the second spatial layer number and the second precoding matrix; the second field indicates one of a plurality of first-type antenna port sets (namely, the third antenna port set) corresponding to the spatial layer number; and the third field and the remaining portion of the first field (namely, a second portion of the first field) together indicate the association relationship between the third antenna port set and the fourth antenna port set.

First, the second field is described. For example, the first-type antenna port is a DMRS port. Different spatial layer numbers (namely, ranks) correspond to different DMRS port index tables. A DMRS port index table corresponding to a spatial layer number includes a plurality of indexes and DMRS port sets respectively corresponding to the plurality of indexes, and a number of DMRS ports included in each DMRS port set is equal to the spatial layer number. The second field is an index value, and a DMRS port set that corresponds to the index value and that is in the DMRS port index table corresponding to the spatial layer number may be determined based on the index value. A dual-symbol type 1 DMRS is used as an example. When a transform precoder is not enabled, DMRS port index tables corresponding to spatial layer number=1 to 4 are shown in Table 6 to Table 9 above, and DMRS port index tables corresponding to spatial layer number=5 to 8 are shown in Table 13 to Table 16 below. The first column in each of Table 6 to Table 9 and Table 13 to Table 16 is a value of the second field. Meanings of the second column and the fourth column in each of Table 13 to Table 16 are the same as meanings of the second column and the fourth column in each of Table 6 to Table 9.

Table 13 Rank=5

| Value | Number of DMRS CDM groups without data | DMRS port | Number of front-load (front-load) symbols |
|---|---|---|---|
| 0 | 2 | 0 to 4 | 2 |
| 1 to 15 | Reserved | Reserved | Reserved |

Table 14 Rank=6

| Value | Number of DMRS CDM groups without data | DMRS port | Number of front-load (front-load) symbols |
|---|---|---|---|
| 0 | 2 | 0, 1, 2, 3, 4, and 6 | 2 |

(continued)

| Value | Number of DMRS CDM groups without data | DMRS port | Number of front-load (front-load) symbols |
|---|---|---|---|
| 1 to 15 | Reserved | Reserved | Reserved |

Table 15 Rank=7

| Value | Number of DMRS CDM groups without data | DMRS port | Number of front-load (front-load) symbols |
|---|---|---|---|
| 0 | 2 | 0, 1, 2, 3, 4, 5, and 6 | 2 |
| 1 to 15 | Reserved | Reserved | Reserved |

Table 16 Rank=8

| Value | Number of DMRS CDM groups without data | DMRS port | Number of front-load (front-load) symbols |
|---|---|---|---|
| 0 | 2 | 0, 1, 2, 3, 4, 5, 6, and 7 | 2 |
| 1 to 15 | Reserved | Reserved | Reserved |

It may be understood that, for the indication manners shown in Table 6 to Table 9 and Table 13 to Table 16, the second field may be 4 bits.

Optionally, the second field may be an antenna port field in an existing protocol.

Optionally, the third field may be a PTRS-DMRS association field in an existing protocol.

The following describes in detail the first field and the third field in Manner 1 in different scenarios.

Scenario 1: CB-based full-coherent precoding matrix

In this scenario, the terminal supports the CB-based full-coherent precoding matrix, and the network device selects a precoding matrix from a full-coherent precoding matrix set corresponding to the spatial layer number. It may be understood that, in this scenario, both the first precoding matrix and the second precoding matrix are full-coherent precoding matrices. In addition, it should be understood that, for any precoding matrix in the full-coherent precoding matrix set, each element of the precoding matrix is a non-zero element.

For full-coherent precoding matrices, a number of precoding matrices corresponding to spatial layer number=1 to 4 is far greater than a number of precoding matrices corresponding to spatial layer number=5 to 8. Therefore, a number of bits required to indicate the first spatial layer number and the first precoding matrix is greater than a number of bits required to indicate the second spatial layer number and the second precoding matrix.

An example in which the precoding matrix set is an 8T full-coherent precoding matrix set based on an R15 DL type 1 SP codebook is used for description. Numbers of precoding matrices corresponding to different ranks (namely, spatial layer numbers) are shown in Table 17. It can be seen that a number of precoding matrices corresponding to rank>4 is far less than a number of precoding matrices corresponding to rank≤4. In Table 17, $N_1$ and $N_2$ respectively represent numbers of antenna ports of the terminal in a horizontal direction and a vertical direction, and $O_1$ and $O_2$ respectively represent discrete Fourier transform (discrete Fourier transform, DFT) oversampling multiples in the horizontal direction and the vertical direction.

Table 17

| Rank | 1 | 2 | 3 | 4 | 5 | 6 | 7 | 8 | Total number of precoding matrices |
|---|---|---|---|---|---|---|---|---|---|
| "DL type 1" with $N_1$=4, $N_2$=1, $O_1$=4, $O_2$=1 | 64 | 128 | 96 | 96 | 32 | 32 | 16 | 16 | 480 |
| "DL type 1" with $N_1$=2, $N_2$=2, $O_1$=2, $O_2$=2 | 64 | 128 | 96 | 96 | 32 | 32 | 32 | 32 | 512 |

When rank≤4, 9 bits may indicate a spatial layer number and a corresponding precoding matrix:

(1) The spatial layer number and the corresponding precoding matrix are jointly indicated. Refer to Table 17. When rank≤4, there are a total of 384 precoding matrices. Therefore, the spatial layer number and the corresponding precoding matrix can be jointly indicated by at least 9 bits.

It should be understood that joint indication of the spatial layer number and the corresponding precoding matrix means that one value (that is, one index) indicates both one spatial layer number and one transmitted precoding matrix indicator (transmitted precoding matrix indicator, TPMI). The TPMI is a value (that is, an index), and the TPMI indicates one of precoding matrices corresponding to the spatial layer number. In Scenario 1, the TPMI represents one precoding matrix in all full-coherent precoding matrices corresponding to the spatial layer number.

(2) The spatial layer number and the corresponding precoding matrix are separately indicated, that is, the spatial layer number and a TPMI are separately indicated. At least 2 bits are required to indicate one of the spatial layer numbers 1 to 4. Refer to Table 17. When rank≤4, a number of precoding matrices corresponding to spatial layer number=2 is the largest, and is 128. After the spatial layer number is indicated, at least 7 bits are required to indicate one of the 128 precoding matrices, that is, at least 7 bits are required to indicate the precoding matrix corresponding to the spatial layer number. Therefore, a total of at least 9 bits are required to indicate the spatial layer number and the corresponding precoding matrix.

When the rank>4 (that is, 4<rank≤ 8), 7 bits may indicate a spatial layer number and a corresponding precoding matrix:

(1) The spatial layer number and the corresponding precoding matrix are jointly indicated. Refer to Table 1. When rank>4, there are a total of 128 precoding matrices. Therefore, the spatial layer number and the corresponding precoding matrix can be jointly indicated by at least 7 bits.

(2) The spatial layer number and the corresponding precoding matrix are separately indicated. At least 2 bits are required to indicate one of the spatial layer numbers 5 to 8. Refer to Table 1. When rank>4, it is determined that a maximum number of precoding matrices corresponding to the spatial layer number is 32. After the spatial layer number is indicated, at least 5 bits are required to indicate the precoding matrix corresponding to the spatial layer number.

In conclusion, when rank≤4, a total of 9 bits are required to indicate the spatial layer number and the corresponding precoding matrix; or when rank>4, only 7 bits are required to indicate the spatial layer number and the corresponding precoding matrix. Therefore, to be compatible with two cases: rank≤4 and rank>4, 9 bits are required to indicate the spatial layer number and the corresponding precoding matrix.

Further, for example, the first-type antenna port is a DMRS port, and the second-type antenna port is a PTRS port. If an uplink PTRS is configured, the terminal may send a PTRS to estimate phase noise. If the terminal supports the full-coherent precoding matrix, in an implementation, one PTRS port may be configured for the terminal, and a specific DMRS port associated with the PTRS port needs to be indicated. When rank≤4, the network device indicates a maximum of four DMRS ports to the terminal. Therefore, at least 2 bits are required to indicate a DMRS port that is in the maximum of four DMRS ports and that is associated with the PTRS port. When rank>4, the network device indicates a maximum of eight DMRS ports to the terminal. Therefore, at least 3 bits are required to indicate a DMRS port that is in the maximum of eight DMRS ports and that is associated with the PTRS port. In other words, when rank≤4, a relatively large number of bits are required to indicate the spatial layer number and the corresponding precoding matrix, and a relatively small number of bits are required to indicate an association relationship between the PTRS port and the DMRS port; and when rank>4, a relatively small number of bits are required to indicate the spatial layer number and the corresponding precoding matrix, and a relatively large number of bits are required to indicate the association relationship between the PTRS port and the DMRS port. Therefore, indication of the spatial layer number, the precoding matrix, and the association relationship between the PTRS port and the DMRS port may be comprehensively considered.

Therefore, in some embodiments, the first field may be 9 bits, and the third field may be 2 bits. When rank≤4, the first field may indicate the spatial layer number and the corresponding precoding matrix, and the third field may indicate the association relationship between the first-type antenna port and the second-type antenna port. When rank>4, 7 bits in the 9 bits may indicate the spatial layer number and the corresponding precoding matrix, and 1 bit in the remaining 2 bits in the 9 bits may indicate the association relationship between the first-type antenna port and the second-type antenna port together with the third field. In other words, the first field may indicate the first spatial layer number and the first precoding matrix, and the third field may indicate the association relationship between the first antenna port set and the second antenna port set. A portion of the first field may indicate the second spatial layer number and the second precoding matrix, and the third field and the remaining portion of the first field may indicate the association relationship between the third antenna port set and the fourth antenna port set.

It should be understood that specific bits in the first field that indicate the first spatial layer number and the first precoding matrix are not limited in this application, and specific bits in the first field that indicate the second spatial layer number and the second precoding matrix are not limited in this application. For example, the first 2 bits in the first field may indicate the first spatial layer number, or the last 2 bits in the first field may indicate the first spatial layer number. For example, the first 2 bits in the first field may indicate the second spatial layer number, 5 bits adjacent to the 2 bits in the first field may indicate the second precoding matrix, and the last 2 bits in the first field are left; or the first 2 bits in the first field may indicate the second spatial layer number, the last 5 bits in the first field may indicate the second precoding matrix, and a 3rd bit and a 4th bit in the first field are left. It should be further understood that a specific bit that is in the remaining 2 bits in the first field and that indicates the association relationship between the first-type antenna port and the second-type antenna port together with the third field is not limited in this application.

In some other embodiments, the first field may be 8 bits, and the third field may be 2 bits. When rank≤4, the first field and the NDI associated with the un-enabled transport block may together indicate the spatial layer number and the corresponding precoding matrix, and the third field may indicate the association relationship between the first-type antenna port and the second-type antenna port. When rank>4, 7 bits in the first field may indicate the spatial layer number and the corresponding precoding matrix, and the third field and the remaining 1 bit in the first field may indicate the association relationship between the first-type antenna port and the second-type antenna port. In other words, the first field and the NDI associated with the un-enabled transport block jointly indicate the first spatial layer number and the first precoding matrix, and the third field may indicate the association relationship between the first antenna port set and the second antenna port set. A portion of the first field may indicate the second spatial layer number and the second precoding matrix, and the third field and the remaining portion of the first field may indicate the association relationship between the third antenna port set and the fourth antenna port set. In this solution, because the NDI associated with the un-enabled transport block is reused, 1-bit overheads can be reduced.

It should be understood that specific bits in the first field that indicate the first spatial layer number and the first precoding matrix together with the NDI associated with the un-enabled transport block are not limited in this application, and specific bits in the first field that indicate the second spatial layer number and the second precoding matrix are not limited in this application. For example, a 1st bit in the first field and the NDI associated with the un-enabled transport block may together indicate the first spatial layer number, or the last 1 bit in the first field and the NDI associated with the un-enabled transport block may together indicate the first spatial layer number. For example, the first 2 bits in the first field may indicate the second spatial layer number, 5 bits adjacent to the 2 bits in the first field may indicate the second precoding matrix, and the last 1 bit in the first field is left; or the first 2 bits in the first field may indicate the second spatial layer number, the last 5 bits in the first field may indicate the second precoding matrix, and a 3rd bit in the first field is left.

In an example, when rank≤4, the association relationship between the DMRS port and the PTRS port may be shown in Table 18. When rank>4, the association relationship between the DMRS port and the PTRS port may be shown in Table 19. A first column in Table 18 indicates a value of the third field. A first column in Table 19 indicates a value of a total of 3 bits occupied by 1 bit in the first field and 2 bits in the third field.

Table 18

| Value | DMRS port |
|-------|-----------|
| 0 | 1st scheduled DMRS port |
| 1 | 2nd scheduled DMRS port |
| 2 | 3rd scheduled DMRS port |
| 3 | 4th scheduled DMRS port |

Table 19

| Value | DMRS port |
|-------|-----------|
| 0 | 1st scheduled DMRS port |
| 1 | 2nd scheduled DMRS port |
| 2 | 3rd scheduled DMRS port |
| 3 | 4th scheduled DMRS port |
| 4 | 5th scheduled DMRS port |
| 5 | 6th scheduled DMRS port |
| 6 | 7th scheduled DMRS port |
| 7 | 8th scheduled DMRS port |

It may be understood that, in Table 18, when the value is 0, it indicates that the PTRS port is associated with the 1st DMRS port in the DMRS ports indicated by the second field; when the value is 1, it indicates that the PTRS port is associated with the 2nd DMRS port in the DMRS ports indicated by the second field; or other cases are similar to this. For example, the DMRS ports indicated by the second field are the DMRS port 0, the DMRS port 1, and the DMRS port 4 that correspond to the value 1 in Table 8. In this case, when the third field is 0, it indicates that the PTRS port is associated with the DMRS port 0; when the third field is 1, it indicates that the PTRS port is associated with the DMRS port 1; or when the third field is 2, it indicates that the PTRS port is associated with the DMRS port 4.

Similarly, in Table 19, when the value is 0, it indicates that the PTRS port is associated with the 1st DMRS port in the DMRS ports indicated by the second field; when the value is 1, it indicates that the PTRS port is associated with the 2nd DMRS port in the DMRS ports indicated by the second field; or other cases are similar to this. For example, the DMRS ports indicated by the second field are the DMRS port 0, the DMRS port 1, the DMRS port 2, the DMRS port 3, the DMRS port 4, and the DMRS port 6 that correspond to the value 0 in Table 14. In this case, when the value of the total of 3 bits occupied by the third field and the remaining portion of the first field is 0, it indicates that the PTRS port is associated with the DMRS port 0; when the value of the total of 3 bits occupied by the third field and the remaining portion of the first field is 1, it indicates that the PTRS port is associated with the DMRS port 1; when the value of the total of 3 bits occupied by the third field and the remaining portion of the first field is 2, it indicates that the PTRS port is associated with the DMRS port 2; or others are similar to this.

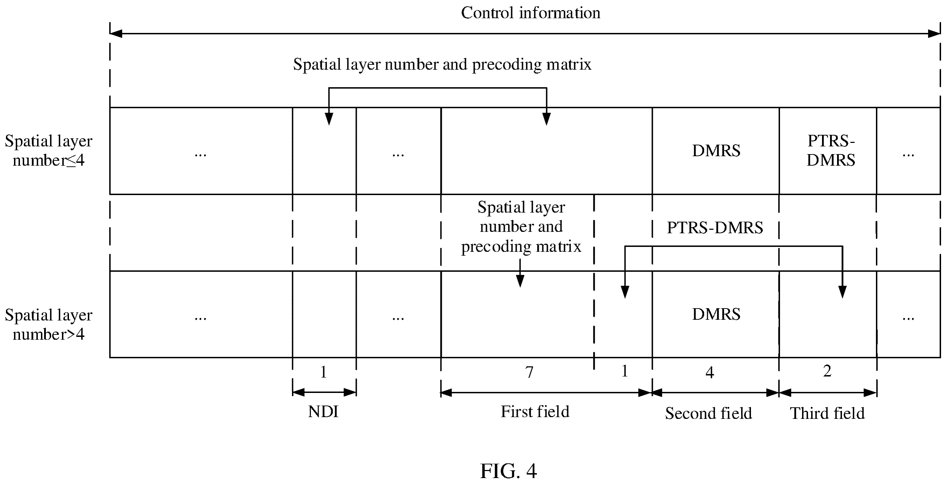

For example, FIG. 4 is a diagram of a format of the first information. As shown in FIG. 4, the first information includes the NDI associated with the un-enabled transport block, the first field, the second field, and the third field during rank≤4, which occupy 1 bit, 8 bits, 4 bits, and 2 bits respectively. When rank (that is, spatial layer number)≤4, the NDI and the first field indicate the spatial layer number and the precoding matrix (which may be separately indicated or jointly indicated), the second field indicates the DMRS port, and the third field indicates the association relationship between the DMRS port and the PTRS port. When rank>4, 7 bits in the first field indicate the spatial layer number and the precoding matrix (which may be separately indicated or jointly indicated), the second field indicates the DMRS port, and the third field and the remaining 1 bit in the first field indicate the association relationship between the DMRS port and the PTRS port.

It should be noted that a relative location between any two of the NDI, the first field, the second field, and the third field shown in FIG. 4 or any accompanying drawing related to a format of the first information in this specification is merely an example. Actually, a relative location between any two of the plurality of fields may alternatively be different from that shown in the figure. For example, the first field and the second field may be adjacent to each other or may not be adjacent to each other, and the second field and the third field may be adjacent to each other or may not be adjacent to each other.

It should be further understood that an equivalent variation of the first information that is not explicitly recorded in this specification but is actually described in this application shall also fall within the protection scope of this application. For example, an equivalent variation of the first information described above is: When the first information includes the first indication information, the first field, the NDI associated with the un-enabled transport block, and a portion of the third field indicate the first spatial layer number and the first precoding matrix, and the remaining portion of the third field indicates the association relationship between the first antenna port set and the second antenna port set. When the first information includes the second indication information, the first field indicates the second spatial layer number and the second precoding matrix, and the third field indicates the association relationship between the third antenna port set and the fourth antenna port set. For example, if a codebook is an 8T full-coherent codebook based on an R15 DL type 1 SP codebook, the first field may be 7 bits, and the third field may be 3 bits. When rank≤4, NDI+first field+1 bit in the third field=9 bits indicate the first spatial layer number and the first precoding matrix, and the remaining 2 bits in the third field indicate the association relationship between the first antenna port set and the second antenna port set. When rank>4, the first field indicates the second spatial layer number and the second precoding matrix, and the third field indicates the association relationship between the third antenna port set and the fourth antenna port set.

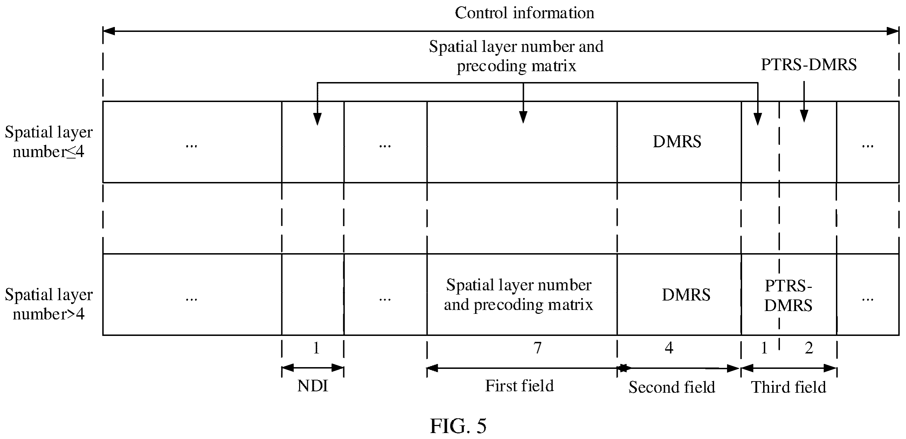

For example, FIG. 5 is a diagram of an equivalent variation format of the first information shown in FIG. 4. As shown in FIG. 5, the first information includes the NDI associated with the un-enabled transport block, the first field, the second field, and the third field, which occupy 1 bit, 7 bits, 4 bits, and 3 bits respectively. When rank≤4, the NDI, the first field, and 1 bit in the third field indicate the spatial layer number and the precoding matrix, the second field indicates the DMRS port, and the remaining bits in the third field indicate the association relationship between the DMRS port and the PTRS port. When rank>4, the first field indicates the spatial layer number and the precoding matrix, the second field indicates the DMRS port, and the third field indicates the association relationship between the DMRS port and the PTRS port.

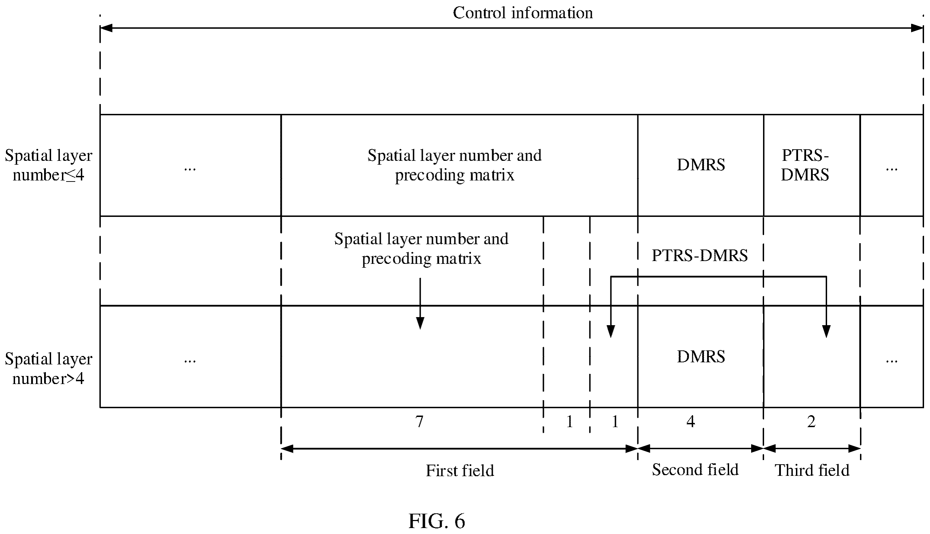

FIG. 6 is a diagram of another format of the first information. A difference between the first information shown in FIG. 6 and the first information shown in FIG. 4 lies in that the NDI associated with the un-enabled transport block does not indicate the spatial layer number and/or the precoding matrix in FIG. 6. As shown in FIG. 6, the first information includes the first field, the second field, and the third field, which occupy 9 bits, 4 bits, and 2 bits respectively. When rank (that is, spatial layer number)≤4, the first field indicates the spatial layer number and the precoding matrix (which may be separately indicated or jointly indicated), the second field indicates the DMRS port, and the third field indicates the association relationship between the DMRS port and the PTRS port. When rank>4, 7 bits in the first field indicate the spatial layer

26

number and the precoding matrix (which may be separately indicated or jointly indicated), the second field indicates the DMRS port, and the third field and 1 bit in the remaining 2 bits in the first field together indicate the association relationship between the PTRS port and the PTRS port.

It should be noted that a relative location between any two of the first field, the second field, and the third field shown in FIG. 6 or any accompanying drawing related to a format of the first information in this specification is merely an example. Actually, a relative location between any two of the plurality of fields may alternatively be different from that shown in the figure. For example, the first field and the second field may be adjacent to each other or may not be adjacent to each other, and the second field and the third field may be adjacent to each other or may not be adjacent to each other.

Scenario 2: CB-based partial-coherent precoding matrix

For 8Tx, there are two types of partial coherence. The first type is that eight antenna ports are classified into two antenna port groups, each group includes four coherent antenna ports, and inter-group antenna ports are non-coherent. The second type is that eight antenna ports are classified into four antenna port groups, each group includes two coherent antenna ports, and inter-group antenna ports are non-coherent.

The following separately describes two possible structures of the partial-coherent precoding matrix.

A. First structure of the partial-coherent precoding matrix

Regardless of the first type of partial coherence or the second type of partial coherence, based on the spatial layer number, there are two cases for a structure of a precoding matrix as follows.

(1) When spatial layer number=1, the structure of the precoding matrix satisfies Formula (1) or Formula (2) below:

$$P = \begin{bmatrix} P_1 \\ 0 \end{bmatrix} \ (1)$$

$$P = \begin{bmatrix} 0 \\ P_1 \end{bmatrix} \ (2)$$

(2) When spatial layer number>1, the structure of the precoding matrix satisfies Formula (3) below:

$$P = \begin{bmatrix} P_1 & 0 \\ 0 & P_2 \end{bmatrix}$$

Herein, a number of rows of each of $P_1$, $P_2$, and $0$ is 4, and $0$ is a zero matrix. A number of rows of $P$ is 8. Therefore, 8Tx can be enabled.

For the first type of partial coherence, $P_1$ and $P_2$ are full-coherent precoding matrices in a 4Tx precoding matrix set. That is, each element in $P_1$ and $P_2$ is a non-zero element.

For the second type of partial coherence, $P_1$ and $P_2$ are partial-coherent precoding matrices in a 4Tx precoding matrix set. That is, each column of $P_1$ and $P_2$ has a maximum of two non-zero elements, and at least one column of each of $P_1$ and $P_2$ has two non-zero elements.

$P_1$ and $P_2$ meet a rule 1: A difference between numbers of columns of $P_1$ and $P_2$ is -1, 0, or 1.

Alternatively, $P_1$ and $P_2$ meet a rule 2: A difference between numbers of columns of $P_1$ and $P_2$ is -1 or 0.

The following separately provides descriptions with reference to the first type of partial coherence and the second type of partial coherence.

(I) The terminal supports the first type of partial coherence, but does not support the second type of partial coherence.

In this scenario, $P_1$ and $P_2$ each are a full-coherent precoding matrix in a 4Tx precoding matrix set. That is, each element in $P_1$ and $P_2$ is a non-zero element. Precoding matrix sets corresponding to spatial layer number=1 to 4 shown in Table 1 to Table 4 above are used as an example. There are 16, 8, 4, and 2 full-coherent precoding matrices corresponding to spatial layer number=1 to 4 respectively.

The following separately describes in detail two cases: Spatial layer number≤4, in other words, the first information includes the first indication information; and spatial layer number>4, in other words, the first information includes the second indication information.

(1) Spatial layer number≤4:

The first field is 10 bits, 2 bits in the first field indicate the first spatial layer number, and the remaining 8 bits in the first field indicate the first precoding matrix. Alternatively, the first field is 9 bits, the NDI associated with the un-enabled transport block and 1 bit in the first field together indicate the first spatial layer number, and the remaining bits in the first field indicate the first precoding matrix. Alternatively, the first field is 9 bits, 2 bits in the first field indicate the first spatial layer number, and the NDI associated with the un-enabled transport block and the remaining bits in the first field together indicate the first precoding matrix. The following describes in detail how to indicate the first precoding matrix.

When spatial layer number=1, 1 bit indicates a structure of the first precoding matrix $P$, and 4 bits indicate $P_1$. The first precoding matrix $P$ satisfies one of structures shown in Formula (1) and Formula (2) above. $P_1$ is one full-coherent precoding matrix in a full-coherent precoding matrix set corresponding to spatial layer number=1. Because there are a total of 16 full-coherent precoding matrices corresponding to spatial layer number=1, at least 4 bits are required to indicate $P_1$. In this case, a total of 5 bits can indicate the first precoding matrix.

It should be understood that the 4 bits indicating $P_1$ means that the 4 bits indicate one TPMI (denoted as a first TPMI), and the first TPMI indicates one precoding matrix, namely, $P_1$. $P_1$ is one sub-block in the first precoding matrix $P$, $P_1$ is a 4*1 matrix, and $P$ is an 8*1 matrix.

When spatial layer number=2, 3, or 4, $P_1$ and $P_2$ need to be separately indicated. Specifically, two TPMIs (denoted as a first TPMI and a second TPMI) need to be separately indicated, and the first TPMI and the second TPMI respectively indicate precoding matrices, namely, $P_1$ and $P_2$. Each of $P_1$ and $P_2$ is one sub-block in the first precoding matrix $P$, and the first precoding matrix $P$ satisfies Formula (3) above. In addition, $P$ is an 8*P matrix, $P_1$ is a 4*$P_1$ matrix, $P_2$ is a 4*$P_2$ matrix, and $P_1$+$P_2$=P. If $P_1$ and $P_2$ meet the foregoing rule 1, $P_1$-$P_2$=-1, 0, or 1. If $P_1$ and $P_2$ meet the foregoing rule 2, $P_1$-$P_2$=-1 or 0.

a. Spatial layer number=2: Regardless of whether $P_1$ and $P_2$ meet the rule 1 or the rule 2, numbers of columns of $P_1$ and $P_2$ are both 1. Because each of $P$, and $P_2$ is one full-coherent precoding matrix in a full-coherent precoding matrix set corresponding to spatial layer number=1, each of $P_1$ and $P_2$ needs to be indicated by at least 4 bits, that is, a total of 8 bits can indicate the first precoding matrix.

b. Spatial layer number=3:

If $P_1$ and $P_2$ meet the rule 1, one of numbers of columns of $P_1$ and $P_2$ is 1, and the other is 2. In this case, in $P_1$ and $P_2$, a matrix with one column or a matrix with two columns further needs to be indicated. Because one of $P_1$ and $P_2$ is one full-coherent precoding matrix in a full-coherent precoding matrix set corresponding to spatial layer number=1, and the other is one full-coherent precoding matrix in a full-coherent precoding matrix set corresponding to spatial layer number=2, at least 4 bits and 3 bits are respectively required for indication. Therefore, a total of 8 bits (1 bit indicating the number of columns and 7 bits indicating $P_1$ and $P_2$) can indicate the first precoding matrix.

If $P_1$ and $P_2$ meet the rule 2, a number of columns of $P_1$ is 1, and a number of columns of $P_2$ is 2. In this case, the number of columns of $P_1$ or $P_2$ does not need to be indicated. Because $P_1$ and $P_2$ are respectively one full-coherent precoding matrix in a full-coherent precoding matrix set corresponding to spatial layer number=1 and one full-coherent precoding matrix in a full-coherent precoding matrix set corresponding to spatial layer number=2, at least 4 bits and 3 bits are respectively required for indication. Therefore, a total of 7 bits can indicate the first precoding matrix.

c. Spatial layer number=4: Regardless of whether $P_1$ and $P_2$ meet the rule 1 or the rule 2, numbers of columns of $P_1$ and $P_2$ are both 2. Because each of $P_1$ and $P_2$ is one full-coherent precoding matrix in a full-coherent precoding matrix set corresponding to spatial layer number=2, each of $P_1$ and $P_2$ needs to be indicated by at least 3 bits, that is, a total of 6 bits can indicate the first precoding matrix.

(2) Spatial layer number>4:

2 bits in the first field indicate the second spatial layer number, and some of the remaining bits in the first field indicate the second precoding matrix. The following describes how to indicate the second precoding matrix.

Specifically, some of the remaining bits in the first field indicate two TPMIs (denoted as a first TPMI and a second TPMI), and the first TPMI and the second TPMI respectively indicate precoding matrices, namely, $P_1$ and $P_2$. Each of $P_1$ and $P_2$ is one sub-block in the second precoding matrix $P$, and the second precoding matrix $P$ satisfies Formula (3) above. In addition, $P$ is an 8*M matrix, $P_1$ is a 4*$M_1$ matrix, $P_2$ is a 4*$M_2$ matrix, and $M_1$+$M_2$=M. If $P_1$ and $P_2$ meet the foregoing rule 1, $M_1$-$M_2$=-1, 0, or 1. If $P_1$ and $P_2$ meet the foregoing rule 2, $M_1$-$M_2$=-1 or 0.

Spatial layer number=5:

If $P_1$ and $P_2$ meet the rule 1, one of numbers of columns of $P_1$ and $P_2$ is 2, and the other is 3. In this case, in $P_1$ and $P_2$, a matrix with two columns or a matrix with three columns needs to be indicated by 1 bit. Because one of $P_1$ and $P_2$ is one full-coherent precoding matrix in a full-coherent precoding matrix set corresponding to spatial layer number=2, and the other is one full-coherent precoding matrix in a full-coherent precoding matrix set corresponding to spatial layer number=3, at least 3 bits and 2 bits are respectively required for indication. Therefore, a total of 6 bits (1 bit indicating the number of columns and 5 bits indicating $P_1$ and $P_2$) can indicate the second precoding matrix.

If $P_1$ and $P_2$ meet the rule 2, a number of columns of $P_1$ is 2, and a number of columns of $P_2$ is 3. In this case, the number of columns of $P_1$ or $P_2$ does not need to be indicated. Because $P_1$ and $P_2$ are respectively one full-coherent precoding matrix in a full-coherent precoding matrix set corresponding to spatial layer number=2 and one full-coherent precoding matrix in a full-coherent precoding matrix set corresponding to spatial layer number=3, at least 3 bits and 2 bits are respectively required for indication. Therefore, a total of 5 bits can indicate the second precoding matrix.

Spatial layer number=6: Regardless of whether $P_1$ and $P_2$ meet the rule 1 or the rule 2, numbers of columns of $P_1$ and $P_2$ are both 3. Because each of $P_1$ and $P_2$ is one full-coherent precoding matrix in a full-coherent precoding matrix set corresponding to spatial layer number=3, each of $P_1$ and $P_2$ needs to be indicated by at least 2 bits, that is, a total of 4 bits can indicate the second precoding matrix.

Spatial layer number=7:

If $P_1$ and $P_2$ meet the rule 1, one of numbers of columns of $P_1$ and $P_2$ is 3, and the other is 4. In this case, the first field is further used to determine the number of columns of $P_1$

or $P_2$. To be specific, 1 bit in the first field indicates a matrix with three columns or a matrix with four columns, in $P_1$ and $P_2$. Because one of $P_1$ and $P_2$ is one full-coherent precoding matrix in a full-coherent precoding matrix set corresponding to spatial layer number=3, and the other is one full-coherent precoding matrix in a full-coherent precoding matrix set corresponding to spatial layer number=4, at least 2 bits and 1 bit are respectively required for indication. Therefore, a total of 4 bits (1 bit indicating the number of columns and 3 bits indicating $P_1$ and $P_2$) can indicate the second precoding matrix.

If $P_1$ and $P_2$ meet the rule 2, a number of columns of $P_1$ is 3, and a number of columns of $P_2$ is 4. In this case, the number of columns of $P_1$ or $P_2$ does not need to be indicated. $P_1$ and $P_2$ are respectively one full-coherent precoding matrix in a full-coherent precoding matrix set corresponding to spatial layer number=3 and one full-coherent precoding matrix in a full-coherent precoding matrix set corresponding to spatial layer number=4, at least 2 bits and 1 bit are respectively required for indication. Therefore, a total of 3 bits can indicate the second precoding matrix.

Spatial layer number=8: Regardless of whether $P_1$ and $P_2$ meet the rule 1 or the rule 2, numbers of columns of $P_1$ and $P_2$ are both 4. Because each of $P_1$ and $P_2$ is one full-coherent precoding matrix in a full-coherent precoding matrix set corresponding to spatial layer number=4, each of $P_1$ and $P_2$ needs to be indicated by at least 1 bit, that is, a total of 2 bits can indicate the first precoding matrix.

In conclusion, in the case in which the first field is 10 bits, if $P_1$ and $P_2$ meet the rule 1, when the spatial layer number is 5, 6, 7, or 8, except for the bits indicating the corresponding spatial layer number and precoding matrix, 2 bits, 4 bits, 4 bits, or 6 bits are left in the first field respectively; or if $P_1$ and $P_2$ meet the rule 2, when the spatial layer number is 5, 6, 7, or 8, except for the bits indicating the corresponding spatial layer number and precoding matrix, 3 bits, 4 bits, 5 bits, or 6 bits are left in the first field respectively. In the case in which the first field is 9 bits, if $P_1$ and $P_2$ meet the rule 1, when the spatial layer number is 5, 6, 7, or 8, except for the bits indicating the corresponding spatial layer number and precoding matrix, 1 bit, 3 bits, 3 bits, or 5 bits are left in the first field respectively; or if $P_1$ and $P_2$ meet the rule 2, when the spatial layer number is 5, 6, 7, or 8, except for the bits indicating the corresponding spatial layer number and precoding matrix, 2 bits, 3 bits, 4 bits, or 5 bits are left in the first field respectively.

Further, for example, the first-type antenna port is a DMRS port, and the second-type antenna port is a PTRS port. If an uplink PTRS is configured, the terminal needs to send a PTRS to estimate phase noise. If the terminal supports a first-type partial-coherent precoding matrix, in an implementation, two PTRS ports (denoted as a PTRS port 0 and a PTRS port 1 in the following descriptions) may be configured for the terminal, and each PTRS port is associated with one DMRS port.

In some embodiments, based on different spatial layer numbers, an association relationship between a DMRS port and a PTRS port is as follows: When the spatial layer number is 1, there is only one DMRS port, and one of the PTRS port 0 and the PTRS port 1 is associated with the one DMRS port; or when the spatial layer number is one of 2 to 8, the PTRS port 0 and the PTRS port 1 each are associated with one DMRS port. Specifically, when the spatial layer number is one of 2 to 8, the spatial layer number of DMRS ports are classified into two parts that are denoted as a first subset and a second subset, where the first subset and the second subset each include one or more DMRS ports in the spatial layer number of DMRS ports, the first subset and the second subset have no intersection, and a sum of a number of DMRS ports included in the first subset and a number of DMRS ports included the second subset is the spatial layer number. The PTRS port 0 is associated with one DMRS port in the first subset, and the PTRS port 1 is associated with one DMRS port in the second subset. Alternatively, the PTRS port 0 is associated with one DMRS port in the second subset, and the PTRS port 1 is associated with one DMRS port in the first subset.

In an example, if the spatial layer number is an even number from 2 to 8, the number of DMRS ports included in the first subset is equal to the number of DMRS ports included in the second subset; or if the spatial layer number is an odd number from 2 to 8, a difference between the number of DMRS ports included in the first subset and the number of DMRS ports included in the second subset is 1 or -1. It should be understood that, when the spatial layer number is not limited to an odd number from 2 to 8 in this application, the difference between the number of DMRS ports included in the first subset and the number of DMRS ports included in the second subset is 1 or -1. For example, the difference between the number of DMRS ports included in the first subset and the number of DMRS ports included in the second subset may alternatively be another value. In addition, a maximum number of DMRS ports included in each of the first subset and the second subset is 4.

Further, in an example, if the spatial layer number is an even number from 2 to 8, the first spatial layer number/2 DMRS ports in the spatial layer number of DMRS ports indicated by the second field are associated with one PTRS port (for example, the PTRS port 0), and the last spatial layer number/2 DMRS ports in the spatial layer number of DMRS ports are associated with the other PTRS port (for example, the PTRS port 1). If the spatial layer number is an odd number from 2 to 8, the first $\left\lceil \text{spatial layer number} / 2 \right\rceil$ DMRS ports in the spatial layer number of DMRS ports are associated with one PTRS port (for example, the PTRS port 0), and the last $\left\lceil \text{spatial layer number} / 2 \right\rceil$ DMRS ports in the spatial layer number of DMRS ports are associated with another PTRS port (for example, the PTRS port 1); or the first

$\left\lceil \text{spatial layer number} / 2 \right\rceil$ DMRS ports in the spatial layer number of DMRS ports are associated with one PTRS port (for example, the PTRS port 0), and the last $\left\lceil \text{spatial layer number} / 2 \right\rceil$ DMRS ports in the spatial layer number of DMRS ports are associated with the other PTRS port (for example, the PTRS port 1).

For example, refer Table 6. If a DMRS port corresponding to spatial layer number=1 is the DMRS port 1, the PTRS port 0 is associated with the DMRS port 1, and the PTRS port 1 is not associated with any DMRS port; or the PTRS port 0 is not associated with any DMRS port, and the PTRS port 1 is associated with the DMRS port 1. Refer to Table 14. DMRS ports corresponding to spatial layer number=6 are the DMRS port 0, the DMRS port 1, the DMRS port 2, the DMRS port 3, the DMRS port 4, and the DMRS port 6. In this case, the PTRS port 0 may be associated with one of the DMRS port 0, the DMRS port 1, and the DMRS port 2, and the PTRS port 1 may be associated with one of the DMRS port 3, the DMRS port 4, and the DMRS port 6. Refer to Table 15. DMRS ports corresponding to spatial layer number=7 are the DMRS port 0, the DMRS port 1, the DMRS port 2, the DMRS port 3, the DMRS port 4, the DMRS port 5, and the DMRS port 6. In this case, the PTRS port 0 may be associated with one of the DMRS port 0, the DMRS port 1, and the DMRS port 2, and the PTRS port 1 may be associated with one of the DMRS port 3, the DMRS port 4, the DMRS port 5, and the DMRS port 6; or the PTRS port 0 may be associated with one of the DMRS port 0, the DMRS port 1, the DMRS port 2, and the DMRS port 3, and the PTRS port 1 may be associated with one of the DMRS port 4, the DMRS port 5, and the DMRS port 6.

In conclusion, when spatial layer number≤4, the two PTRS ports each are associated with at most one of two DMRS ports. Therefore, at least 2 bits can indicate the association relationship between the DMRS port and the PTRS port. When spatial layer number=5, one PTRS port is associated with one of two DMRS ports, and the other PTRS port is associated with one of three DMRS ports. Therefore, at least 3 bits can indicate the association relationship between the DMRS port and the PTRS port. When spatial layer number=6, the two PTRS ports each are associated with one of three DMRS ports. Therefore, at least 4 bits can indicate the association relationship between the DMRS port and the PTRS port. When spatial layer number=7, one PTRS port is associated with one of three DMRS ports, and the other PTRS port is associated with one of four DMRS ports. Therefore, at least 4 bits can indicate the association relationship between the DMRS port and the PTRS port. When spatial layer number=8, the two PTRS ports each are associated with one of four DMRS ports. Therefore, at least 4 bits can indicate the association relationship between the DMRS port and the PTRS port.

Therefore, in a possible implementation, the third field may be 2 bits. When spatial layer number≤4, the third field indicates the association relationship between the first antenna port set and the second antenna port set. When spatial layer number>4, the third field and some or all of the remaining bits in the first field may indicate the association relationship between the third antenna port set and the fourth antenna port set.

For example, when spatial layer number≤4, the association relationship between the first antenna port set and the second antenna port set indicated by the third field is shown in Table 11 above. The first column and the third column represent the values of the most significant bit and the least significant bit in the third field respectively. When the spatial layer number=1, if the value of the most significant bit in the third field is 0 and the least significant bit is reserved, it indicates that the PTRS port 0 is associated with the DMRS port; or if the most significant bit in the third field is reserved and the least significant bit is 0, it indicates that the PTRS port 1 is associated with the DMRS port. As described above, when the spatial layer number>1, the DMRS ports are classified into the two parts (namely, the first subset and the second subset), and the two PTRS ports each are associated with one DMRS port in the two parts. In this case, if the most significant bit in the third field is 0, it indicates that the PTRS port 0 is associated with a 1st DMRS port in the first subset; or if the most significant bit in the third field is 1, it indicates that the PTRS port 0 is associated with a 2nd DMRS port in the first subset. If the least significant bit in the third field is 0, it indicates that the PTRS port 1 is associated with a 1st DMRS port in the second subset; or if the most significant bit in the third field is 1, it indicates that the PTRS port 1 is associated with a 2nd DMRS port in the second subset.

For example, the first field is 9 bits. When spatial layer number=5, if $P_1$ and $P_2$ meet the rule 1, the remaining 1 bit in the first field may indicate an association relationship between one of the PTRS ports and a DMRS port corresponding to a sub-block whose number of columns is 2 (if the number of columns of $P_1$ is 2, the sub-block is $P_1$; or if the number of columns of $P_2$ is 2, the sub-block is $P_2$). If $P_1$ and $P_2$ meet the rule 2, the remaining 2 bits (1 bit in the remaining 2 bits) in the first field may indicate an association relationship between one of the PTRS ports and a DMRS port corresponding to a sub-block whose number of columns is 2 (if the number of columns of $P_1$ is 2, the sub-block is $P_1$; or if the number of columns of $P_2$ is 2, the sub-block is $P_2$). In addition, the third field indicates an association relationship between the other PTRS port and a DMRS port corresponding to the other sub-block. When spatial layer number=6/7/8, regardless of whether $P_1$ and $P_2$ meet the rule 1 or the rule 2, 2 bits in the remaining bits in the first field may indicate an association relationship between one of the PTRS ports and the first subset, and the third field may indicate an association relationship between the other PTRS port and the second subset. It should be understood that the 2 bits in the remaining bits in the first field actually indicate an association relationship between one of the PTRS ports and a DMRS port corresponding to one of $P_1$ and $P_2$, and the third field indicates an association relationship between the other PTRS port and a DMRS port corresponding to the other of $P_1$ and $P_2$. It should be understood that, for a correspondence that is between the PTRS and the DMRS and that is indicated by the 2 bits, refer to Table 10 shown above.

It should be understood that a specific bit that is in the remaining bits and that indicates the association relationship between the third antenna port set and the fourth antenna port set together with the third field is not limited in this application. For example, when spatial layer number>4, a bit with a high ranking (namely, a high bit) in the first field may be set to indicate the spatial layer number and the precoding matrix, and the remaining bit with a low ranking in the first field indicates the association relationship between the third antenna port set and the fourth antenna port set together with the third field.

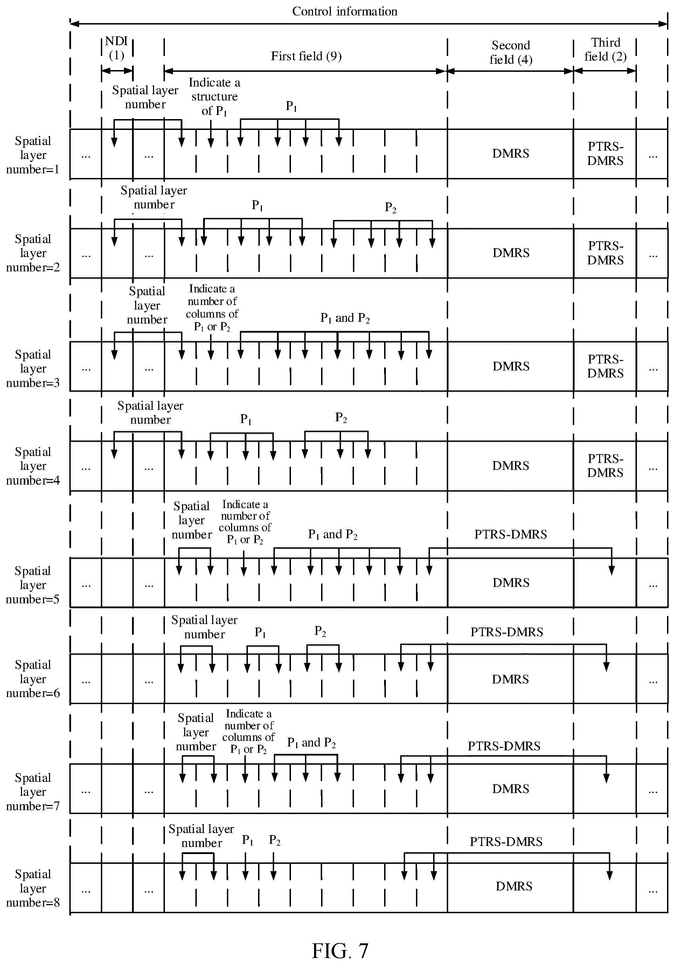

For example, FIG. 7 is a diagram of a format of the first information. As shown in FIG. 7, the first information includes the NDI associated with the un-enabled transport block, the first field, the second field, and the third field during spatial layer number≤4, which occupy 1 bit, 9 bits, 4 bits, and 2 bits respectively. When spatial layer number≤4, the NDI associated with the un-enabled transport block and 1 bit in the first field together indicate the spatial layer number. In addition, when spatial layer numbers are different, information indicated by a same bit may be different. Meanings of bits corresponding to different spatial layer numbers are defined, so that the first indication information and the second indication information can be indicated by a same bit.

It should be understood that FIG. 7 is merely an example of the first information, and any proper variation of the first information shown in FIG. 7 shall fall within the protection scope of this application.

It should be understood that in the first field, specific bits indicating the first spatial layer number, and specific bits indicating $P_1$ and $P_2$ are not limited in this application. In the first field, bits indicating the second spatial layer number, bits used to determine the number of columns of $P_1$ or $P_2$, and bits indicating $P_1$ and $P_2$ are not limited either in this application. Any proper indication manner should fall within the protection scope of this application, provided that it is ensured that the terminal and the network device interpret bits in a same manner.

(II) The terminal supports the second type of partial coherence, but does not support the first type of partial coherence.

In this scenario, $P_1$ and $P_2$ each are a partial-coherent precoding matrix in a 4Tx codebook. That is, two elements in each column of $P_1$ and $P_2$ are non-zero elements. Precoding matrix sets corresponding to spatial layer number=1 to 4 shown in Table 1 to Table 4 above are used as an example. There are 8, 8, 2, and 2 partial-coherent precoding matrices corresponding to spatial layer number=1 to 4 respectively.

The following separately describes in detail two cases: Spatial layer number≤4, in other words, the first information includes the first indication information; and spatial layer number>4, in other words, the first information includes the second indication information.

(1) Spatial layer number≤4:

If $P_1$ and $P_2$ meet the rule 1, the first field may be 9 bits; or if $P_1$ and $P_2$ meet the rule 2, the first field may be 8 bits. 2 bits in the first field indicate the first spatial layer number, and the remaining bits in the first field indicate the first precoding matrix.

Alternatively, if $P_1$ and $P_2$ meet the rule 1, the first field may be 8 bits; or if $P_1$ and $P_2$ meet the rule 2, the first field may be 7 bits. The NDI associated with the un-enabled transport block and 1 bit in the first field together indicate the first spatial layer number, and the remaining bits in the first field indicate the first precoding matrix. Alternatively, 2 bits in the first field indicate the first spatial layer number, and the NDI associated with the un-enabled transport block and the remaining bits in the first field together indicate the first precoding matrix.

A specific manner of indicating the first precoding matrix is similar to the manner, of indicating the first precoding matrix, described above in "(I) The terminal supports the first type of partial coherence, but does not support the second type of partial coherence". Brief descriptions are provided as follows.

When spatial layer number=1, the remaining bits in the first field may indicate $P_1$ and a structure of the first precoding matrix **P**. The first precoding matrix satisfies one of structures shown in Formula (1) and Formula (2) above. $P_1$ is one partial-coherent precoding matrix in a partial-coherent precoding matrix set corresponding to spatial layer number=1. Because there are a total of eight partial-coherent precoding matrices corresponding to spatial layer number=1, at least 3 bits are required to indicate $P_1$. There are two structures of the first precoding matrix **P**, and at least 1 bit is required for indication. In this case, a total of at least 4 bits are required to indicate the first precoding matrix.

It should be understood that the first field actually indicates one TPMI (denoted as a first TPMI), and the first TPMI indicates one precoding matrix, namely, $P_1$. $P_1$ is one sub-block in the first precoding matrix **P**, $P_1$ is a 4*1 matrix, and P is an 8*1 matrix.

When spatial layer number=2, 3, or 4, the first field may indicate $P_1$ and $P_2$. Specifically, the first field actually indicates two TPMIs (denoted as a first TPMI and a second TPMI), and the first TPMI and the second TPMI respectively indicate precoding matrices, namely, $P_1$ and $P_2$. Each of $P_1$ and $P_2$ is one sub-block in the first precoding matrix **P**, and the first precoding matrix **P** satisfies Formula (3) above. In addition, **P** is an 8*P matrix, $P_1$ is a 4*$P_1$ matrix, $P_2$ is a 4*$P_2$ matrix, and $P_1$+$P_2$=P. If $P_1$ and $P_2$ meet the foregoing rule 1, $P_1$-$P_2$=-1, 0, or 1. If $P_1$ and $P_2$ meet the foregoing rule 2, $P_1$-$P_2$=-1 or 0.

a. Spatial layer number=2: Regardless of whether $P_1$ and $P_2$ meet the rule 1 or the rule 2, numbers of columns of $P_1$ and $P_2$ are both 1. Because each of $P_1$ and $P_2$ is one partial-coherent precoding matrix in a partial-coherent precoding matrix set corresponding to spatial layer number=1, each of $P_1$ and $P_2$ needs to be indicated by at least 3 bits, that is, a total of 6 bits can indicate the first precoding matrix.

b. Spatial layer number=3:

If $P_1$ and $P_2$ meet the rule 1, one of numbers of columns of $P_1$ and $P_2$ is 1, and the other is 2. In this case, the first field is further used to determine the number of columns of $P_1$ or $P_2$. To be specific, 1 bit in the first field indicates a matrix with one column or a matrix with two columns, in $P_1$ and $P_2$. Because one of $P_1$ and $P_2$ is one partial-coherent precoding matrix in a partial-coherent precoding matrix set corresponding to spatial layer number=1, and the other is one partial-coherent precoding matrix in a partial-coherent precoding matrix set corresponding to spatial layer number=2, at least 3 bits are separately required for indication. Therefore, a total of 7 bits (1 bit indicating the number of columns and 6 bits indicating $P_1$ and $P_2$) can indicate the first precoding matrix.

If $P_1$ and $P_2$ meet the rule 2, a number of columns of $P_1$ is 1, and a number of columns of $P_2$ is 2. In this case, the number of columns of $P_1$ or $P_2$ does not need to be indicated. Because $P_1$ and $P_2$ are respectively one partial-coherent precoding matrix in a partial-coherent precoding matrix set corresponding to spatial layer number=1 and one partial-coherent precoding matrix in a partial-coherent precoding matrix set corresponding to spatial layer number=2, at least 3 bits are separately required for indication. Therefore, a total of 6 bits can indicate the first precoding matrix.

c. Spatial layer number=4: Regardless of whether $P_1$ and $P_2$ meet the rule 1 or the rule 2, numbers of columns of $P_1$ and $P_2$ are both 2. Because each of $P_1$ and $P_2$ is one partial-coherent precoding matrix in a partial-coherent precoding matrix set corresponding to spatial layer number=2, each of $P_1$ and $P_2$ needs to be indicated by at least 3 bits, that is, a total of 6 bits can indicate the first precoding matrix.

(2) Spatial layer number>4:

2 bits in the first field indicate the second spatial layer number, and some of the remaining bits in the first field indicate the second precoding matrix. A specific manner of indicating the second precoding matrix is similar to the manner, of indicating the second precoding matrix, described above in "(I) The terminal supports the first type of partial coherence, but does not support the second type of partial coherence". Brief descriptions are provided as follows.

The first field may indicate $P_1$ and $P_2$. Specifically, the first field actually indicates two TPMIs (denoted as a first TPMI and a second TPMI), and the first TPMI and the second TPMI respectively indicate precoding matrices, namely, $P_1$ and $P_2$. Each of $P_1$ and $P_2$ is one sub-block in the second precoding matrix **P**, and the second precoding matrix **P** satisfies Formula (3) above. In addition, **P** is an 8*M matrix, $P_1$ is a 4*$M_1$ matrix, $P_2$ is a 4*$M_2$ matrix, and $M_1$+$M_2$=P. If $P_1$ and $P_2$ meet the foregoing rule 1, $M_1$-$M_2$=-1, 0, or 1. If $P_1$ and $P_2$ meet the foregoing rule 2, $M_1$-$M_2$=-1 or 0.

Spatial layer number=5:

If $P_1$ and $P_2$ meet the rule 1, one of numbers of columns of $P_1$ and $P_2$ is 2, and the other is 3. In this case, the first field is further used to determine the number of columns of $P_1$ or $P_2$. To be specific, 1 bit in the first field indicates a matrix with two columns or a matrix with three columns, in $P_1$ and $P_2$. Because one of $P_1$ and $P_2$ is one partial-coherent precoding matrix in a partial-coherent precoding matrix set corresponding to spatial layer number=2, and the other is one partial-coherent precoding matrix in a partial-coherent precoding matrix set corresponding to spatial layer number=3, at least 3 bits and 1 bit are respectively required for indication. Therefore, a total of 5 bits (1 bit indicating the number of columns and 4 bits indicating $P_1$ and $P_2$) can indicate the second precoding matrix.

If $P_1$ and $P_2$ meet the rule 2, a number of columns of $P_1$ is 2, and a number of columns of $P_2$ is 3. In this case, the number of columns of $P_1$ or $P_2$ does not need to be indicated. Because $P_1$ and $P_2$ are respectively one partial-coherent precoding matrix in a partial-coherent precoding matrix set corresponding to spatial layer number=2 and one partial-coherent precoding matrix in a partial-coherent precoding matrix set corresponding to spatial layer number=3, at least 3 bits and 1 bit are respectively required for indication. Therefore, a total of 4 bits can indicate the second precoding matrix.

Spatial layer number=6: Regardless of whether $P_1$ and $P_2$ meet the rule 1 or the rule 2, numbers of columns of $P_1$ and $P_2$ are both 3. Because each of $P_1$ and $P_2$ is one partial-coherent precoding matrix in a partial-coherent precoding matrix set corresponding to spatial layer number=3, each of $P_1$ and $P_2$ needs to be indicated by at least 1 bit, that is, a total of 2 bits can indicate the second precoding matrix.

Spatial layer number=7:

If $P_1$ and $P_2$ meet the rule 1, one of numbers of columns of $P_1$ and $P_2$ is 3, and the other is 4. In this case, the first field is further used to determine the number of columns of $P_1$ or $P_2$. To be specific, 1 bit in the first field indicates a matrix with three columns or a matrix with four columns, in $P_1$ and $P_2$. Because one of $P_1$ and $P_2$ is one partial-coherent precoding matrix in a partial-coherent precoding matrix set corresponding to spatial layer number=3, and the other is one partial-coherent precoding matrix in a partial-coherent precoding matrix set corresponding to spatial layer number=4, at least 1 bit is separately required for indication. Therefore, a total of 3 bits (1 bit indicating the number of columns and 2 bits indicating $P_1$ and $P_2$) can indicate the second precoding matrix.

If $P_1$ and $P_2$ meet the rule 2, a number of columns of $P_1$ is 3, and a number of columns of $P_2$ is 4. In this case, the number of columns of $P_1$ or $P_2$ does not need to be indicated. Because $P_1$ and $P_2$ are respectively one partial-coherent precoding matrix in a partial-coherent precoding matrix set corresponding to spatial layer number=3 and one partial-coherent precoding matrix in a partial-coherent precoding matrix set corresponding to spatial layer number=4, at least 1 bit is separately required for indication. Therefore, a total of 2 bits can indicate the second precoding matrix.

Spatial layer number=8: Regardless of whether $P_1$ and $P_2$ meet the rule 1 or the rule 2, numbers of columns of $P_1$ and $P_2$ are both 4. Because each of $P_1$ and $P_2$ is one partial-coherent precoding matrix in a partial-coherent precoding matrix set corresponding to spatial layer number=4, each of $P_1$ and $P_2$ needs to be indicated by at least 1 bit, that is, a total of 2 bits can indicate the second precoding matrix.

In conclusion, in the case in which the first field is 9 bits, if $P_1$ and $P_2$ meet the rule 1, when the spatial layer number is 5, 6, 7, or 8, except for the bits indicating the corresponding spatial layer number and precoding matrix, 2 bits, 5 bits, 4 bits, or 5 bits are left in the first field respectively; or if $P_1$ and $P_2$ meet the rule 2, when the spatial layer number is 5, 6, 7, or 8, except for the bits indicating the corresponding spatial layer number and precoding matrix, 1 bit, 4 bits, 3 bits, or 4 bits are left in the first field respectively. In the case in which the first field is 8 bits, if $P_1$ and $P_2$ meet the rule 1, when the spatial layer number is 5, 6, 7, or 8, except for the bits indicating the corresponding spatial layer number and precoding matrix, 1 bit, 4 bits, 3 bits, or 4 bits are left in the first field respectively; or if $P_1$ and $P_2$ meet the rule 2, when the spatial layer number is 5, 6, 7, or 8, except for the bits indicating the corresponding spatial layer number and precoding matrix, 2 bits, 4 bits, 4 bits, or 4 bits are left in the first field respectively.

Further, for example, the first-type antenna port is a DMRS port, and the second-type antenna port is a PTRS port. If an uplink PTRS is configured, the terminal needs to send a PTRS to estimate phase noise. If the terminal supports a second-type partial-coherent precoding matrix, in an implementation, two PTRS ports may be configured for the terminal.

Therefore, in some embodiments, the third field may be 2 bits. When spatial layer number<4, the third field indicates the association relationship between the first antenna port set and the second antenna port set. When spatial layer number>4, the third field and some or all of the remaining bits in the first field may indicate the association relationship between the third antenna port set and the fourth antenna port set.

It should be understood that for how the third field specifically indicates the association relationship between the first antenna port set and the second antenna port set and how the third field and some or all of the remaining bits in the first field specifically indicate the association relationship between the third antenna port set and the fourth antenna port set, refer to the foregoing descriptions that the terminal supports the first type of partial coherence. Details are not described herein again.

It should be understood that a specific bit that is in the remaining bits and that indicates the association relationship between the third antenna port set and the fourth antenna port set together with the third field is not limited in this application. For example, when spatial layer number>4, a bit with a high ranking (namely, a high bit) in the first field may be set to indicate the spatial layer number and the precoding matrix, and the remaining bit with a low ranking in the first field indicates the association relationship between the third antenna port set and the fourth antenna port set together with the third field.

It should be understood that in the first field, specific bits indicating the first spatial layer number, and specific bits indicating $P_1$ and $P_2$ are not limited in this application. In the first field, bits indicating the second spatial layer number, bits used to determine the number of columns of $P_1$ or $P_2$, and bits indicating $P_1$ and $P_2$ are not limited either in this application. Any proper indication manner should fall within the protection scope of this application, provided that it is ensured that the terminal and the network device interpret bits in a same manner.

(III) The terminal supports both the first type of partial coherence and the second type of partial coherence.

It should be understood that, in this scenario, $P_1$ and $P_2$ have a same coherence capability, that is, both are full-coherent precoding matrices, or both are partial-coherent precoding matrices.

In some embodiments, the first information further includes third indication information, and the third indication information indicates whether $P_1$ and $P_2$ are full-coherent precoding matrices or partial-coherent precoding matrices.

If the third indication information indicates that $P_1$ and $P_2$ are full-coherent precoding matrices, for specific content of the first information, refer to the foregoing descriptions in "(I) The terminal supports the first type of partial coherence, but does not support the second type of partial coherence". If the third indication information indicates that $P_1$ and $P_2$ are partial-coherent precoding matrices, for specific content of the first information, refer to the foregoing descriptions in "(II) The terminal supports the second type of partial coherence, but does not support the first type of partial coherence".

In some other embodiments, both $P_1$ and $P_2$ are full-coherent precoding matrices or partial-coherent precoding matrices. After one of $P_1$ and $P_2$ is determined, a coherence capability of the other may also be determined. Therefore, if $P_1$ is determined from a precoding matrix set including full-coherent precoding matrices and partial-coherent precoding matrices, $P_2$ may be selected from a full-coherent precoding matrix set when $P_1$ is a full-coherent precoding matrix, and $P_2$ may be selected from a partial-coherent precoding matrix set when $P_1$ is a partial-coherent precoding matrix; or if $P_2$ is determined from a precoding matrix set including full-coherent precoding matrices and partial-coherent precoding matrices, $P_1$ may be selected from a full-coherent precoding matrix set when $P_2$ is a full-coherent precoding matrix, and $P_1$ may be selected from a partial-coherent precoding matrix set when $P_2$ is a partial-coherent precoding matrix. For example, Table 1 to Table 4 above respectively show precoding matrix sets corresponding to spatial layer number=1 to 4. There are 16, 8, 4, and 2 full-coherent precoding matrices corresponding to spatial layer number=1 to 4 respectively. There are 8, 8, 2, and 2 partial-coherent precoding matrices corresponding to spatial layer number=1 to 4 respectively. Therefore, in this embodiment, precoding matrix sets corresponding to spatial layer number=1 to 4 include 24, 16, 6, and 4 precoding matrices respectively.

The following separately describes in detail two cases: Spatial layer number≤4, in other words, the first information includes the first indication information; and spatial layer number>4, in other words, the first information includes the second indication information.

(1) Spatial layer number≤4:

The first field may be 11 bits, 2 bits in the first field indicate the first spatial layer number, and the remaining bits in the first field indicate the first precoding matrix. Alternatively, the first field may be 10 bits, the NDI associated with the un-enabled transport block and 1 bit in the first field together indicate the first spatial layer number, and the remaining bits in the first field indicate the first precoding matrix. Alternatively, 2 bits in the first field indicate the first spatial layer number, and the NDI associated with the un-enabled transport block and the remaining bits in the first field together indicate the first precoding matrix. The following describes how to indicate the first precoding matrix.

When spatial layer number=1, the remaining bits in the first field may indicate $P_1$ and a structure of the first precoding matrix $P$. The first precoding matrix satisfies one of structures shown in Formula (1) and Formula (2) above. $P_1$ is a full-coherent precoding matrix or partial-coherent precoding matrix corresponding to spatial layer number=1. Because there are a total of 24 full-coherent precoding matrices and partial-coherent precoding matrices corresponding to spatial layer number=1, at least 5 bits are required to indicate $P_1$. There are two structures of the first precoding matrix $P$, and at least 1 bit is required for indication. In this case, a total of at least 6 bits are required to indicate the first precoding matrix.

It should be understood that a second portion of the first field actually indicates one TPMI (denoted as a first TPMI), and the first TMPI indicates one precoding matrix, namely, $P_1$. $P_1$ is one sub-block in the first precoding matrix $P$, $P_1$ is a 4*1 matrix, and $P$ is an 8*1 matrix.

When spatial layer number=2, 3, or 4, the first field may indicate $P_1$ and $P_2$. Specifically, the first field actually indicates two TPMIs (denoted as a first TPMI and a second TPMI), and the first TPMI and the second TPMI respectively indicate precoding matrices, namely, $P_1$ and $P_2$. Each of $P_1$ and $P_2$ is one sub-block in the first precoding matrix $P$, and the first precoding matrix **P** satisfies Formula (3) above. In addition, **P** is an 8*P matrix, **P**$_1$ is a 4*P$_1$ matrix, **P**$_2$ is a 4*P$_2$ matrix, and P$_1$+P$_2$=P. If **P**$_1$ and **P**$_2$ meet the foregoing rule 1, P$_1$-P$_2$=-1, 0, or 1. If **P**$_1$ and **P**$_2$ meet the foregoing rule 2, P$_1$-P$_2$=-1 or 0.

a. Spatial layer number=2: Regardless of whether **P**$_1$ and **P**$_2$ meet the rule 1 or the rule 2, numbers of columns of **P**$_1$ and **P**$_2$ are both 1. Because both **P**$_1$ and **P**$_2$ are full-coherent precoding matrices or partial-coherent precoding matrices corresponding to spatial layer number=1, after **P**$_1$ is determined, there are a maximum of 16 possibilities for **P**$_2$, or after **P**$_2$ is determined, there are a maximum of 16 possibilities for **P**$_1$. In this case, a total of at least 5 bits and 4 bits are required to indicate **P**$_1$ and **P**$_2$.

b. Spatial layer number=3:

If **P**$_1$ and **P**$_2$ meet the rule 1, one of numbers of columns of **P**$_1$ and **P**$_2$ is 1, and the other is 2. In this case, the first field is further used to determine the number of columns of **P**$_1$ or **P**$_2$. To be specific, 1 bit in the first field indicates a matrix with one column or a matrix with two columns, in **P**$_1$ and **P**$_2$. Because one of **P**$_1$ and **P**$_2$ is a full-coherent precoding matrix or partial-coherent precoding matrix corresponding to spatial layer number=1, and the other is a full-coherent precoding matrix or partial-coherent precoding matrix corresponding to spatial layer number=2, at least 5 bits and 3 bits are required for indication. Therefore, a total of 9 bits (1 bit indicating a number of columns and 7 bits indicating **P**$_1$ and **P**$_2$) can indicate the first precoding matrix.

If **P**$_1$ and **P**$_2$ meet the rule 2, a number of columns of **P**$_1$ is 1, and a number of columns of **P**$_2$ is 2. In this case, the number of columns of **P**$_1$ or **P**$_2$ does not need to be indicated. Because **P**$_1$ and **P**$_2$ are respectively a full-coherent precoding matrix or partial-coherent precoding matrix corresponding to spatial layer number=1 and a full-coherent precoding matrix or partial-coherent precoding matrix corresponding to spatial layer number=2, at least 5 bits and 3 bits are required for indication. Therefore, a total of 8 bits can indicate the first precoding matrix.

c. Spatial layer number=4: Regardless of whether **P**$_1$ and **P**$_2$ meet the rule 1 or the rule 2, numbers of columns of **P**$_1$ and **P**$_2$ are both 2. Because both **P**$_1$ and **P**$_2$ are full-coherent precoding matrices or partial-coherent precoding matrices corresponding to spatial layer number=2, **P**$_1$ and **P**$_2$ need to be indicated by at least 4 bits and 3 bits, that is, a total of 7 bits can indicate the first precoding matrix.

(2) Spatial layer number>4:

2 bits in the first field indicate the second spatial layer number, and some of the remaining bits in the first field indicate the second precoding matrix. The following describes how to indicate the second precoding matrix.

The first field may indicate **P**$_1$ and **P**$_2$. Specifically, the first field actually indicates two TPMIs (denoted as a first TPMI and a second TPMI), and the first TPMI and the second TPMI respectively indicate precoding matrices, namely, **P**$_1$ and **P**$_2$. Each of **P**$_1$ and **P**$_2$ is one sub-block in the second precoding matrix **P**, and the second precoding matrix **P** satisfies Formula (3) above. In addition, **P** is an 8*M matrix, **P**$_1$ is a 4*M$_1$ matrix, **P**$_2$ is a 4*M$_2$ matrix, and M$_1$+M$_2$=P. If **P**$_1$ and **P**$_2$ meet the foregoing rule 1, M$_1$-M$_2$=-1, 0, or 1. If **P**$_1$ and **P**$_2$ meet the foregoing rule 2, M$_1$-M$_2$=-1 or 0.

Spatial layer number=5:

If **P**$_1$ and **P**$_2$ meet the rule 1, one of numbers of columns of **P**$_1$ and **P**$_2$ is 2, and the other is 3. In this case, the first field is further used to determine the number of columns of **P**$_1$ or **P**$_2$. To be specific, 1 bit in the first field indicates a matrix with two columns or a matrix with three columns, in **P**$_1$ and **P**$_2$. Because one of **P**$_1$ and **P**$_2$ is a full-coherent precoding matrix or partial-coherent precoding matrix corresponding to spatial layer number=2, and the other is a full-coherent precoding matrix or partial-coherent precoding matrix corresponding to spatial layer number=3, at least 4 bits and 2 bits are required for indication. Therefore, a total of 7 bits (1 bit indicating a number of columns and 6 bits indicating **P**$_1$ and **P**$_2$) can indicate the second precoding matrix.

If **P**$_1$ and **P**$_2$ meet the rule 2, a number of columns of **P**$_1$ is 2, and a number of columns of **P**$_2$ is 3. In this case, the number of columns of **P**$_1$ or **P**$_2$ does not need to be indicated. Because **P**$_1$ and **P**$_2$ are respectively a full-coherent precoding matrix or partial-coherent precoding matrix corresponding to spatial layer number=2 and a full-coherent precoding matrix or partial-coherent precoding matrix corresponding to spatial layer number=3, at least 4 bits and 2 bits are required for indication. Therefore, a total of 6 bits can indicate the first precoding matrix.

Spatial layer number=6: Regardless of whether **P**$_1$ and **P**$_2$ meet the rule 1 or the rule 2, numbers of columns of **P**$_1$ and **P**$_2$ are both 3. Because both **P**$_1$ and **P**$_2$ are full-coherent precoding matrices or partial-coherent precoding matrices corresponding to spatial layer number=3, at least 3 bits and 2 bits are required for indication, that is, a total of 5 bits can indicate the second precoding matrix.

Spatial layer number=7:

If $P_1$ and $P_2$ meet the rule 1, one of numbers of columns of $P_1$ and $P_2$ is 3, and the other is 4. In this case, the first field is further used to determine the number of columns of $P_1$ or $P_2$. To be specific, 1 bit in the first field indicates a matrix with three columns or a matrix with four columns, in $P_1$ and $P_2$. Because one of $P_1$ and $P_2$ is a full-coherent precoding matrix or partial-coherent precoding matrix corresponding to spatial layer number=3, and the other is a full-coherent precoding matrix or partial-coherent precoding matrix corresponding to spatial layer number=4, at least 3 bits and 1 bit are required for indication. Therefore, a total of 5 bits (1 bit indicating a number of columns and 4 bits indicating $P_1$ and $P_2$) can indicate the second precoding matrix.

If $P_1$ and $P_2$ meet the rule 2, a number of columns of $P_1$ is 3, and a number of columns of $P_2$ is 4. In this case, the number of columns of $P_1$ or $P_2$ does not need to be indicated. Because $P_1$ and $P_2$ are respectively a full-coherent precoding matrix or partial-coherent precoding matrix corresponding to spatial layer number=3 and a full-coherent precoding matrix or partial-coherent precoding matrix corresponding to spatial layer number=4, at least 3 bits and 1 bit are required for indication. Therefore, a total of 4 bits can indicate the first precoding matrix.

Spatial layer number=8: Regardless of whether $P_1$ and $P_2$ meet the rule 1 or the rule 2, numbers of columns of $P_1$ and $P_2$ are both 4. Because both $P_1$ and $P_2$ are full-coherent precoding matrices or partial-coherent precoding matrices corresponding to spatial layer number=4, at least 2 bits and 1 bit are required for indication, that is, a total of 3 bits can indicate the second precoding matrix.

In the case in which the first field is 11 bits, if $P_1$ and $P_2$ meet the rule 1, when the spatial layer number is 5, 6, 7, or 8, except for the bits indicating the corresponding spatial layer number and precoding matrix, 2 bits, 4 bits, 4 bits, or 6 bits are left in the first field respectively; or if $P_1$ and $P_2$ meet the rule 2, when the spatial layer number is 5, 6, 7, or 8, except for the bits indicating the corresponding spatial layer number and precoding matrix, 3 bits, 4 bits, 5 bits, or 6 bits are left in the first field respectively. In the case in which the first field is 10 bits, if $P_1$ and $P_2$ meet the rule 1, when the spatial layer number is 5, 6, 7, or 8, except for the bits indicating the corresponding spatial layer number and precoding matrix, 1 bit, 3 bits, 3 bits, or 5 bits are left in the first field respectively; or if $P_1$ and $P_2$ meet the rule 2, when the spatial layer number is 5, 6, 7, or 8, except for the bits indicating the corresponding spatial layer number and precoding matrix, 2 bits, 3 bits, 4 bits, or 5 bits are left in the first field respectively.

The third field may be 2 bits. When spatial layer number$\leq$4, the third field indicates the association relationship between the first antenna port set and the second antenna port set. When spatial layer number>4, the third field and some or all of the remaining bits in the first field may indicate the association relationship between the third antenna port set and the fourth antenna port set.

For how to indicate the association relationship between the first antenna port set and the second antenna port set and the association relationship between the third antenna port set and the fourth antenna port set, refer to the foregoing related descriptions in "(I) The terminal supports the first type of partial coherence, but does not support the second type of partial coherence" and "(II) The terminal supports the second type of partial coherence, but does not support the first type of partial coherence". Details are not described herein again.

B. Second structure of the partial-coherent precoding matrix

Regardless of the first type of partial coherence or the second type of partial coherence, based on the spatial layer number, there are three cases for a structure of a precoding matrix as follows.

(1) When spatial layer number=1, a structure of the precoding matrix $P$ satisfies one of Formula (1) and Formula (2) above. In Formula (1) and Formula (2), numbers of rows of $P_1$ and $0$ are both 4, and $0$ is a zero matrix.

(2) When 1<spatial layer number$\leq$4, a structure of the precoding matrix $P$ satisfies one of Formula (1), Formula (2), and Formula (3) above. In Formula (1) and Formula (2), when the spatial layer number is $P$, both $P_1$ and $0$ are 4*P matrices, and $0$ is a zero matrix. In Formula (3), $P$ is a precoding matrix corresponding to the spatial layer number. When the spatial layer number is $P$, a sum of numbers of columns of $P_1$ and $P_2$ is $P$, numbers of rows of $P_1$ and $P_2$ are both 4, and $0$ is a zero matrix.

(3) When 4<spatial layer number$\leq$8, a structure of the precoding matrix $P$ satisfies Formula (3) above. In Formula (3), $P$ is a precoding matrix corresponding to the spatial layer number. When the spatial layer number is M, a sum of numbers of columns of $P_1$ and $P_2$ is M, numbers of rows of $P_1$ and $P_2$ are both 4, and $0$ is a zero matrix.

(I) The terminal supports the first type of partial coherence, but does not support the second type of partial coherence.

Precoding matrix sets shown in Table 1 to Table 4 are used as examples for description below. As shown in Table 1 to Table 4, there are 16, 8, 4, and 2 full-coherent precoding matrices corresponding to spatial layer number=1 to 4 respectively.

When spatial layer number=1, $P_1$ is a full-coherent precoding matrix corresponding to spatial layer number=1. Therefore, there are a total of 16*2=32 possibilities for **P**. That is, there are a total of 32 first-type partial-coherent precoding matrices corresponding to spatial layer number=1.

When spatial layer number=2, for Formula (1) and Formula (2), $P_1$ is a full-coherent precoding matrix corresponding to spatial layer number=2; or for Formula (3), both $P_1$ and $P_2$ are full-coherent precoding matrices corresponding to spatial layer number=1. Therefore, there are a total of 8*2+16*16=272 possibilities for **P**. That is, there are a total of 272 first-type partial-coherent precoding matrices corresponding to spatial layer number=2.

When spatial layer number=3, for Formula (1) and Formula (2), $P_1$ is a full-coherent precoding matrix corresponding to spatial layer number=3; or for Formula (3), one of $P_1$ and $P_2$ is a full-coherent precoding matrix corresponding to spatial layer number=1, and the other is a full-coherent precoding matrix corresponding to spatial layer number=2. Therefore, there are a total of 4*2+16*8+8*16=264 possibilities for **P**. That is, there are a total of 264 first-type partial-coherent precoding matrices corresponding to spatial layer number=3.

When spatial layer number=4, for Formula (1) and Formula (2), $P_1$ is a full-coherent precoding matrix corresponding to spatial layer number=4; or for Formula (3), one of $P_1$ and $P_2$ is a full-coherent precoding matrix corresponding to spatial layer number=1, and the other is a full-coherent precoding matrix corresponding to spatial layer number=3; or both $P_1$ and $P_2$ are full-coherent precoding matrices corresponding to spatial layer number=2. Therefore, there are a total of 2*2+16*4+4*16+8*8=196 possibilities for **P**. That is, there are a total of 196 first-type partial-coherent precoding matrices corresponding to spatial layer number=4.

When the spatial layer number=5, one of $P_1$ and $P_2$ is a full-coherent precoding matrix corresponding to spatial layer number=1, and the other is a full-coherent precoding matrix corresponding to spatial layer number=4; or one of $P_1$ and $P_2$ is a full-coherent precoding matrix corresponding to spatial layer number=2, and the other is a full-coherent precoding matrix corresponding to spatial layer number=3. Therefore, there are a total of 16*2+2*16+8*4+4*8=128 possibilities for **P**. That is, there are a total of 128 first-type partial-coherent precoding matrices corresponding to spatial layer number=5.

When spatial layer number=6, one of $P_1$ and $P_2$ is a full-coherent precoding matrix corresponding to spatial layer number=2, and the other is a full-coherent precoding matrix corresponding to spatial layer number=4; or both $P_1$ and $P_2$ are full-coherent precoding matrices corresponding to spatial layer number=3. Therefore, there are a total of 8*2+2*8+4*4=48 possibilities for **P**. That is, there are a total of 48 first-type partial-coherent precoding matrices corresponding to spatial layer number=6.

When spatial layer number=7, one of $P_1$ and $P_2$ is a full-coherent precoding matrix corresponding to spatial layer number=3, and the other is a full-coherent precoding matrix corresponding to spatial layer number=4. Therefore, there are a total of 4*2+2*4=16 possibilities for **P**. That is, there are a total of 16 first-type partial-coherent precoding matrices corresponding to spatial layer number=7.

When spatial layer number=8, both $P_1$ and $P_2$ are full-coherent precoding matrices corresponding to spatial layer number=4. Therefore, there are a total of 2*2=4 possibilities for **P**. That is, there are a total of 4 first-type partial-coherent precoding matrices corresponding to spatial layer number=8.

In conclusion, (1) if the spatial layer number and the precoding matrix are separately indicated, when spatial layer number≤4, a number of precoding matrices corresponding to spatial layer number=2 is the largest, and is 272, or when spatial layer number>4, a number of precoding matrices corresponding to spatial layer number=5 is the largest, and is 128. In this case, when spatial layer number≤4, 11 bits are required to indicate the spatial layer number and the precoding matrix; or when spatial layer number>4, 9 bits are required to indicate the spatial layer number and the precoding matrix. (2) If the spatial layer number and the precoding matrix are jointly indicated, there are a total of 764 precoding matrices corresponding to spatial layer number≤4, and 10 bits are required for indication; or there are a total of 196 precoding matrices corresponding to spatial layer number>4, and 8 bits are required for indication.

Therefore, in a possible implementation, the first field may be 11 bits, and the third field may be 2 bits. When spatial layer number≤4, 2 bits in the first field indicate the spatial layer number, 9 bits in the first field indicate the precoding matrix, and the third field indicates the association relationship between the first-type antenna port and the second-type antenna port; or when spatial layer number>4, 2 bits in the first field indicate the spatial layer number, 7 bits in the first field indicate the precoding matrix, and the third field and the remaining 2 bits in the first field together indicate the association relationship between the first-type antenna port and the second-type antenna port.

In a possible implementation, the first field may be 10 bits, and the third field may be 2 bits. When spatial layer number≤4, the spatial layer number and the precoding matrix are jointly indicated by the first field, and the third field indicates the association relationship between the first-type antenna port and the second-type antenna port; or when spatial layer number>4, the spatial layer number and the precoding matrix are jointly indicated by 8 bits in the first field, and the third field and the remaining 2 bits in the first field together indicate the association relationship between the first-type antenna port and the second-type antenna port. For how to specifically indicate the association relationship between the first-type antenna port and the second-type antenna port, refer to the foregoing related descriptions. Details are not described herein again.

(II) The terminal supports the second type of partial coherence, but does not support the first type of partial coherence.

Precoding matrix sets shown in Table 1 to Table 4 are used as examples for description below. As shown in Table 1 to Table 4, there are 8, 8, 2, and 2 partial-coherent precoding matrices corresponding to spatial layer number=1 to 4 respectively.

When spatial layer number=1, $P_1$ is a partial-coherent precoding matrix corresponding to spatial layer number=1. Therefore, there are a total of 8*2=16 possibilities for **P**. That is, there are a total of 16 second-type partial-coherent precoding matrices corresponding to spatial layer number=1.

When spatial layer number=2, for Formula (1) and Formula (2), $P_1$ is a partial-coherent precoding matrix corresponding to spatial layer number=2; or for Formula (3), both $P_1$ and $P_2$ are partial-coherent precoding matrices corresponding to spatial layer number=1. Therefore, there are a total of 8*2+8*8=80 possibilities for **P**. That is, there are a total of 80 second-type partial-coherent precoding matrices corresponding to spatial layer number=2.

When spatial layer number=3, for Formula (1) and Formula (2), $P_1$ is a partial-coherent precoding matrix corresponding to spatial layer number=3; or for Formula (3), one of $P_1$ and $P_2$ is a partial-coherent precoding matrix corresponding to spatial layer number=1, and the other is a partial-coherent precoding matrix corresponding to spatial layer number=2. Therefore, there are a total of 2*2+8*8+8*8=132 possibilities for **P**. That is, there are a total of 132 second-type partial-coherent precoding matrices corresponding to spatial layer number=3.

When spatial layer number=4, for Formula (1) and Formula (2), $P_1$ is a partial-coherent precoding matrix corresponding to spatial layer number=4; or for Formula (3), one of $P_1$ and $P_2$ is a partial-coherent precoding matrix corresponding to spatial layer number=1, and the other is a partial-coherent precoding matrix corresponding to spatial layer number=3; or both $P_1$ and $P_2$ are partial-coherent precoding matrices corresponding to spatial layer number=2. Therefore, there are a total of 2*2+8*2+2*8+8*8=100 possibilities for **P**. That is, there are a total of 100 second-type partial-coherent precoding matrices corresponding to spatial layer number=4.

When spatial layer number=5, one of $P_1$ and $P_2$ is a partial-coherent precoding matrix corresponding to spatial layer number=1, and the other is a partial-coherent precoding matrix corresponding to spatial layer number=4; or one of $P_1$ and $P_2$ is a partial-coherent precoding matrix corresponding to spatial layer number=2, and the other is a partial-coherent precoding matrix corresponding to spatial layer number=3. Therefore, there are a total of 8*2+2*8+8*2+2*8=64 possibilities for **P**. That is, there are a total of 64 second-type partial-coherent precoding matrices corresponding to spatial layer number=5.

When spatial layer number=6, one of $P_1$ and $P_2$ is a partial-coherent precoding matrix corresponding to spatial layer number=2, and the other is a partial-coherent precoding matrix corresponding to spatial layer number=4; or both $P_1$ and $P_2$ are partial-coherent precoding matrices corresponding to spatial layer number=3. Therefore, there are a total of 8*2+2*8+2*2=36 possibilities for **P**. That is, there are a total of 36 second-type partial-coherent precoding matrices corresponding to spatial layer number=6.

When spatial layer number=7, one of $P_1$ and $P_2$ is a partial-coherent precoding matrix corresponding to spatial layer number=3, and the other is a partial-coherent precoding matrix corresponding to spatial layer number=4. Therefore, there are a total of 2*2+2*2=8 possibilities for **P**. That is, there are a total of 8 second-type partial-coherent precoding matrices corresponding to spatial layer number=7.

When spatial layer number=8, both $P_1$ and $P_2$ are partial-coherent precoding matrices corresponding to spatial layer number=4. Therefore, there are a total of 2*2=4 possibilities for **P**. That is, there are a total of 4 second-type partial-coherent precoding matrices corresponding to spatial layer number=8.

In conclusion, (1) if the spatial layer number and the precoding matrix are separately indicated, when spatial layer number≤4, a number of precoding matrices corresponding to spatial layer number=3 is the largest, and is 132, or when spatial layer number>4, a number of precoding matrices corresponding to spatial layer number=5 is the largest, and is 64. In this case, when spatial layer number≤4, 10 bits are required to indicate the spatial layer number and the precoding matrix; or when spatial layer number>4, 8 bits are required to indicate the spatial layer number and the precoding matrix. (2) If the spatial layer number and the precoding matrix are jointly indicated, there are a total of 328 precoding matrices corresponding to spatial layer number≤4, and 9 bits are required for indication; or there are a total of 112 precoding matrices corresponding to spatial layer number>4, and 7 bits are required for indication.

Therefore, in a possible implementation, the first field may be 10 bits, and the third field may be 2 bits. When spatial layer number≤4, 2 bits in the first field indicate the spatial layer number, 8 bits in the first field indicate the precoding matrix, and the third field indicates the association relationship between the first-type antenna port and the second-type antenna port; or when spatial layer number>4, 2 bits in the first field indicate the spatial layer number, 6 bits in the first field indicate the precoding matrix, and the third field and the remaining 2 bits in the first field together indicate the association relationship between the first-type antenna port and the second-type antenna port.

In a possible implementation, the first field may be 9 bits, and the third field may be 2 bits. When spatial layer number≤4, the spatial layer number and the precoding matrix are jointly indicated by the first field, and the third field indicates the association relationship between the first-type antenna port and the second-type antenna port; or when spatial layer number>4, the spatial layer number and the precoding matrix are jointly indicated by 7 bits in the first field, and the third field and the remaining 2 bits in the first field together indicate the association relationship between the first-type antenna port and the second-type antenna port. For how to specifically indicate the association relationship between the first-type antenna port and the second-type antenna port, refer to the foregoing related descriptions. Details are not described herein again.

(III) The terminal supports both the first type of partial coherence and the second type of partial coherence.

It should be understood that, in this scenario, $P_1$ and $P_2$ have a same coherence capability, that is, both are full-coherent precoding matrices, or both are partial-coherent precoding matrices.

In some embodiments, the first information further includes third indication information, and the third indication information indicates whether $P_1$ and $P_2$ are full-coherent precoding matrices or partial-coherent precoding matrices. Therefore, the terminal may determine, based on the third indication information, a manner of interpreting the first information.

In some other embodiments, both $P_1$ and $P_2$ are full-coherent precoding matrices or partial-coherent precoding matrices. After one of $P_1$ and $P_2$ is determined, a coherence capability of the other may also be determined. Therefore, if $P_1$ is determined from a precoding matrix set including full-coherent precoding matrices and partial-coherent precoding matrices, $P_2$ may be selected from a full-coherent precoding matrix set when $P_1$ is a full-coherent precoding matrix, and $P_2$ may be selected from a partial-coherent precoding matrix set when $P_1$ is a partial-coherent precoding matrix; or if $P_2$ is determined from a precoding matrix set including full-coherent precoding matrices and partial-coherent precoding matrices, $P_1$ may be selected from a full-coherent precoding matrix set when $P_2$ is a full-coherent precoding matrix, and $P_1$ may be selected from a partial-coherent precoding matrix set when $P_2$ is a partial-coherent precoding matrix.

In this embodiment, for structures of $P_1$ and $P_2$, refer to the foregoing descriptions that, in the second structure of the partial-coherent precoding matrix, the terminal supports the first type of partial coherence, but does not support the second type of partial coherence, and the terminal supports the second type of partial coherence, but does not support the first type of partial coherence. Correspondingly, when the spatial layer numbers are different, numbers of corresponding precoding matrices are calculated in a similar manner. Numbers of bits in the first field may be determined based on calculated numbers of precoding matrices corresponding to different spatial layer numbers.

Scenario 3: CB-based non-coherent precoding matrix

The non-coherent precoding matrix has a structure similar to the second structure of the partial-coherent precoding matrix, and a difference lies in that both $P_1$ and $P_2$ in Scenario 2 are non-coherent precoding matrices. A manner of calculating numbers of precoding matrices corresponding to different spatial layer numbers is similar to the foregoing descriptions that, in the second structure of the partial-coherent precoding matrix, the terminal supports the first type of partial coherence, but does not support the second type of partial coherence, and the terminal supports the second type of partial coherence, but does not support the first type of partial coherence. Numbers of bits in the first field may be determined after the numbers of precoding matrices corresponding to the different spatial layer numbers are calculated.

Manner 2

A difference between Manner 2 and Manner 1 lies in that manners of indicating the first-type antenna port are different when spatial layer number>4. In Manner 2, when spatial layer number>4, the spatial layer number does not need to be separately indicated, and the spatial layer number can be indicated when the first-type antenna port is indicated. The following describes Manner 2 in detail.

The first information may include a first field, a second field, and a third field.

First field: When the spatial layer number is one of 1 to 4, the first field indicates the spatial layer number and the precoding matrix, or the first field and an NDI associated with an un-enabled transport block indicate the spatial layer number and the precoding matrix; or when the spatial layer number is one of 5 to 8, a portion of the first field may indicate the precoding matrix.

Second field: When the spatial layer number is one of 1 to 4, the second field indicates the first-type antenna port corresponding to the spatial layer number. When the spatial layer number is one of 5 to 8, the spatial layer number and the first-type antenna port are jointly indicated by the second field.

Third field: When the spatial layer number is one of 1 to 4, the third field indicates the association relationship between the first-type antenna port and the second-type antenna port; or when the spatial layer number is one of 5 to 8, the third field and the remaining portion of the first field indicate the association relationship between the first-type antenna port and the second-type antenna port.

Specifically, when the first information includes the first indication information, the first field and the NDI associated with the un-enabled transport block indicate the first spatial layer number and the first precoding matrix, or the first field indicates the first spatial layer number and the first precoding matrix; the second field indicates a first antenna port set in a plurality of antenna port sets corresponding to the first spatial layer number, and each antenna port set includes M first-type antenna ports; and the third field indicates an association relationship between the first antenna port set and a second antenna port set. When the first information includes the second indication information, a portion of the first field indicates the second precoding matrix; the second field indicates a third antenna port set in a plurality of antenna port sets, and numbers of first-type antenna ports included in the plurality of antenna port sets all belong to {5, 6, 7, 8}; and the remaining bits (some of the remaining bits) in the first field and the third field indicate an association relationship between the third antenna port set and a fourth antenna port set.

More specifically, when spatial layer number>4, the second field is one of a plurality of index values, where each of the plurality of index values indicates one first-type antenna port set, and first-type antenna port sets indicated by the plurality of index values include five first-type antenna ports, six first-type antenna ports, seven first-type antenna ports, or eight first-type antenna ports respectively. Therefore, when the third antenna port set is determined based on the second field, the second spatial layer number may be further determined. Correspondingly, the first field may indicate only the second precoding matrix corresponding to the second spatial layer number.

A dual-symbol type 1 DMRS is used as an example. When a transform precoder is not enabled, a DMRS port index table corresponding to spatial layer number=5 to 8 is shown as Table 20. MaxLength=2. A first column is a value of the second field.

Table 20

| Value | Number of DMRS CDM groups without data | DMRS port | Number of front-load (front-load) symbols |
|---|---|---|---|
| 0 | 2 | 0 to 4 | 2 |
| 1 | 2 | 0, 1, 2, 3, 4, and 6 | 2 |
| 2 | 2 | 0, 1, 2, 3, 4, 5, and 6 | 2 |
| 3 | 2 | 0, 1, 2, 3, 4, 5, 6, and 7 | 2 |
| 4 to 15 | Reserved | Reserved | Reserved |

When the value is 0, it indicates that DMRS ports are the DMRS port 0 to the DMRS port 4, and the spatial layer number is 5. When the value is 1, it indicates that DMRS ports are the DMRS port 0, the DMRS port 1, the DMRS port 2, the DMRS port 3, the DMRS port 4, and the DMRS port 6, and the spatial layer number is 6. Other cases are similar to this.

It may be understood that the second field may be 4 bits.

Optionally, the second field may be an antenna port field in an existing protocol.

Compared with a solution in which a TPMI and a rank that correspond to maximum spatial layer number=8 are jointly indicated, Manner 2 can reduce bit overheads. In addition, in a scenario in which a number of precoding matrices corresponding to spatial layer number>4 is greater than a number of precoding matrices corresponding to spatial layer number<4, the solution in Manner 2 can reduce bit overheads compared with that in Manner 1.

It should be noted that Manner 2 may be applied to any one of the scenarios described in Manner 1. In Manner 2, for how the first field specifically indicates the first spatial layer number and the first precoding matrix, how the first field indicates the second precoding matrix, how the third field indicates the association relationship between the first antenna port set and the second antenna port set, and how the third field and the remaining bits in the first field together indicate the association relationship between the third antenna port set and the fourth antenna port set, refer to the descriptions of the corresponding scenarios in Manner 1. Details are not described herein again.

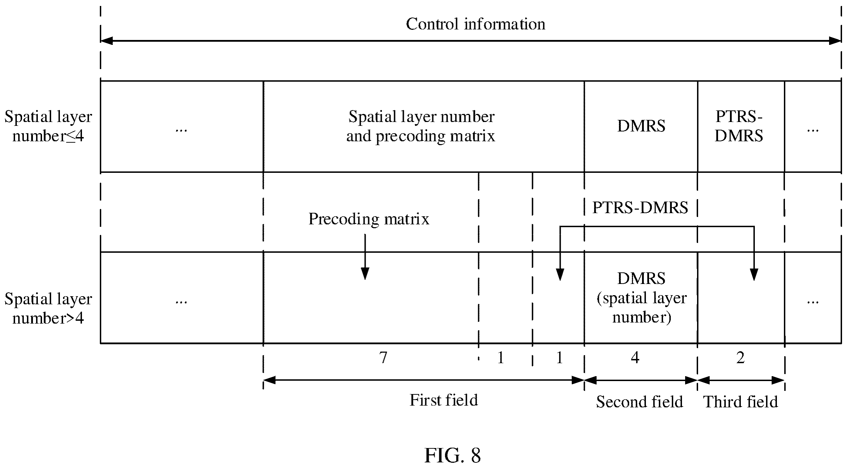

For example, FIG. 8 is a diagram of a format of first information applied to Scenario 1. As shown in FIG. 8, the first information includes the first field, the second field, and the third field, which occupy 9 bits, 4 bits, and 2 bits respectively. When spatial layer number≤4, the first field indicates the spatial layer number and the precoding matrix, the second field indicates the DMRS port, and the third field indicates the association relationship between the DMRS port and the PTRS port. When spatial layer number>4, 7 bits in the first field indicate the precoding matrix, the second field indicates the DMRS port, and also indicates the spatial layer number, and the third field and 1 bit in 2 unused bits in the first field indicate the association relationship between the DMRS port and the PTRS port.

The second manner may be further applied to the following scenario:

Scenario 4: NCB-based uplink transmission

Specifically, the first field may indicate an SRI, the SRI indicates one of a plurality of SRS resource sets, a number of SRS resources included in the SRS resource set indicated by the SRI is the spatial layer number, and a precoding matrix corresponding to the SRS resource included in the SRS resource set indicated by the SRI is the first precoding matrix (when the spatial layer number is one of 1 to 4) or the second precoding matrix (when the spatial layer number is one of 5 to 8). In a scenario in which a supported maximum spatial layer number is 8, the terminal may feed back a maximum of eight precoding matrices. Therefore, when spatial layer number≤4, the network device needs to select one, two, three, or four precoding matrices from the maximum of eight precoding matrices for indication to the terminal. In this way, there are a total of 162 ( $C_8^1 + C_8^2 + C_8^3 + C_8^4 = 162$ ) choices, and at least 8 bits are required in total to indicate the SRI. When spatial layer number>4, the spatial layer number and the first-type antenna port may be jointly indicated by the second field. When the spatial layer number is known, five, six, seven, or eight precoding matrices need to be selected from the maximum of eight precoding matrices for indication to the terminal. Therefore, at least 6 bits are required to indicate the SRI. To support both spatial layer number≤4 and spatial layer number>4, 8 bits are required for the first field. When spatial layer number>4, more than 2 bits are required to indicate the association relationship between the first-type antenna port and the second-type antenna port. Therefore, the remaining bits in the first field and 2 bits in the third field together indicate the association relationship between the first-type antenna port and the second-type antenna port.

For example, the first-type antenna port is a DMRS port, and the second-type antenna port is a PTRS port. One, two, or four PTRS ports may be configured for the terminal. When a number of PTRS ports is 1, the third field and any one of the remaining 2 bits in the first field may together indicate a DMRS port that is in a maximum of eight DMRS ports and that is associated with the PTRS port. When a number of PTRS ports is 2, four DMRS ports share one PTRS port, each PTRS port needs to be indicated by 2 bits, and the third field and the remaining 2 bits in the first field, that is, a total of 4 bits, may together indicate DMRS ports separately associated with the two PTRS ports. When a number of PTRS ports is 4, two DMRS ports share one PTRS port, each PTRS port needs to be indicated by 4 bits, and the third field and the remaining 2 bits in the first field, that is, a total of 4 bits, may together indicate DMRS ports separately associated with the four PTRS ports.

For example, when spatial layer number>4, when the number of PTRS ports is 1, an association relationship between the PTRS port and a DMRS port is shown in Table 19; or when the number of PTRS ports is 2, an association relationship between each PTRS ports and a DMRS port is shown in Table 21; or when the number of PTRS ports is 4, an association relationship between each PTRS ports and a DMRS port is shown in Table 22.

Table 21

| Value | DMRS port | Value | DMRS port |
|---|---|---|---|
| 00 | 1st DMRS port sharing a PTRS port 0 | 00 | 1st DMRS port sharing a PTRS port 1 |
| 01 | 2nd DMRS port sharing the PTRS port 0 | 01 | 2nd DMRS port sharing the PTRS port 1 |
| 10 | 3rd DMRS port sharing the PTRS port 0 | 10 | 3rd DMRS port sharing the PTRS port 1 |
| 11 | 4th DMRS port sharing the PTRS port 0 | 11 | 4th DMRS port sharing the PTRS port 1 |

Table 22

| Value | DMRS port | Value | DMRS port | Value | DMRS port | Value | DMRS port |
|---|---|---|---|---|---|---|---|
| 0 | 1st DMRS port sharing a PTRS port 0 | 0 | 1st DMRS port sharing a PTRS port 1 | 0 | 1st DMRS port sharing a PTRS port 2 | 0 | 1st DMRS port sharing a PTRS port 3 |
| 1 | 2nd DMRS port sharing the PTRS port 0 | 1 | 2nd DMRS port sharing the PTRS port 1 | 1 | 2nd DMRS port sharing the PTRS port 2 | 1 | 2nd DMRS port sharing the PTRS port 3 |

It should be understood that, for how the second field specifically indicates the first antenna port set or the third antenna port set, refer to the foregoing related descriptions. For how the third field indicates the association relationship between the first antenna port set and the second antenna port set, refer to the foregoing related descriptions.

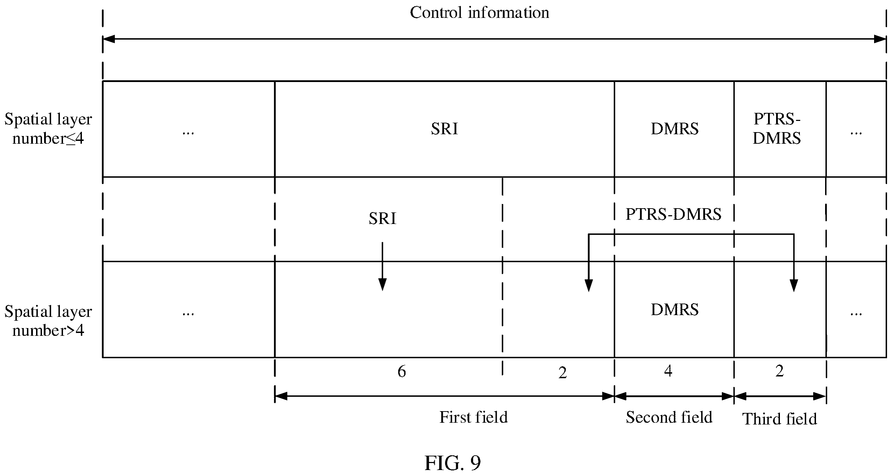

For example, FIG. 9 is a diagram of a format of the first information. As shown in FIG. 9, the first information includes the first field, the second field, and the third field, which occupy 8 bits, 4 bits, and 2 bits respectively. When spatial layer number≤4, the first field indicates the SRI (which is equivalent to indicating the spatial layer number and the precoding matrix), the second field indicates the DMRS port, and the third field indicates the association relationship between the DMRS port and the PTRS port. When spatial layer number>4, 6 bits in the first field indicate the SRI, the second field indicates the DMRS port, and also indicates the spatial layer number, and the third field and the remaining 2 bits in the first field indicate the association relationship between the DMRS port and the PTRS port.

It should be understood that specific bits in the first field that indicate the SRI are not limited in this application.

Correspondingly, specific bits in the first field that indicate the association relationship between the third antenna port set and the fourth antenna port set together with the third field are not limited in this application. For example, as shown in FIG. 9, the first 6 bits in the first field may indicate the SRI, and the third field and the last 2 bits in the first field may indicate the association relationship between the third antenna port set and the fourth antenna port set. Alternatively, the last 6 bits in the first field may indicate the SRI, and the third field and the first 2 bits in the first field may indicate the association relationship between the third antenna port set and the fourth antenna port set.

It should be understood that, in each embodiment described above, the third field and the remaining bits in the first field together indicate the association relationship between the third antenna port set and the fourth antenna port set. However, in actual application, the third field may alternatively be designed as a field that can indicate the association relationship between the third antenna port set and the fourth antenna port set. In other words, the third field may include more bits. For example, in Scenario 1, 3 bits may be included, and in Scenario 2 to Scenario 4, 4 bits may be included.

Manner 3

A difference between Manner 3 and Manner 1 lies in that manners of indicating the association relationship between the first-type antenna port and the second-type antenna port are different when spatial layer number>4. In Manner 3, when spatial layer number>4, the third field and the remaining bits in the second field may together indicate the association relationship between the first-type antenna port and the second-type antenna port. The following describes Manner 3 in detail.

The first information includes the first field, the second field, and the third field.

First field: When the spatial layer number is one of 1 to 4, the first field indicates the spatial layer number and the precoding matrix, or the first field and an NDI associated with an un-enabled transport block indicate the spatial layer number and the precoding matrix; or when the spatial layer number is one of 5 to 8, the first field indicates the spatial layer number and the precoding matrix, or a portion of the first field indicates the precoding matrix.

Second field: When the spatial layer number is one of 1 to 4, the second field indicates the first-type antenna port; or when the spatial layer number is one of 5 to 8, a portion of the second field indicates the first-type antenna port, or a portion of the second field indicates the first-type antenna port and the spatial layer number.

Third field: When the spatial layer number is one of 1 to 4, the third field indicates the association relationship between the first-type antenna port and the second-type antenna port; or when the spatial layer number is one of 5 to 8, the third field and the remaining portion of the second field together indicate the association relationship between the first-type antenna port and the second-type antenna port.

Specifically, there are four possible designs:

In a first design, when the first information includes the first indication information, the first field indicates the first spatial layer number and the first precoding matrix; the second field indicates one of a plurality of first-type antenna port sets (namely, the first antenna port set) corresponding to the spatial layer number; and the third field indicates the association relationship between the first antenna port set and the second antenna port set. When the first information includes the second indication information, the first field indicates the second spatial layer number and the second precoding matrix; a portion of the second field indicates one of a plurality of first-type antenna port sets (namely, the third antenna port set) corresponding to the spatial layer number; and the third field and the remaining portion of the second field together indicate the association relationship between the third antenna port set and the fourth antenna port set.

In a second design, when the first information includes the first indication information, the first field and the NDI associated with the un-enabled transport block together indicate the first spatial layer number and the first precoding matrix; the second field indicates one of a plurality of first-type antenna port sets (namely, the first antenna port set) corresponding to the spatial layer number; and the third field indicates the association relationship between the first antenna port set and the second antenna port set. When the first information includes the second indication information, the first field indicates the second spatial layer number and the second precoding matrix; a portion of the second field indicates one of a plurality of first-type antenna port sets (namely, the third antenna port set) corresponding to the spatial layer number; and the third field and the remaining portion of the second field together indicate the association relationship between the third antenna port set and the fourth antenna port set.

A difference from the first design lies in that, in the second design, when spatial layer number≤4, the NDI associated with the un-enabled transport block is reused to indicate the spatial layer number and/or the precoding matrix.

In a third design, when the first information includes the first indication information, the first field indicates the first spatial layer number and the first precoding matrix; the second field indicates one of a plurality of first-type antenna port sets (namely, the first antenna port set) corresponding to the spatial layer number; and the third field indicates the association relationship between the first antenna port set and the second antenna port set. When the first information includes the second indication information, the first field indicates the second precoding matrix, a portion of the second field indicates the third antenna port set in a plurality of antenna port sets, and numbers of first-type antenna ports included in the plurality of antenna port sets all belong to {5, 6, 7, 8}; and the third field and the remaining portion of the second field together indicate the association relationship between the third antenna port set and the fourth antenna port set.

A difference from the first design lies in that, when spatial layer number≤4, in the third design, the spatial layer number is indicated when the first-type antenna port is indicated, and the spatial layer number does not need to be separately indicated or the spatial layer number and the precoding matrix do not need to be jointly indicated.

In a fourth design, when the first information includes the first indication information, the first field and the NDI associated with the un-enabled transport block together indicate the first spatial layer number and the first precoding matrix; the second field indicates one of a plurality of first-type antenna port sets (namely, the first antenna port set) corresponding to the spatial layer number; and the third field indicates the association relationship between the first antenna port set and the second antenna port set. When the first information includes the second indication information, a portion of the first field indicates the second precoding matrix, a portion of the second field indicates a third antenna port set in a plurality of antenna port sets, and numbers of first-type antenna ports included in the plurality of antenna port sets all belong to {5, 6, 7, 8}; and the third field and the remaining portion of the second field together indicate the association relationship between the third antenna port set and the fourth antenna port set.

A difference from the third design lies in that, in the second design, when spatial layer number≤4, the NDI associated with the un-enabled transport block is reused to indicate the spatial layer number and/or the precoding matrix.

The following describes in detail the first field, the second field, and the third field in Manner 3 in different scenarios.

Optionally, the second field may be an antenna port field in an existing protocol.

Optionally, the third field may be a PTRS-DMRS association field in an existing protocol.

Scenario 1: CB-based full-coherent precoding matrix

In this scenario, the terminal supports the CB-based full-coherent precoding matrix, and the network device selects a precoding matrix from a full-coherent precoding matrix set corresponding to the spatial layer number. It may be understood that, in this scenario, both the first precoding matrix and the second precoding matrix are full-coherent precoding matrices. In addition, it should be understood that, for any precoding matrix in the full-coherent precoding matrix set, each element of the precoding matrix is a non-zero element.

In the first design and the second design, the spatial layer number and the precoding matrix may be separately indicated, or the spatial layer number and the precoding matrix may be jointly indicated. When the spatial layer number and the precoding matrix are separately indicated, the spatial layer number may be indicated by 2 bits, or the spatial layer number may be indicated by 3 bits. When the spatial layer number is indicated by 2 bits, whether the indicated spatial layer number is specifically one of 1 to 4 or one of 5 to 8 may be determined in combination with the MCSs and the RVs are associated with the two transport blocks. When the spatial layer number is indicated by 3 bits, which one of 1 to 8 is the spatial layer number may be determined by the 3 bits. When the spatial layer number is indicated by 2 bits, and the spatial layer number and the precoding matrix are jointly indicated, for a specific indication manner, refer to the descriptions of Scenario 1 in Manner 1. Details are not described herein again.

In the third design and the fourth design, when spatial layer number≤4, the spatial layer number and the precoding matrix may be separately indicated, or the spatial layer number and the precoding matrix may be jointly indicated. When the spatial layer number and the precoding matrix are separately indicated, the spatial layer number may be indicated by 2 bits, or the spatial layer number may be indicated by 3 bits. When the spatial layer number is indicated by 2 bits, whether the indicated spatial layer number is specifically one of 1 to 4 or one of 5 to 8 may be determined in combination with the MCSs and the RVs are associated with the two transport blocks. When the spatial layer number is indicated by 3 bits, which one of 1 to 8 is the spatial layer number may be determined by the 3 bits. When the spatial layer number is indicated by 2 bits, and the spatial layer number and the precoding matrix are jointly indicated, for a specific indication manner, refer to the descriptions of Scenario 1 in Manner 2. Details are not described herein again.

For example, the precoding matrix set is an 8T full-coherent precoding matrix set based on an R15 DL type 1 SP codebook. Based on the descriptions of the first field in Scenario 1 in Manner 1 and Manner 3, it may be understood as follows.

(1) In the first and third designs,

if the spatial layer number is separately indicated by 2 bits combined with the MCSs and the RVs that are associated with the two transport blocks, and the precoding matrix is indicated by 7 bits, the first field may be 9 bits; if the spatial layer number is separately indicated by 1 bit combined with the NDI associated with the un-enabled transport block, and the MCSs and the RVs that are associated with the two transport blocks, and the precoding matrix is indicated by 7 bits, the first field may be 8 bits; if the spatial layer number is separately indicated by 2 bits combined with the MCSs and the RVs that are associated with the two transport blocks, and the precoding matrix is indicated by 6 bits and the NDI associated with the un-enabled transport block, the first field may be 8 bits;
if the spatial layer number is separately indicated by 3 bits, and the precoding matrix is indicated by 7 bits, the first field may be 10 bits; or
if the spatial layer number and the precoding matrix are jointly indicated, the first field may be 9 bits.

(2) In the second and fourth designs,

if the spatial layer number is separately indicated by 2 bits, the first field may be 8 bits;
if the spatial layer number is indicated by 3 bits, the first field may be 9 bits; or
if the spatial layer number and the precoding matrix are jointly indicated, the first field may be 9 bits.

It should be understood that, in Manner 3 and Manner 4, the spatial layer number needs to be indicated only when spatial layer number≤4.

The second field may be 4 bits, and the third field may be 2 bits. When spatial layer number≤4, for specific indication manners of the second field and the third field, refer to the conventional technology or the foregoing related descriptions. When spatial layer number>4, a portion of the second field may indicate the first-type antenna port, and the third field may indicate the association relationship between the first-type port set and the second-type antenna port set together with the remaining portion of the second field.

For example, refer to the correspondences shown in Table 13 to Table 16. When the spatial layer number is any one of 5 to 8, there is only one possible antenna port combination. In other words, only 1 bit is required to indicate the third antenna port set. Therefore, when the first field indicates the spatial layer number, 3 bits may be left in the second field. In this case, 1 bit in the 3 bits may indicate the association relationship between the third antenna port set and the fourth antenna port set together with the third field.

Refer to the correspondence shown in Table 20. When the spatial layer number is greater than 4, there are only four possible antenna port combinations, and only 2 bits are required to indicate both the third antenna port set and the second spatial layer number. In this way, 2 bits may be left in the second field. In this case, 1 bit in the 2 bits may indicate the association relationship between the third antenna port set and the fourth antenna port set together with the third field.

For example, in the first design and the second design, when spatial layer number=1 to 4, association relationships between the second fields and the first-type antenna ports are shown in Table 6 to Table 9; or when spatial layer number=5 to 8, association relationships between the second fields and the first-type antenna ports are shown in Table 23 to Table 26. It should be understood that a first column in each of Table 23 to Table 26 is a bit that is in the second field and that indicates the first-type antenna port, for example, may be a 1st bit in the second field. It should be further understood that a value in the first column in each of Table 23 to Table 26 may alternatively be 1.

Table 23 Rank=5

| Value | Number of DMRS CDM groups without data | DMRS port | Number of front-load (front-load) symbols |
|---|---|---|---|
| 0 | 2 | 0 to 4 | 2 |

Table 24 Rank=6

| Value | Number of DMRS CDM groups without data | DMRS port | Number of front-load (front-load) symbols |
|---|---|---|---|
| 0 | 2 | 0, 1, 2, 3, 4, and 6 | 2 |

Table 25 Rank=7

| Value | Number of DMRS CDM groups without data | DMRS port | Number of front-load (front-load) symbols |
|---|---|---|---|
| 0 | 2 | 0, 1, 2, 3, 4, 5, and 6 | 2 |

Table 26 Rank=8

| Value | Number of DMRS CDM groups without data | DMRS port | Number of front-load (front-load) symbols |
|---|---|---|---|
| 0 | 2 | 0, 1, 2, 3, 4, 5, 6, and 7 | 2 |

For example, in the third design and the fourth design, when spatial layer number=1 to 4, association relationships between the second fields and the first-type antenna ports are shown in Table 6 to Table 9; or when spatial layer number=5 to 8, an association relationship between the second field and the first-type antenna port is shown in Table 27. It should be understood that a first column in Table 27 is a bit that is in the second field and that indicates the first-type antenna port, for example, may be a value represented by the first 2 bits in the second field.

Table 27

| Value | Number of DMRS CDM groups without data | DMRS port | Number of front-load (front-load) symbols |
|---|---|---|---|
| 0 | 2 | 0 to 4 | 2 |
| 1 | 2 | 0, 1, 2, 3, 4, and 6 | 2 |
| 2 | 2 | 0, 1, 2, 3, 4, 5, and 6 | 2 |
| 3 | 2 | 0, 1, 2, 3, 4, 5, 6, and 7 | 2 |

For example, a correspondence between the association relationship between the third antenna port set and the fourth antenna port set and both the remaining bits in the second field and all bits occupied by the third field is shown in Table 19.

It should be understood that a specific bit that is in the remaining bits in the second field and that indicates the association relationship between the third antenna port set and the fourth antenna port set together with the third field is not limited in this application.

For example, FIG. 10 is a diagram of a format of the first information based on the first design. As shown in FIG. 10, the first information includes the first field, the second field, and the third field, which occupy 9 bits, 4 bits, and 2 bits respectively. When spatial layer number≤4, the first field indicates the spatial layer number and the precoding matrix, the second field indicates the DMRS port, and the third field indicates the association relationship between the DMRS port and the PTRS port. When spatial layer number>4, 7 bits in the first field indicate the spatial layer number and the precoding matrix, 2 bits in the second field indicate the DMRS port, and the third field and 1 bit in 2 unused bits in the second field indicate the association relationship between the DMRS port and the PTRS port.

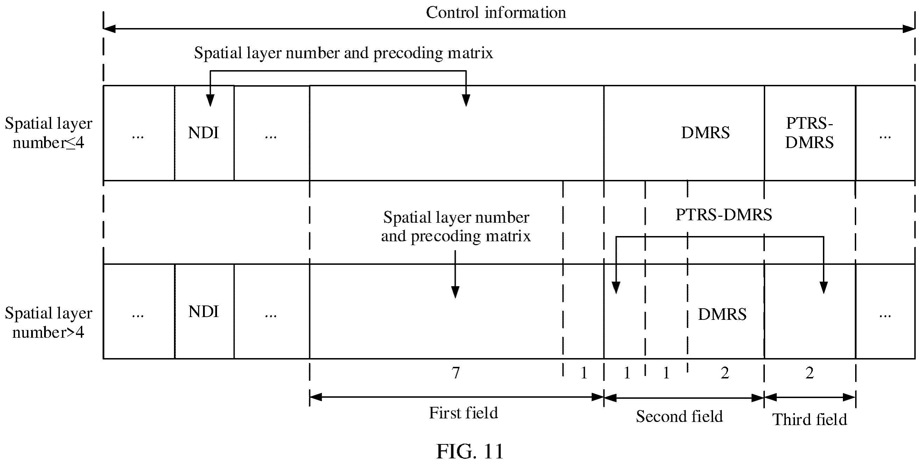

For example, FIG. 11 is a diagram of a format of the first information based on the second design. As shown in FIG. 11, the first information includes the first field, the second field, and the third field, which occupy 8 bits, 4 bits, and 2 bits respectively. When spatial layer number≤4, the first field and the NDI associated with the un-enabled transport block indicate the spatial layer number and the precoding matrix, the second field indicates the DMRS port, and the third field indicates the association relationship between the DMRS port and the PTRS port. When spatial layer number>4, 7 bits in the first field indicate the spatial layer number and the precoding matrix, 2 bits in the second field indicate the DMRS port, and the third field and 1 bit in 2 unused bits in the second field indicate the association relationship between the DMRS port and the PTRS port.

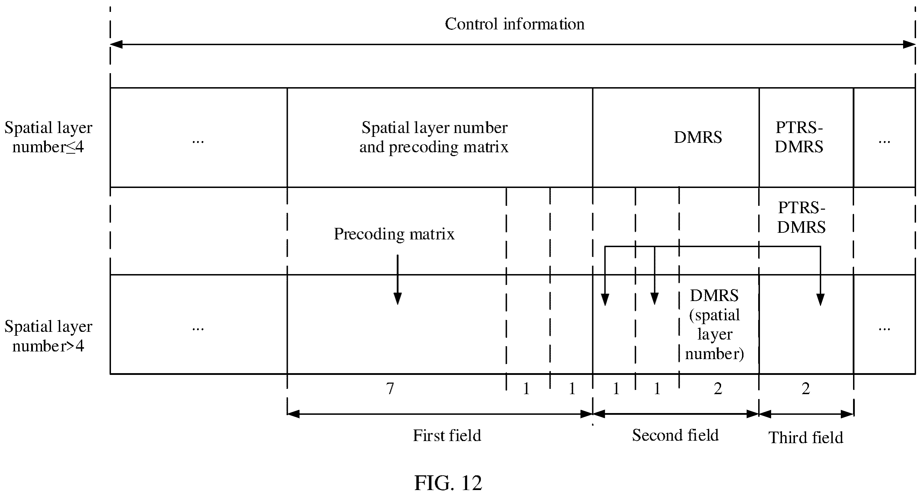

For example, FIG. 12 is a diagram of a format of the first information based on the third design. As shown in FIG. 12, the first information includes the first field, the second field, and the third field, which occupy 9 bits, 4 bits, and 2 bits respectively. When spatial layer number≤4, the first field indicates the spatial layer number and the precoding matrix, the second field indicates the DMRS port, and the third field indicates the association relationship between the DMRS port and the PTRS port. When spatial layer number>4, 7 bits in the first field indicate the precoding matrix, 2 bits in the second field indicate the DMRS port, and also indicate the spatial layer number, and the third field and 1 bit in 2 unused bits in the second field indicate the association relationship between the DMRS port and the PTRS port.

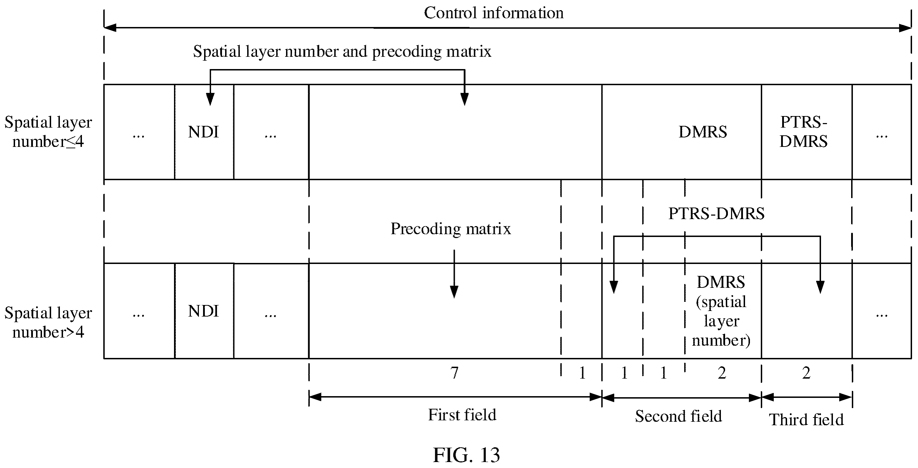

For example, FIG. 13 is a diagram of a format of the first information based on the fourth design. As shown in FIG. 13, the first information includes the first field, the second field, and the third field, which occupy 8 bits, 4 bits, and 2 bits respectively. When spatial layer number≤4, the first field and the NDI associated with the un-enabled transport block indicate the spatial layer number and the precoding matrix, the second field indicates the DMRS port, and the third field indicates the association relationship between the DMRS port and the PTRS port. When spatial layer number>4, 7 bits in the first field indicate the precoding matrix, 2 bits in the second field indicate the DMRS port, and also indicate the spatial layer number, and the third field and 1 bit in 2 unused bits in the second field indicate the association relationship between the DMRS port and the PTRS port.

In conclusion, if the remaining bits in the second field are not reused, 4 bits are required for the third field. In this solution, the remaining bits in the second field are reused, to support 8Tx and uplink transmission of a maximum of eight layers when the third field is only 2 bits.

Scenario 2: CB-based partial-coherent precoding matrix

## EP 4 661 558 A1

A. First structure of the partial-coherent precoding matrix

(I) The terminal supports the first type of partial coherence, but does not support the second type of partial coherence.

For how the first field specifically indicates the precoding matrix, refer to the foregoing descriptions that the terminal supports the first type of partial coherence, but does not support the second type of partial coherence, in the first structure of the partial-coherent precoding matrix in Scenario 2 in Manner 1 and Manner 2. In addition, the first field may indicate the spatial layer number via 2 bits, or may indicate the spatial layer number via 3 bits. This is not limited in this application.

For how the second field specifically indicates the first-type antenna port, refer to the descriptions of Scenario 1 in Manner 3.

As described in Scenario 1 in Manner 3, 3 bits (in the first design and the second design) or 2 bits (in the third design and the fourth design) may be further left in the second field. In this case, when spatial layer number>4, the third field and 2 bits in the 3 bits may together indicate the association relationship between the first-type antenna port and the second-type antenna port. As described above, the first-type antenna port indicated by the second field may be divided into two parts. In this case, 2 bits in the second field may indicate an association relationship between a portion of the first-type antenna port and one of the second-type antenna ports, and 2 bits in the third field may indicate an association relationship between the other portion of the first-type antenna port and the other of the second-type antenna ports.

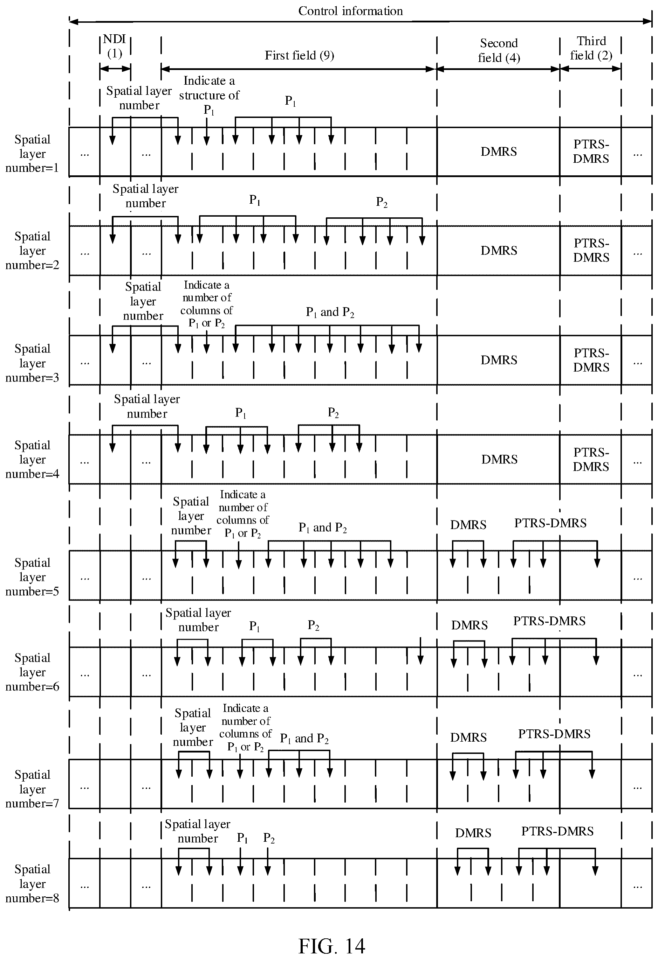

For example, FIG. 14 is a diagram of a format of the first information. As shown in FIG. 14, the first information includes the NDI associated with the un-enabled transport block, the first field, the second field, and the third field during spatial layer number$\leq$4, which occupy 1 bit, 9 bits, 4 bits, and 2 bits respectively. When spatial layer number$\leq$4, the NDI associated with the un-enabled transport block and 1 bit in the first field together indicate the spatial layer number. When spatial layer number>4, the third field and 2 bits in the second field together indicate the association relationship between the DMRS and the PTRS.

It should be understood that when spatial layer numbers are different, information indicated by a same bit may be different. Meanings of bits corresponding to different spatial layer numbers are defined, so that the first indication information and the second indication information can be indicated by a same bit.

(II) The terminal supports the second type of partial coherence, but does not support the first type of partial coherence.

For how the first field specifically indicates the precoding matrix, refer to the foregoing descriptions that the terminal supports the second type of partial coherence, but does not support the first type of partial coherence, in the first structure of the partial-coherent precoding matrix in Scenario 2 in Manner 1 and Manner 2. In addition, the first field may indicate the spatial layer number via 2 bits, or may indicate the spatial layer number via 3 bits. This is not limited in this application.

For how the second field specifically indicates the first-type antenna port, refer to the descriptions of Scenario 1 in Manner 3.

As described in Scenario 1 in Manner 3, 3 bits (in the first design and the second design) or 2 bits (in the third design and the fourth design) may be further left in the second field. In this case, when spatial layer number>4, the third field and 2 bits in the 3 bits may together indicate the association relationship between the first-type antenna port and the second-type antenna port. As described above, the first-type antenna port indicated by the second field may be divided into two parts. In this case, 2 bits in the second field may indicate an association relationship between a portion of the first-type antenna port and one of the second-type antenna ports, and 2 bits in the third field may indicate an association relationship between the other portion of the first-type antenna port and the other of the second-type antenna ports.

(III) The terminal supports both the first type of partial coherence and the second type of partial coherence.

In some embodiments, the first information further includes third indication information, and the third indication information indicates whether $P_1$ and $P_2$ are full-coherent precoding matrices or partial-coherent precoding matrices.

If the third indication information indicates that $P_1$ and $P_2$ are full-coherent precoding matrices, for specific content of the first information, refer to the foregoing descriptions in "(I) The terminal supports the first type of partial coherence, but does not support the second type of partial coherence" in Manner 3. If the third indication information indicates that $P_1$ and $P_2$ are partial-coherent precoding matrices, for specific content of the first information, refer to the foregoing descriptions in "(II) The terminal supports the second type of partial coherence, but does not support the first type of partial coherence" in Manner 3.

In some other embodiments, both $P_1$ and $P_2$ are full-coherent precoding matrices or partial-coherent precoding matrices. After one of $P_1$ and $P_2$ is determined, a coherence capability of the other may also be determined. Therefore, if $P_1$ is determined from a precoding matrix set including full-coherent precoding matrices and partial-coherent precoding matrices, $P_2$ may be selected from a full-coherent precoding matrix set when $P_1$ is a full-coherent precoding matrix, and $P_2$ may be selected from a partial-coherent precoding matrix set when $P_1$ is a partial-coherent precoding matrix; or if $P_2$ is determined from a precoding matrix set including full-coherent precoding matrices and partial-coherent precoding

matrices, $P_1$ may be selected from a full-coherent precoding matrix set when $P_2$ is a full-coherent precoding matrix, and $P_1$ may be selected from a partial-coherent precoding matrix set when $P_2$ is a partial-coherent precoding matrix.

In this embodiment, for how the first field specifically indicates the precoding matrix, refer to the foregoing descriptions that the terminal supports both the first type of partial coherence and the second type of partial coherence in the first structure of the partial-coherent precoding matrix in Scenario 2 in Manner 1 and Manner 2. In addition, the first field may indicate the spatial layer number via 2 bits, or may indicate the spatial layer number via 3 bits. This is not limited in this application.

For how the second field specifically indicates the first-type antenna port, refer to the descriptions of Scenario 1 in Manner 3.

As described in Scenario 1 in Manner 3, 3 bits (in the first design and the second design) or 2 bits (in the third design and the fourth design) may be further left in the second field. In this case, when spatial layer number>4, the third field and 2 bits in the 3 bits may together indicate the association relationship between the first-type antenna port and the second-type antenna port. As described above, the first-type antenna port indicated by the second field may be divided into two parts. In this case, 2 bits in the second field may indicate an association relationship between a portion of the first-type antenna port and one of the second-type antenna ports, and 2 bits in the third field may indicate an association relationship between the other portion of the first-type antenna port and the other of the second-type antenna ports.

B. Second structure of the partial-coherent precoding matrix

For how the first field specifically indicates the precoding matrix, refer to the foregoing descriptions that the terminal supports the first type of partial coherence, but does not support the second type of partial coherence, in the second structure of the partial-coherent precoding matrix in Scenario 2 in Manner 1 and Manner 2. In addition, the first field may indicate the spatial layer number via 2 bits, or may indicate the spatial layer number via 3 bits. This is not limited in this application.

For how the second field specifically indicates the first-type antenna port, refer to the descriptions of Scenario 1 in Manner 3.

As described in Scenario 1 in Manner 3, 3 bits (in the first design and the second design) or 2 bits (in the third design and the fourth design) may be further left in the second field. In this case, when spatial layer number>4, the third field and 2 bits in the 3 bits may together indicate the association relationship between the first-type antenna port and the second-type antenna port. As described above, the first-type antenna port indicated by the second field may be divided into two parts. In this case, 2 bits in the second field may indicate an association relationship between a portion of the first-type antenna port and one of the second-type antenna ports, and 2 bits in the third field may indicate an association relationship between the other portion of the first-type antenna port and the other of the second-type antenna ports.

(II) The terminal supports the second type of partial coherence, but does not support the first type of partial coherence.

For how the first field specifically indicates the precoding matrix, refer to the foregoing descriptions that the terminal supports the second type of partial coherence, but does not support the first type of partial coherence, in the second structure of the partial-coherent precoding matrix in Scenario 2 in Manner 1 and Manner 2. In addition, the first field may indicate the spatial layer number via 2 bits, or may indicate the spatial layer number via 3 bits. This is not limited in this application.

For how the second field specifically indicates the first-type antenna port, refer to the descriptions of Scenario 1 in Manner 3.

As described in Scenario 1 in Manner 3, 3 bits (in the first design and the second design) or 2 bits (in the third design and the fourth design) may be further left in the second field. In this case, when spatial layer number>4, the third field and 2 bits in the 3 bits may together indicate the association relationship between the first-type antenna port and the second-type antenna port. As described above, the first-type antenna port indicated by the second field may be divided into two parts. In this case, 2 bits in the second field may indicate an association relationship between a portion of the first-type antenna port and one of the second-type antenna ports, and 2 bits in the third field may indicate an association relationship between the other portion of the first-type antenna port and the other of the second-type antenna ports.

(III) The terminal supports both the first type of partial coherence and the second type of partial coherence.

In some embodiments, the first information further includes third indication information, and the third indication information indicates whether $P_1$ and $P_2$ are full-coherent precoding matrices or partial-coherent precoding matrices.

If the third indication information indicates that $P_1$ and $P_2$ are full-coherent precoding matrices, for specific content of the first information, refer to the foregoing descriptions in "(I) The terminal supports the first type of partial coherence, but does not support the second type of partial coherence" in Manner 3. If the third indication information indicates that $P_1$ and $P_2$ are partial-coherent precoding matrices, for specific content of the first information, refer to the foregoing descriptions in "(II) The terminal supports the second type of partial coherence, but does not support the first type of partial coherence" in Manner 3.

In some other embodiments, both $P_1$ and $P_2$ are full-coherent precoding matrices or partial-coherent precoding matrices. After one of $P_1$ and $P_2$ is determined, a coherence capability of the other may also be determined. Therefore, if $P_1$ is determined from a precoding matrix set including full-coherent precoding matrices and partial-coherent precoding matrices, $P_2$ may be selected from a full-coherent precoding matrix set when $P_1$ is a full-coherent precoding matrix, and $P_2$ may be selected from a partial-coherent precoding matrix set when $P_1$ is a partial-coherent precoding matrix; or if $P_2$ is determined from a precoding matrix set including full-coherent precoding matrices and partial-coherent precoding matrices, $P_1$ may be selected from a full-coherent precoding matrix set when $P_2$ is a full-coherent precoding matrix, and $P_1$ may be selected from a partial-coherent precoding matrix set when $P_2$ is a partial-coherent precoding matrix.

In this embodiment, for how the first field specifically indicates the precoding matrix, refer to the foregoing descriptions that the terminal supports both the first type of partial coherence and the second type of partial coherence in the second structure of the partial-coherent precoding matrix in Scenario 2 in Manner 1 and Manner 2. In addition, the first field may indicate the spatial layer number via 2 bits, or may indicate the spatial layer number via 3 bits. This is not limited in this application.

For how the second field specifically indicates the first-type antenna port, refer to the descriptions of Scenario 1 in Manner 3.

As described in Scenario 1 in Manner 3, 3 bits (in the first design and the second design) or 2 bits (in the third design and the fourth design) may be further left in the second field. In this case, when spatial layer number>4, the third field and 2 bits in the 3 bits may together indicate the association relationship between the first-type antenna port and the second-type antenna port. As described above, the first-type antenna port indicated by the second field may be divided into two parts. In this case, 2 bits in the second field may indicate an association relationship between a portion of the first-type antenna port and one of the second-type antenna ports, and 2 bits in the third field may indicate an association relationship between the other portion of the first-type antenna port and the other of the second-type antenna ports.

Scenario 4: NCB-based precoding matrix

For how the first field specifically indicates the spatial layer number and the precoding matrix, refer to the foregoing description of Scenario 4 in Manner 2. For how the second field specifically indicates the second-type antenna port, refer to the descriptions of Scenario 1 in Manner 3.

The second field may be 4 bits, and the third field may be 2 bits. As described in Scenario 1 in Manner 3, when spatial layer number>4, except for 1 bit (in the first design and the second design) or 2 bits (in the third design and the fourth design) indicating the first-type antenna port, 3 bits or 2 bits may be further left in the second field. In this case, when spatial layer number>4, the third field and the remaining 2 bits may together indicate the association relationship between the first-type antenna port and the second-type antenna port.

For example, the first-type antenna port is a DMRS port, and the second-type antenna port is a PTRS port. One, two, or four PTRS ports may be configured for the terminal. When a number of PTRS ports is 1, the third field and the remaining 2 bits in the second field may together indicate a DMRS port that is in a maximum of eight DMRS ports and that is associated with the PTRS port. When a number of PTRS ports is 2, four DMRS ports share one PTRS port, each PTRS port needs to be indicated by 2 bits, and the third field and the remaining 2 bits in the second field, that is, a total of 4 bits, may together indicate DMRS ports separately associated with the two PTRS ports. When a number of PTRS ports is 4, two DMRS ports share one PTRS port, each PTRS port needs to be indicated by 4 bits, and the third field and the remaining 2 bits in the second field, that is, a total of 4 bits, may together indicate DMRS ports separately associated with the four PTRS ports.

For example, when spatial layer number>4, when the number of PTRS ports is 1, an association relationship between the PTRS port and a DMRS port is shown in Table 19; or when the number of PTRS ports is 2, an association relationship between each PTRS ports and a DMRS port is shown in Table 21; or when the number of PTRS ports is 4, an association relationship between each PTRS ports and a DMRS port is shown in Table 22.

It should be understood that, the third field and the remaining bits in the second field together indicating the association relationship between the third antenna port set and the fourth antenna port set is similar to the third field and the remaining bits in the first field together indicate the association relationship between the third antenna port set and the fourth antenna port set described in Manner 1 or Manner 2. For details about how to indicate the association relationship between the third antenna port set and the fourth antenna port set in different scenarios in Manner 3, refer to the related descriptions in Manner 1 and Manner 2. For details about how the third field specifically indicates the association relationship between the first antenna port set and the second antenna port set in Manner 3, refer to the related descriptions in Manner 1 and Manner 2.

Manner 4

A difference between Manner 4 and Manner 3 lies in that when spatial layer number>4, the remaining bits in the second field have different functions. In Manner 4, when spatial layer number>4, the remaining bits in the second field may replace the NDI in the fourth field or the fifth field.

In other words, the first information includes NDIs respectively associated with the two transport blocks, one of the NDIs is set in the remaining bits in the second field, and the other may be independently set. In this way, 1-bit overheads can be reduced.

It should be understood that Manner 4 may be combined with Manner 1 or Manner 2.

The foregoing describes the method embodiment provided in this application. The following describes apparatus embodiments provided in this application. It should be understood that descriptions of the apparatus embodiments correspond to the descriptions of the method embodiment. Therefore, for content that is not described in detail, refer to the foregoing method embodiment. For brevity, details are not described herein again.

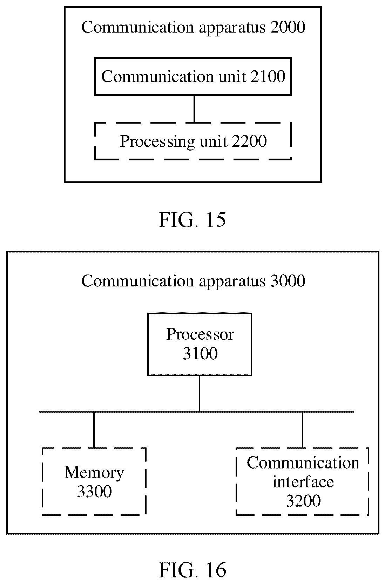

FIG. 15 is a block diagram of a communication apparatus according to an embodiment of this application. As shown in FIG. 15, the communication apparatus 2000 may include a communication unit 2100 and a processing unit 2200. The communication unit 2100 may implement a corresponding communication function. This communication may be internal communication of the communication apparatus 2000 or may be communication between the communication apparatus 2000 and another apparatus. The processing unit 2200 may implement a corresponding processing function. The communication unit 2100 may also be referred to as a communication interface or a transceiver unit. Optionally, the communication apparatus 2000 may further include a storage unit. The storage unit may be configured to store instructions and/or data. The processing unit 2200 may read the instructions and/or the data in the storage unit, to enable the apparatus to implement the foregoing method embodiment.

In a possible design, the communication apparatus 2000 may be a network device in the method 300, or may be a module or a chip used in a network device. The communication apparatus 2000 may be configured to perform steps or procedures performed by the network device in the method 300.

Specifically, the processing unit 2200 is configured to generate first information. The communication unit 2100 is configured to send the first information, where the first information is used by a terminal to send an uplink signal. The first information includes second indication information, a number of bits occupied by the second indication information is the same as a number of bits occupied by first indication information, the first indication information indicates a first spatial layer number, a first precoding matrix corresponding to the first spatial layer number, a first antenna port set, and an association relationship between the first antenna port set and a second antenna port set, the first spatial layer number belongs to {1, 2, 3, 4}, the second indication information indicates a second spatial layer number, a second precoding matrix corresponding to the second spatial layer number, a third antenna port set, and an association relationship between the third antenna port set and a fourth antenna port set, and the second spatial layer number belongs to {5, 6, 7, 8}.

In another possible design, the communication apparatus 2000 may be a terminal in the method 300, or may be a module or a chip used in a terminal. The communication apparatus 2000 may be configured to perform steps or procedures performed by the terminal in the method 300.

Specifically, the communication unit 2100 is configured to receive first information, and send a signal based on the first information. The first information includes second indication information, a number of bits occupied by the second indication information is the same as a number of bits occupied by first indication information, the first indication information indicates a first spatial layer number, a first precoding matrix corresponding to the first spatial layer number, a first antenna port set, and an association relationship between the first antenna port set and a second antenna port set, the first spatial layer number belongs to {1, 2, 3, 4}, the second indication information indicates a second spatial layer number, a second precoding matrix corresponding to the second spatial layer number, a third antenna port set, and an association relationship between the third antenna port set and a fourth antenna port set, and the second spatial layer number belongs to {5, 6, 7, 8}.

For details about steps or procedures performed by the units in the communication apparatus 2000, refer to the method 300. Details are not described herein again.

It should be understood that, the "unit" in the communication apparatus 2000 may be implemented by hardware, or may be implemented by software, or may be implemented by hardware executing corresponding software. For example, the "unit" may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. For another example, the communication unit 2100 may be replaced with a transceiver machine or a transceiver circuit (for example, may include a receiver circuit and a transmitter circuit), and the processing unit 2200 may be replaced with a processor or a processing circuit.

FIG. 16 is a block diagram of another communication apparatus 3000 according to an embodiment of this application. The apparatus 3000 may be a network device or a terminal, or may be a chip, a chip system, a processor, or the like that supports a network device or a terminal in implementing the foregoing method. The apparatus may be configured to implement the method described in the foregoing method embodiment. For details, refer to the descriptions in the foregoing method embodiment.

The apparatus 3000 may include one or more processors 3100. The processor 3100 may also be referred to as a processing unit, and may implement a specific control function. The processor 3100 may be a general-purpose processor, a dedicated processor, or the like, for example, may be a baseband processor or a central processing unit. The baseband processor may be configured to process a communication protocol and communication data. The central processing unit may be configured to control the communication apparatus (for example, a base station, a baseband chip, a user, a user chip, a DU, or a CU), execute a software program, and process data of the software program.

In an optional design, the processor 3100 may also store instructions and/or data, and the instructions and/or the data may be run by the processor 3100, to enable the apparatus 3000 to perform the method described in the foregoing method embodiment.

In another optional design, the apparatus 3000 may include a communication interface 3200 configured to implement receiving and sending functions. For example, the communication interface 3200 may be a transceiver circuit, an interface, an interface circuit, or a transceiver. The transceiver circuit, the interface, the interface circuit, or the transceiver configured to implement the receiving and sending functions may be separated, or may be integrated together. The transceiver circuit, the interface, the interface circuit, or the transceiver may be configured to read and write code/data, or the transceiver circuit, the interface, the interface circuit, or the transceiver may be configured to transmit or transfer a signal.

Optionally, the apparatus 3000 may include one or more memories 3300. The memory may store instructions. The instructions may be run on the processor 3100, to enable the apparatus 3000 to perform the method described in the foregoing method embodiment. Optionally, the memory 3300 may further store data. Optionally, the processor 3100 may also store instructions and/or data. The processor 3100 and the memory 3300 may be separately disposed, or may be integrated together.

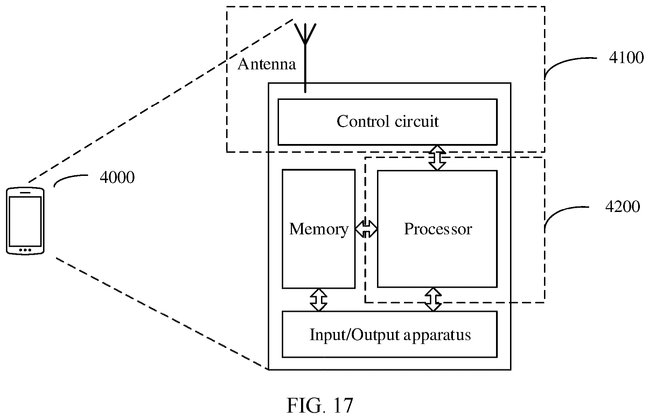

FIG. 17 is a diagram of a structure of a terminal 4000 according to this application. The communication apparatus 2000 or the communication apparatus 3000 may be disposed in the terminal 4000. Alternatively, the communication apparatus 2000 or the communication apparatus 3000 may be the terminal 4000. In other words, the terminal 4000 may perform actions performed by a terminal in the foregoing method embodiment. Optionally, for ease of description, FIG. 17 shows only main components of the terminal. As shown in FIG. 17, the terminal 4000 includes a processor, a memory, a control circuit, an antenna, and an input/output apparatus.

The processor is mainly configured to process a communication protocol and communication data, control the entire terminal, execute a software program, and process data of the software program, for example, is configured to support the terminal in performing actions described in the foregoing method embodiment. The memory is mainly configured to store the software program and the data. The control circuit is mainly configured to convert a baseband signal and a radio frequency signal and process the radio frequency signal. The control circuit and the antenna together may also be referred to as a transceiver, and are mainly configured to receive/send a radio frequency signal in an electromagnetic wave form. The input/output apparatus, for example, a touchscreen, a display, or a keyboard, is mainly configured to receive data input by a user and output data to the user.

After the terminal is powered on, the processor may read a software program from a storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the terminal, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 17 shows only one memory and one processor. Actually, the terminal may include a plurality of processors and a plurality of memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to control the entire terminal, execute the software program, and process the data of the software program. The processor in FIG. 17 integrates functions of the baseband processor and the central processing unit. A person skilled in the art may understand that the baseband processor and the central processing unit may alternatively be processors independent of each other, and are interconnected by using a technology like a bus. A person skilled in the art may understand that the terminal may include a plurality of baseband processors to adapt to different network standards, the terminal may include a plurality of central processing units to enhance a processing capability of the terminal, and components of the terminal may be connected to each other through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have receiving and sending functions may be considered as a transceiver unit 4100 of the terminal 4000, and the processor that has a processing function may be considered as a processing unit 4200 of the terminal 4000. As shown in FIG. 17, the terminal 4000 includes the transceiver unit 4100 and the processing unit 4200. The transceiver unit may also be referred to as a transceiver, a transceiver machine, a transceiver apparatus, or the like. Optionally, a component that is in the transceiver unit 4100 and that is configured to implement a receiving function may be considered as a receiving unit, and a component that is in the transceiver unit 4100 and that is configured to implement a sending function may be considered as a sending unit. In other words, the transceiver unit 4100 includes the receiving unit and the sending unit. For example, the receiving unit may also be referred to as a receiver machine, a receiver, or a receiver circuit, and the sending unit may also be referred to as a transmitter machine, a transmitter, a transmitter circuit, or the like.

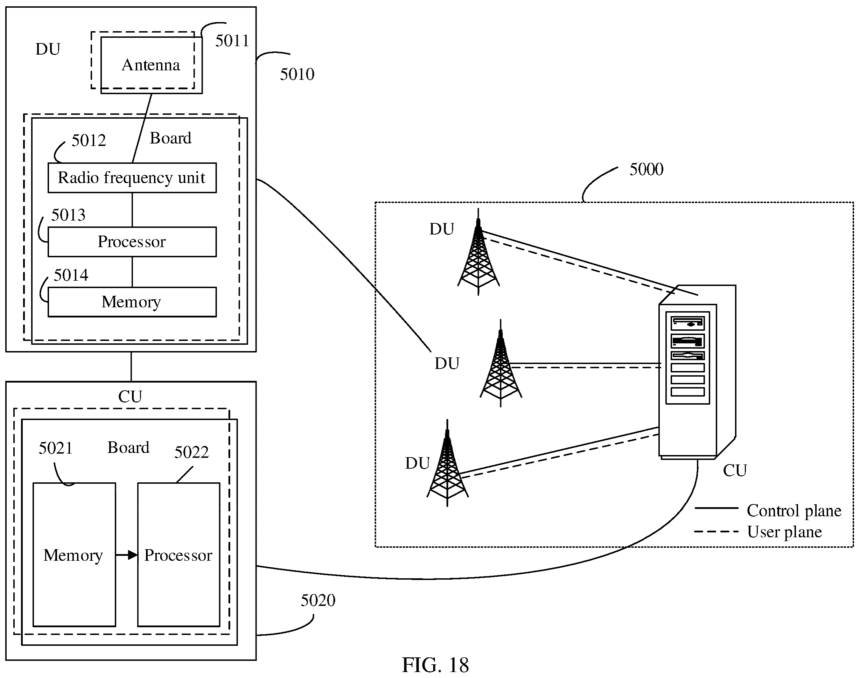

FIG. 18 is a diagram of a structure of a network device 5000 according to an embodiment of this application. The communication apparatus 2000 or the communication apparatus 3000 may be disposed in the network device 5000. Alternatively, the communication apparatus 2000 or the communication apparatus 3000 may be the network device 5000. In other words, the network device 5000 may perform an action performed by a network device in the foregoing method embodiment.

As shown in FIG. 18, the network device 5000 may include one or more DUs 5010 and one or more CUs 5020. The CU 5020 may communicate with an NG core (next generation core network, NC). The DU 5010 may include at least one antenna 5011, at least one radio frequency unit 5012, at least one processor 5013, and at least one memory 5014. The DU 5010 is mainly configured to send and receive radio frequency signals, perform conversion between a radio frequency signal and a baseband signal, and perform partial baseband processing. The CU 5020 may include at least one processor 5022 and at least one memory 5021. The CU 5020 and the DU 5010 may communicate with each other through an interface. A control plane (control plane, CP) interface may be Fs-C, for example, F1-C, and a user plane (user plane, UP) interface may be Fs-U, for example, F1-U.

The CU 5020 is mainly configured to perform baseband processing, control the network device 5000, and the like. The DU 5010 and the CU 5020 may be physically disposed together, or may be physically disposed separately, that is, in a distributed base station. The CU 5020 is a control center of the network device 5000, may also be referred to as a processing unit, and is mainly configured to complete a baseband processing function. For example, the CU 5020 may be configured to control the network device 5000 to perform an operation procedure related to a network device in the foregoing method embodiment.

Specifically, baseband processing of the CU and the DU may be divided based on a protocol layer of a wireless network. For example, functions of a PDCP layer and a protocol layer above the PDCP layer are set on the CU, and functions of protocol layers below the PDCP, such as an RLC layer and a MAC layer, are set on the DU. For another example, the CU implements functions of an RRC layer and a PDCP layer, and the DU implements functions of an RLC layer, a MAC layer, and a PHY layer.

In addition, optionally, the network device 5000 may include one or more radio frequency units (RUs), one or more DUs, and one or more CUs. The DU may include at least one processor 5013 and at least one memory 5014, the RU may include at least one antenna 5011 and at least one radio frequency unit 5012, and the CU may include at least one processor 5022 and at least one memory 5021.

In an example, the CU 5020 may include one or more boards. A plurality of boards may jointly support a radio access network (for example, a 5G network) of a single access standard, or may respectively support radio access networks (such as an LTE network, a 5G network, or another network) of different access standards. The memory 5021 and the processor 5022 may serve one or more boards. In other words, a memory and a processor may be disposed on each board. Alternatively, a plurality of boards may share a same memory and a same processor. In addition, a necessary circuit may further be disposed on each board. The DU 5010 may include one or more boards. A plurality of boards may jointly support a radio access network (for example, a 5G network) of a single access standard, or may respectively support radio access networks (such as an LTE network, a 5G network, or another network) of different access standards. The memory 5014 and the processor 5013 may serve one or more boards. In other words, a memory and a processor may be disposed on each board. Alternatively, a plurality of boards may share a same memory and a same processor. In addition, a necessary circuit may further be disposed on each board.

It should be understood that the network device 5000 shown in FIG. 18 can implement processes related to actions performed by a network device in the foregoing method embodiment. Operations and/or functions of modules in the network device 5000 are respectively for implementing corresponding procedures in the foregoing method embodiment. For details, refer to the descriptions in the foregoing method embodiment. To avoid repetition, detailed descriptions are appropriately omitted herein.

It should be understood that the network device 5000 shown in FIG. 18 is merely a possible architecture of the network device, and should not constitute any limitation on this application. The method provided in this application is applicable to a network device in another architecture, for example, a network device including a CU, a DU, and an AAU. A specific architecture of the network device is not limited in this application.

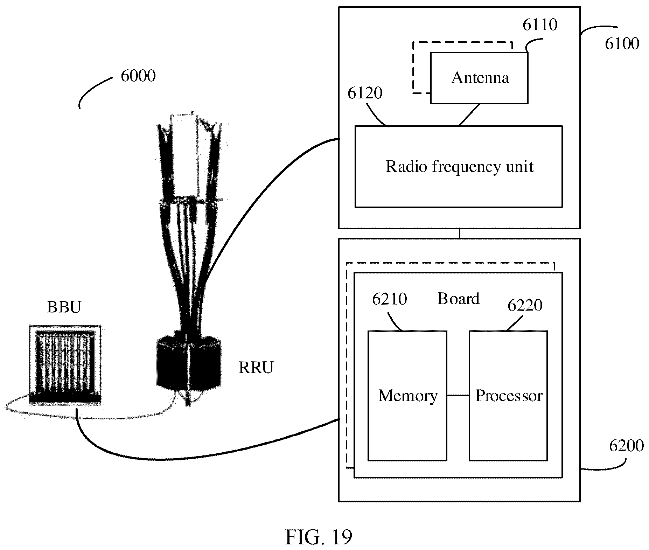

FIG. 19 is a diagram of a structure of a network device 6000 according to an embodiment of this application. The communication apparatus 2000 or the communication apparatus 3000 may be disposed in the network device 6000. Alternatively, the communication apparatus 2000 or the communication apparatus 3000 may be the network device 6000. In other words, the network device 6000 may perform an operation performed by a network device in the foregoing method embodiment.

The network device 6000 may include one or more radio frequency units, such as a remote radio unit (remote radio unit, RRU) 6100 and one or more baseband units (baseband units, BBUs) 6200 (which may also be referred to as digital units (digital units, DUs)). The RRU 6100 may be referred to as a transceiver unit, a transceiver machine, a transceiver circuit, a transceiver, or the like, and may include at least one antenna 6110 and a radio frequency unit 6120. The RRU 6100 is mainly configured to receive and send radio frequency signals, and perform conversion between a radio frequency signal and a baseband signal. The BBU 6200 is mainly configured to perform baseband processing, control the network device 6000, and the like. The RRU 6100 and the BBU 6200 may be physically disposed together, or may be physically disposed separately, that is, in a distributed base station.

The BBU 6200 is a control center of the network device 6000, may also be referred to as a processing unit, and is mainly configured to complete baseband processing functions, such as channel coding, multiplexing, modulation, and spectrum spreading. For example, the BBU (the processing unit) 6200 may be configured to control the network device 6000 to perform an operation procedure related to a transmitting end or a receiving end in the foregoing method embodiment.

In an example, the BBU 6200 may include one or more boards. A plurality of boards may jointly support a radio access network (for example, an LTE system or a 5G system) of a single access standard, or may respectively support radio access networks of different access standards. The BBU 6200 further includes a memory 6210 and a processor 6220. The memory 6210 is configured to store necessary instructions and data. The processor 6220 is configured to control the network device 6000 to perform a necessary action, for example, configured to control the network device 6000 to perform an operation procedure related to a first network device or a second network device in the foregoing method embodiment. The memory 6210 and the processor 6220 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-chip (system-on-chip, SoC) technology, all or some functions of the part 6200 and the part 6100 may be implemented by using the SoC technology, for example, implemented by using one base station function chip. The base station function chip integrates components such as a processor, a memory, and an antenna port. A program of a related function of the base station is stored in the memory, and the processor executes the program to implement the related function of the base station. Optionally, the base station function chip can also read a memory outside the chip to implement the related function of the base station.

It should be understood that, the structure of the network device 6000 shown in FIG. 19 is merely a possible form, and should not constitute any limitation on embodiments of this application. In this application, there may be a base station structure in another form in the future.

It should be understood that, in a possible design, steps in the method embodiments provided in this application may be completed by using a hardware integrated logic circuit in a processor, or instructions in a form of software. The steps in the methods disclosed with reference to embodiments of this application may be directly performed and completed by a hardware processor, or may be performed and completed by a combination of hardware and software modules in the processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be completed by using a hardware integrated logic circuit in the processor, or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the method, the steps, and logic block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and the method described in this specification includes but is not limited to these memories and any memory of another proper type.

This application further provides a computer program product. The computer program product includes computer program code. When the computer program code is run on a computer, the computer is enabled to perform steps or procedures performed by the terminal or the network device in any one of the foregoing method embodiments.

This application further provides a computer-readable storage medium. The computer-readable storage medium stores program code. When the program code is run on a computer, the computer is enabled to perform steps or procedures performed by the terminal or the network device in any one of the foregoing method embodiments.

This application further provides a communication system, including at least one of a terminal and a network device.

The foregoing apparatus embodiments completely correspond to the method embodiment, and corresponding modules or units perform corresponding steps. For example, a communication unit or a communication interface performs a receiving step or a sending step in the method embodiment, and a processing unit or a processor may perform a step other than the sending step and the receiving step.

In embodiments of this application, the terms and English abbreviations are all examples given for ease of description, and should not constitute any limitation on this application. This application does not exclude a possibility of defining another term that can implement a same or similar function in an existing or future protocol.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in figures, both a computing device and an application that runs on the computing device may be components. One or more components may reside within a process and/or a thread of execution, and a component may be located on one computer and/or distributed between two or more computers. In addition, these components may be executed from a variety of computer-readable storage media having various data structures stored thereon. For example, the components may communicate by using a local and/or remote process and based on, for example, a signal having one or more data packets (for example, data from two components interacting with another component in a local system, a distributed system, and/or across a network such as the internet interacting with another system via the signal).

A person of ordinary skill in the art may be aware that illustrative logic blocks (illustrative logic blocks) and steps (steps) described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for ease and brevity of description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in another manner. For example, the described apparatus embodiments are merely examples. For example, division into the units is merely logic function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some functions of the function units may be implemented by software, hardware, firmware, or any combination thereof. When the software is used for implementation, all or some of embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, comprising:

    generating first information, wherein the first information comprises second indication information, a number of bits occupied by the second indication information is the same as a number of bits occupied by first indication information, the first indication information indicates a first spatial layer number, a first precoding matrix corresponding to the first spatial layer number, a first antenna port set, and an association relationship between the first antenna port set and a second antenna port set, the first spatial layer number belongs to {1, 2, 3, 4}, the second indication information indicates a second spatial layer number, a second precoding matrix corresponding to the second spatial layer number, a third antenna port set, and an association relationship between the third antenna port set and a fourth antenna port set, the second spatial layer number belongs to {5, 6, 7, 8}; and
    sending the first information, wherein the first information is used by a terminal to send an uplink signal.

2. The method according to claim 1, wherein the second precoding matrix satisfies: $\mathbf{P} = \begin{bmatrix} \mathbf{P}_1 & \mathbf{0} \\ \mathbf{0} & \mathbf{P}_2 \end{bmatrix}$, wherein P is the second precoding matrix, a number of rows of P is 8, $\mathbf{P}_1$ and $\mathbf{P}_2$ are full-coherent precoding matrices in a 4Tx precoding matrix set, and 0 is a zero matrix.

3. The method according to claim 2, wherein if the second spatial layer number is 5, a number of columns of $\mathbf{P}_1$ is 2, and a number of columns of $\mathbf{P}_2$ is 3;

if the second spatial layer number is 6, a number of columns of $P_1$ is 3, and a number of columns of $P_2$ is 3;

if the second spatial layer number is 7, a number of columns of $P_1$ is 3, and a number of columns of $P_2$ is 4; or

if the second spatial layer number is 8, a number of columns of $P_1$ is 4, and a number of columns of $P_2$ is 4.

4. The method according to any one of claims 1 to 3, wherein the first information further comprises a modulation and coding scheme MCS and a redundancy version RV that are associated with a first transport block, and a modulation and coding scheme MCS and a redundancy version RV that are associated with a second transport block; and the MCS and the RV that are associated with the first transport block and the MCS and the RV that are associated with the second transport block indicate to enable the first transport block and the second transport block.

5. The method according to any one of claims 1 to 4, wherein the first indication information comprises a first field, a second field, and a third field, wherein

the first field indicates the first spatial layer number and the first precoding matrix, the second field indicates the first antenna port set, and the third field indicates the association relationship between the first antenna port set and the second antenna port set; and

the second indication information comprises the first field, the second field, and the third field, wherein a first portion of the first field indicates the second spatial layer number and the second precoding matrix, the second field indicates the third antenna port set in a plurality of antenna port sets corresponding to the second spatial layer number, and a second portion of the first field and the third field indicate the association relationship between the third antenna port set and the fourth antenna port set; or

a first portion of the first field indicates the second precoding matrix, the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the first field and the third field indicate the association relationship between the third antenna port set and the fourth antenna port set.

6. The method according to any one of claims 1 to 4, wherein the first indication information comprises a first field, a second field, a third field, and a new data indicator NDI associated with an un-enabled transport block in the first transport block and the second transport block, wherein

the NDI and the first field indicate the first spatial layer number and the first precoding matrix, the second field indicates the first antenna port set, and the third field indicates the association relationship between the first antenna port set and the second antenna port set; and

the second indication information comprises the first field, the second field, and the third field, wherein a first portion of the first field indicates the second spatial layer number and the second precoding matrix, the second field indicates the third antenna port set in a plurality of antenna port sets corresponding to the second spatial layer number, and a second portion of the first field and the third field indicate the association relationship between the third antenna port set and the fourth antenna port set; or

a first portion of the first field indicates the second precoding matrix, the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the first field and the third field indicate the association relationship between the third antenna port set and the fourth antenna port set.

7. The method according to any one of claims 1 to 4, wherein the first indication information comprises a first field, a second field, and a third field, wherein

the first field indicates the first spatial layer number and the first precoding matrix, the second field indicates the first antenna port set, and the third field indicates the association relationship between the first antenna port set and the second antenna port set; and

the second indication information comprises the first field, the second field, and the third field, wherein the first field indicates the second spatial layer number and the second precoding matrix, a first portion of the second field indicates the third antenna port set in a plurality of antenna port sets corresponding to the second spatial layer number, and a second portion of the second field and the third field indicate the association relationship between the third antenna port set and the fourth antenna port set; or

the first field indicates the second precoding matrix, a first portion of the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the second field and the third field indicate the association relationship between the third antenna port set and the fourth antenna port set.

8. The method according to any one of claims 1 to 4, wherein the first indication information comprises a first field, a second field, and a third field;

the first indication information comprises a first field, a second field, a third field, and a new data indicator NDI associated with an un-enabled transport block in the first transport block and the second transport block, wherein the NDI and the first field indicate the first spatial layer number and the first precoding matrix, the second field indicates the first antenna port set, and the third field indicates the association relationship between the first antenna port set and the second antenna port set; and
the second indication information comprises the first field, the second field, and the third field, wherein the first field indicates the second spatial layer number and the second precoding matrix, a first portion of the second field indicates the third antenna port set in a plurality of antenna port sets corresponding to the second spatial layer number, and a second portion of the second field and the third field indicate the association relationship between the third antenna port set and the fourth antenna port set; or
the first field indicates the second precoding matrix, a first portion of the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the second field and the third field indicate the association relationship between the third antenna port set and the fourth antenna port set.

9. The method according to any one of claims 5 to 8, wherein the second field is an antenna port field, or the third field is a phase tracking reference signal PTRS-demodulation reference signal DMRS association field.

10. A data transmission method, comprising:

receiving first information, wherein the first information comprises second indication information, a number of bits occupied by the second indication information is the same as a number of bits occupied by first indication information, the first indication information indicates a first spatial layer number, a first precoding matrix corresponding to the first spatial layer number, a first antenna port set, and an association relationship between the first antenna port set and a second antenna port set, the first spatial layer number belongs to {1, 2, 3, 4}, the second indication information indicates a second spatial layer number, a second precoding matrix corresponding to the second spatial layer number, a third antenna port set, and an association relationship between the third antenna port set and a fourth antenna port set, the second spatial layer number belongs to {5, 6, 7, 8}; and
sending a signal based on the first information.

11. The method according to claim 10, wherein the second precoding matrix satisfies: $\mathbf{P} = \begin{bmatrix} \mathbf{P}_1 & \mathbf{0} \\ \mathbf{0} & \mathbf{P}_2 \end{bmatrix}$, wherein P is the second precoding matrix, a number of rows of P is 8, $\mathbf{P}_1$ and $\mathbf{P}_2$ are full-coherent precoding matrices in a 4Tx precoding matrix set, and 0 is a zero matrix.

12. The method according to claim 11, wherein if the second spatial layer number is 5, a number of columns of $\mathbf{P}_1$ is 2, and a number of columns of $\mathbf{P}_2$ is 3;

if the second spatial layer number is 6, a number of columns of $\mathbf{P}_1$ is 3, and a number of columns of $\mathbf{P}_2$ is 3;
if the second spatial layer number is 7, a number of columns of $\mathbf{P}_1$ is 3, and a number of columns of $\mathbf{P}_2$ is 4; or
if the second spatial layer number is 8, a number of columns of $\mathbf{P}_1$ is 4, and a number of columns of $\mathbf{P}_2$ is 4.

13. The method according to any one of claims 10 to 12, wherein the first information further comprises a modulation and coding scheme MCS and a redundancy version RV that are associated with a first transport block, and a modulation and coding scheme MCS and a redundancy version RV that are associated with a second transport block; and the MCS and the RV that are associated with the first transport block and the MCS and the RV that are associated with the second transport block indicate to enable the first transport block and the second transport block.

14. The method according to any one of claims 10 to 13, wherein the first indication information comprises a first field, a second field, and a third field, wherein

the first field indicates the first spatial layer number and the first precoding matrix, the second field indicates the first antenna port set, and the third field indicates the association relationship between the first antenna port set and the second antenna port set; and

the second indication information comprises the first field, the second field, and the third field, wherein a first portion of the first field indicates the second spatial layer number and the second precoding matrix, the second field indicates the third antenna port set in a plurality of antenna port sets corresponding to the second spatial layer number, and a second portion of the first field and the third field indicate the association relationship between the third antenna port set and the fourth antenna port set; or

a first portion of the first field indicates the second precoding matrix, the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the first field and the third field indicate the association relationship between the third antenna port set and the fourth antenna port set.

15. The method according to any one of claims 10 to 13, wherein the first indication information comprises a first field, a second field, a third field, and a new data indicator NDI associated with an un-enabled transport block in the first transport block and the second transport block, wherein

the NDI and the first field indicate the first spatial layer number and the first precoding matrix, the second field indicates the first antenna port set, and the third field indicates the association relationship between the first antenna port set and the second antenna port set; and

the second indication information comprises the first field, the second field, and the third field, wherein a first portion of the first field indicates the second spatial layer number and the second precoding matrix, the second field indicates the third antenna port set in a plurality of antenna port sets corresponding to the second spatial layer number, and a second portion of the first field and the third field indicate the association relationship between the third antenna port set and the fourth antenna port set; or

a first portion of the first field indicates the second precoding matrix, the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the first field and the third field indicate the association relationship between the third antenna port set and the fourth antenna port set.

16. The method according to any one of claims 10 to 13, wherein the first indication information comprises a first field, a second field, and a third field, wherein

the first field indicates the first spatial layer number and the first precoding matrix, the second field indicates the first antenna port set, and the third field indicates the association relationship between the first antenna port set and the second antenna port set; and

the second indication information comprises the first field, the second field, and the third field, wherein the first field indicates the second spatial layer number and the second precoding matrix, a first portion of the second field indicates the third antenna port set in a plurality of antenna port sets corresponding to the second spatial layer number, and a second portion of the second field and the third field indicate the association relationship between the third antenna port set and the fourth antenna port set; or

the first field indicates the second precoding matrix, a first portion of the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the second field and the third field indicate the association relationship between the third antenna port set and the fourth antenna port set.

17. The method according to any one of claims 10 to 13, wherein the first indication information comprises a first field, a second field, and a third field;

the first indication information comprises a first field, a second field, a third field, and a new data indicator NDI associated with an un-enabled transport block in the first transport block and the second transport block, wherein the NDI and the first field indicate the first spatial layer number and the first precoding matrix, the second field indicates the first antenna port set, and the third field indicates the association relationship between the first antenna port set and the second antenna port set; and

the second indication information comprises the first field, the second field, and the third field, wherein the first field indicates the second spatial layer number and the second precoding matrix, a first portion of the second field indicates the third antenna port set in a plurality of antenna port sets corresponding to the second spatial layer number, and a second portion of the second field and the third field indicate the association relationship between the third antenna port set and the fourth antenna port set; or

the first field indicates the second precoding matrix, a first portion of the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the second field and the third field indicate the association relationship between the third antenna port set and the fourth antenna port set.

18. The method according to any one of claims 14 to 17, wherein the second field is an antenna port field, or the third field is a phase tracking reference signal PTRS-demodulation reference signal DMRS association field.

19. A communication apparatus, comprising:

a processing unit, configured to generate first information, wherein the first information comprises second indication information, a number of bits occupied by the second indication information is the same as a number of bits occupied by first indication information, the first indication information indicates a first spatial layer number, a first precoding matrix corresponding to the first spatial layer number, a first antenna port set, and an association relationship between the first antenna port set and a second antenna port set, the first spatial layer number belongs to {1, 2, 3, 4}, the second indication information indicates a second spatial layer number, a second precoding matrix corresponding to the second spatial layer number, a third antenna port set, and an association relationship between the third antenna port set and a fourth antenna port set, and the second spatial layer number belongs to {5, 6, 7, 8}; and

a communication unit, configured to send the first information, wherein the first information is used by a terminal to send an uplink signal.

20. The apparatus according to claim 19, wherein the second precoding matrix satisfies: $\mathbf{P} = \begin{bmatrix} \mathbf{P}_1 & \mathbf{0} \\ \mathbf{0} & \mathbf{P}_2 \end{bmatrix}$, wherein $\mathbf{P}$ is the second precoding matrix, a number of rows of $\mathbf{P}$ is 8, $\mathbf{P}_1$ and $\mathbf{P}_2$ are full-coherent precoding matrices in a 4Tx precoding matrix set, and 0 is a zero matrix.

21. The apparatus according to claim 20, wherein if the second spatial layer number is 5, a number of columns of $\mathbf{P}_1$ is 2, and a number of columns of $\mathbf{P}_2$ is 3;

if the second spatial layer number is 6, a number of columns of $\mathbf{P}_1$ is 3, and a number of columns of $\mathbf{P}_2$ is 3;
if the second spatial layer number is 7, a number of columns of $\mathbf{P}_1$ is 3, and a number of columns of $\mathbf{P}_2$ is 4; or
if the second spatial layer number is 8, a number of columns of $\mathbf{P}_1$ is 4, and a number of columns of $\mathbf{P}_2$ is 4.

22. The apparatus according to any one of claims 19 to 21, wherein the first information further comprises a modulation and coding scheme MCS and a redundancy version RV that are associated with a first transport block, and a modulation and coding scheme MCS and a redundancy version RV that are associated with a second transport block; and the MCS and the RV that are associated with the first transport block and the MCS and the RV that are associated with the second transport block indicate to enable the first transport block and the second transport block.

23. The apparatus according to any one of claims 19 to 22, wherein the first indication information comprises a first field, a second field, and a third field, wherein

the first field indicates the first spatial layer number and the first precoding matrix, the second field indicates the first antenna port set, and the third field indicates the association relationship between the first antenna port set and the second antenna port set; and

the second indication information comprises the first field, the second field, and the third field, wherein a first portion of the first field indicates the second spatial layer number and the second precoding matrix, the second field indicates the third antenna port set in a plurality of antenna port sets corresponding to the second spatial layer number, and a second portion of the first field and the third field indicate the association relationship between the third antenna port set and the fourth antenna port set; or

a first portion of the first field indicates the second precoding matrix, the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the first field and the third field indicate the association relationship between the third antenna port set and the fourth antenna port set.

24. The apparatus according to any one of claims 19 to 22, wherein the first indication information comprises a first field, a second field, a third field, and a new data indicator NDI associated with an un-enabled transport block in the first transport block and the second transport block, wherein

the NDI and the first field indicate the first spatial layer number and the first precoding matrix, the second field indicates the first antenna port set, and the third field indicates the association relationship between the first antenna port set and the second antenna port set; and
the second indication information comprises the first field, the second field, and the third field, wherein
a first portion of the first field indicates the second spatial layer number and the second precoding matrix, the second field indicates the third antenna port set in a plurality of antenna port sets corresponding to the second spatial layer number, and a second portion of the first field and the third field indicate the association relationship between the third antenna port set and the fourth antenna port set; or
a first portion of the first field indicates the second precoding matrix, the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the first field and the third field indicate the association relationship between the third antenna port set and the fourth antenna port set.

25. The apparatus according to any one of claims 19 to 22, wherein the first indication information comprises a first field, a second field, and a third field, wherein

the first field indicates the first spatial layer number and the first precoding matrix, the second field indicates the first antenna port set, and the third field indicates the association relationship between the first antenna port set and the second antenna port set; and
the second indication information comprises the first field, the second field, and the third field, wherein
the first field indicates the second spatial layer number and the second precoding matrix, a first portion of the second field indicates the third antenna port set in a plurality of antenna port sets corresponding to the second spatial layer number, and a second portion of the second field and the third field indicate the association relationship between the third antenna port set and the fourth antenna port set; or
the first field indicates the second precoding matrix, a first portion of the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the second field and the third field indicate the association relationship between the third antenna port set and the fourth antenna port set.

26. The apparatus according to any one of claims 19 to 22, wherein the first indication information comprises a first field, a second field, and a third field;

the first indication information comprises a first field, a second field, a third field, and a new data indicator NDI associated with an un-enabled transport block in the first transport block and the second transport block, wherein the NDI and the first field indicate the first spatial layer number and the first precoding matrix, the second field indicates the first antenna port set, and the third field indicates the association relationship between the first antenna port set and the second antenna port set; and
the second indication information comprises the first field, the second field, and the third field, wherein
the first field indicates the second spatial layer number and the second precoding matrix, a first portion of the second field indicates the third antenna port set in a plurality of antenna port sets corresponding to the second spatial layer number, and a second portion of the second field and the third field indicate the association relationship between the third antenna port set and the fourth antenna port set; or
the first field indicates the second precoding matrix, a first portion of the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the second field and the third field indicate the association relationship between the third antenna port set and the fourth antenna port set.

27. The apparatus according to any one of claims 23 to 26, wherein the second field is an antenna port field, or the third field is a phase tracking reference signal PTRS-demodulation reference signal DMRS association field.

28. A communication apparatus, comprising:

a communication unit, configured to receive first information, wherein the first information comprises second indication information, a number of bits occupied by the second indication information is the same as a number of bits occupied by first indication information, the first indication information indicates a first spatial layer number, a first precoding matrix corresponding to the first spatial layer number, a first antenna port set, and an association relationship between the first antenna port set and a second antenna port set, the first spatial layer number belongs to {1, 2, 3, 4}, the second indication information indicates a second spatial layer number, a second precoding matrix corresponding to the second spatial layer number, a third antenna port set, and an association relationship between the third antenna port set and a fourth antenna port set, and the second spatial layer number belongs to {5, 6, 7, 8}; and
the communication unit is further configured to send a signal based on the first information.

29. The apparatus according to claim 28, wherein the second precoding matrix satisfies: $\mathbf{P} = \begin{bmatrix} \mathbf{P}_1 & \mathbf{0} \\ \mathbf{0} & \mathbf{P}_2 \end{bmatrix}$ , wherein $\mathbf{P}$ is the second precoding matrix, a number of rows of $\mathbf{P}$ is 8, $\mathbf{P}_1$ and $\mathbf{P}_2$ are full-coherent precoding matrices in a 4Tx precoding matrix set, and $\mathbf{0}$ is a zero matrix.

30. The apparatus according to claim 29, wherein if the second spatial layer number is 5, a number of columns of $\mathbf{P}_1$ is 2, and a number of columns of $\mathbf{P}_2$ is 3;

if the second spatial layer number is 6, a number of columns of $\mathbf{P}_1$ is 3, and a number of columns of $\mathbf{P}_2$ is 3;
if the second spatial layer number is 7, a number of columns of $\mathbf{P}_1$ is 3, and a number of columns of $\mathbf{P}_2$ is 4; or
if the second spatial layer number is 8, a number of columns of $\mathbf{P}_1$ is 4, and a number of columns of $\mathbf{P}_2$ is 4.

31. The apparatus according to any one of claims 28 to 30, wherein the first information further comprises a modulation and coding scheme MCS and a redundancy version RV that are associated with a first transport block, and a modulation and coding scheme MCS and a redundancy version RV that are associated with a second transport block; and the MCS and the RV that are associated with the first transport block and the MCS and the RV that are associated with the second transport block indicate to enable the first transport block and the second transport block.

32. The apparatus according to any one of claims 28 to 31, wherein the first indication information comprises a first field, a second field, and a third field, wherein

the first field indicates the first spatial layer number and the first precoding matrix, the second field indicates the first antenna port set, and the third field indicates the association relationship between the first antenna port set and the second antenna port set; and
the second indication information comprises the first field, the second field, and the third field, wherein
a first portion of the first field indicates the second spatial layer number and the second precoding matrix, the second field indicates the third antenna port set in a plurality of antenna port sets corresponding to the second spatial layer number, and a second portion of the first field and the third field indicate the association relationship between the third antenna port set and the fourth antenna port set; or
a first portion of the first field indicates the second precoding matrix, the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the first field and the third field indicate the association relationship between the third antenna port set and the fourth antenna port set.

33. The apparatus according to any one of claims 28 to 31, wherein the first indication information comprises a first field, a second field, a third field, and a new data indicator NDI associated with an un-enabled transport block in the first transport block and the second transport block, wherein

the NDI and the first field indicate the first spatial layer number and the first precoding matrix, the second field indicates the first antenna port set, and the third field indicates the association relationship between the first antenna port set and the second antenna port set; and
the second indication information comprises the first field, the second field, and the third field, wherein
a first portion of the first field indicates the second spatial layer number and the second precoding matrix, the second field indicates the third antenna port set in a plurality of antenna port sets corresponding to the second spatial layer number, and a second portion of the first field and the third field indicate the association relationship between the third antenna port set and the fourth antenna port set; or
a first portion of the first field indicates the second precoding matrix, the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the first field and the third field indicate the association relationship between the third antenna port set and the fourth antenna port set.

34. The apparatus according to any one of claims 28 to 31, wherein the first indication information comprises a first field, a second field, and a third field, wherein

the first field indicates the first spatial layer number and the first precoding matrix, the second field indicates the first antenna port set, and the third field indicates the association relationship between the first antenna port set and the second antenna port set; and
the second indication information comprises the first field, the second field, and the third field, wherein
the first field indicates the second spatial layer number and the second precoding matrix, a first portion of the second field indicates the third antenna port set in a plurality of antenna port sets corresponding to the second spatial layer number, and a second portion of the second field and the third field indicate the association relationship between the third antenna port set and the fourth antenna port set; or
the first field indicates the second precoding matrix, a first portion of the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the second field and the third field indicate the association relationship between the third antenna port set and the fourth antenna port set.

35. The apparatus according to any one of claims 28 to 31, wherein the first indication information comprises a first field, a second field, and a third field;

the first indication information comprises a first field, a second field, a third field, and a new data indicator NDI associated with an un-enabled transport block in the first transport block and the second transport block, wherein
the NDI and the first field indicate the first spatial layer number and the first precoding matrix, the second field indicates the first antenna port set, and the third field indicates the association relationship between the first antenna port set and the second antenna port set; and
the second indication information comprises the first field, the second field, and the third field, wherein
the first field indicates the second spatial layer number and the second precoding matrix, a first portion of the second field indicates the third antenna port set in a plurality of antenna port sets corresponding to the second spatial layer number, and a second portion of the second field and the third field indicate the association relationship between the third antenna port set and the fourth antenna port set; or
the first field indicates the second precoding matrix, a first portion of the second field indicates the third antenna port set in a plurality of antenna port sets, numbers of antenna ports comprised in the plurality of antenna port sets all belong to {5, 6, 7, 8}, a number of antenna ports comprised in the third antenna port set is the second spatial layer number, and a second portion of the second field and the third field indicate the association relationship between the third antenna port set and the fourth antenna port set.

36. The apparatus according to any one of claims 32 to 35, wherein the second field is an antenna port field, or the third field is a phase tracking reference signal PTRS-demodulation reference signal DMRS association field.

37. A communication apparatus, comprising a processor, wherein the processor is coupled to a memory, the memory is configured to store a program or instructions, and when the program or the instructions are executed by the processor, the apparatus is enabled to perform the method according to any one of claims 1 to 9 or any one of claims 10 to 18.

**38.** A computer-readable storage medium, wherein the computer-readable storage medium stores a computer program or instructions, and when the computer program or the instructions are executed, the computer is enabled to perform the method according to any one of claims 1 to 9 or any one of claims 10 to 18.

**39.** A computer program product, comprising computer program instructions, wherein the computer program instructions enable a computer to perform the method according to any one of claims 1 to 9 or any one of claims 10 to 18.

**40.** A chip, comprising a processor, configured to invoke a computer program from a memory and run the computer program, to enable a communication apparatus in which the chip is installed to perform the method according to any one of claims 1 to 9 or any one of claims 10 to 18.

FIG. 1

Precoding matrix

FIG. 2

300

| Network device | | Terminal |
| --- | --- | --- |

S310: Generate first information, where the first information includes first indication information or second indication information

S320: First information

S330: Send an uplink signal based on the first information

FIG. 3

FIG. 4

FIG. 5

FIG. 6

EP 4 661 558 A1

FIG. 7

| Spatial layer number≤4 | ... | Spatial layer number and precoding matrix | | | DMRS | PTRS-DMRS | ... |
|---|---|---|---|---|---|---|---|
| | | Precoding matrix | | | PTRS-DMRS | | |
| Spatial layer number>4 | ... | | | | DMRS (spatial layer number) | | ... |

Control information

|       | 7 | 1 | 1 | 4 | 2 |       |
|-------|---|---|---|---|---|-------|

First field ← Second field → Third field

FIG. 8

EP 4 661 558 A1

FIG. 9

FIG. 10

FIG. 11

Control information

| | | Spatial layer number and precoding matrix | | | DMRS | PTRS-DMRS | |
|---|---|---|---|---|---|---|---|

Spatial layer number≤4

...

Precoding matrix

PTRS-DMRS

DMRS (spatial layer number)

Spatial layer number>4

...

| 7 | 1 | 1 | 1 | 1 | 2 | 2 | |

First field — Second field — Third field

FIG. 12

Control information

Spatial layer number and precoding matrix

| Spatial layer number≤4 | ... | NDI | ... | | | DMRS | PTRS-DMRS | ... |

PTRS-DMRS

Precoding matrix

| Spatial layer number>4 | ... | NDI | ... | | | DMRS (spatial layer number) | | ... |

| 7 | 1 | 1 | 1 | 2 | 2 |

First field | Second field | Third field

FIG. 13

FIG. 14

Communication apparatus 2000

Communication unit 2100

Processing unit 2200

FIG. 15

Communication apparatus 3000

Processor 3100

Memory 3300

Communication interface 3200

FIG. 16

FIG. 17

FIG. 18

EP 4 661 558 A1

FIG. 19

## INTERNATIONAL SEARCH REPORT

| International application No. |
|---|
| **PCT/CN2024/075818** |

**A.    CLASSIFICATION OF SUBJECT MATTER**

H04W 72/232(2023.01)i

According to International Patent Classification (IPC) or to both national classification and IPC

**B.    FIELDS SEARCHED**

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

CNTXT, ENTXTC, WPABSC, ENTXT, WPABS, 3GPP: 8层, 8发射, 八层, 八发射, 层数, 第二, 第一, 端口集合, 关联, 矩阵, 空间, 空间层数, 预编码, 预编码矩阵, 指示信息, 8Tx, 8 transmit, layer, MIMO, space, first, second, association, matrix, precoding, indication, port, group, set, DMRS, PTRS

**C.    DOCUMENTS CONSIDERED TO BE RELEVANT**

| Category* | Citation of document, with indication, where appropriate, of the relevant passages | Relevant to claim No. |
|---|---|---|
| A | WO 2022067866 A1 (QUALCOMM INC.) 07 April 2022 (2022-04-07)<br>description, paragraphs [0005]-[0110] | 1-40 |
| A | CN 107294570 A (ZTE CORP.) 24 October 2017 (2017-10-24)<br>entire document | 1-40 |
| A | CN 111435875 A (HUAWEI TECHNOLOGIES CO., LTD.) 21 July 2020 (2020-07-21)<br>entire document | 1-40 |
| A | ZTE. "Method to provide assistance information to a UE"<br>*3GPP TSG RAN WG1 Meeting #85, R1-164283*, 27 May 2016 (2016-05-27),<br>entire document | 1-40 |

☐ Further documents are listed in the continuation of Box C.        ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 April 2024** | **16 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/075818**

| Patent document cited in search report | | | Publication date (day/month/year) | Patent family member(s) | | | Publication date (day/month/year) |
|---|---|---|---|---|---|---|---|
| WO | 2022067866 | A1 | 07 April 2022 | TW | 202220481 | A | 16 May 2022 |
| | | | | KR | 20230075424 | A | 31 May 2023 |
| | | | | BR | 112023005194 | A2 | 25 April 2023 |
| | | | | US | 2023180252 | A1 | 08 June 2023 |
| | | | | EP | 4223054 | A1 | 09 August 2023 |
| | | | | IN | 202347005834 | A | 03 February 2023 |
| | | | | VN | 96487 | A | 25 July 2023 |
| | | | | CN | 116326115 | A | 23 June 2023 |
| CN | 107294570 | A | 24 October 2017 | WO | 2017167157 | A1 | 05 October 2017 |
| CN | 111435875 | A | 21 July 2020 | WO | 2020143829 | A1 | 16 July 2020 |
| | | | | CN | 114826525 | A | 29 July 2022 |

Form PCT/ISA/210 (patent family annex) (July 2022)

**EP 4 661 558 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310192891